(19) Europäisches Patentamt / European Patent Office / Office européen des brevets

(11) EP 3 282 617 B1

(12) EUROPEAN PATENT SPECIFICATION

(45) Date of publication and mention of the grant of the patent: **24.06.2020 Bulletin 2020/26**

(21) Application number: **15888331.4**

(22) Date of filing: **24.09.2015**

(51) Int Cl.: ***H04L 1/06*** *(2006.01)*

(86) International application number: **PCT/CN2015/090548**

(87) International publication number: **WO 2016/161779 (13.10.2016 Gazette 2016/41)**

# (54) METHOD AND DEVICE FOR FEEDING BACK CHANNEL STATE INFORMATION IN MULTI-INPUT MULTI-OUTPUT SYSTEM

VERFAHREN UND VORRICHTUNG ZUR RÜCKKOPPLUNG VON KANALZUSTANDSINFORMATIONEN IN EINEM MIMO-SYSTEM

PROCÉDÉ ET DISPOSITIF DE RENVOI D'INFORMATIONS D'ÉTAT DE CANAL DANS UN SYSTÈME À ENTRÉES MULTIPLES ET SORTIES MULTIPLES

(84) Designated Contracting States: **AL AT BE BG CH CY CZ DE DK EE ES FI FR GB GR HR HU IE IS IT LI LT LU LV MC MK MT NL NO PL PT RO RS SE SI SK SM TR**

(30) Priority: **08.04.2015 CN 201510163233**

(43) Date of publication of application: **14.02.2018 Bulletin 2018/07**

(73) Proprietor: **ZTE Corporation**
**Shenzhen, Guangdong 518057 (CN)**

(72) Inventors:
- **ZHAO, Jing**
  **Shenzhen**
  **Guangdong 518057 (CN)**
- **CHEN, Yijian**
  **Shenzhen**
  **Guangdong 518057 (CN)**
- **LI, Yu Ngok**
  **Shenzhen**
  **Guangdong 518057 (CN)**
- **LI, Jian**
  **Shenzhen**
  **Guangdong 518057 (CN)**
- **XIAO, Huahua**
  **Shenzhen**
  **Guangdong 518057 (CN)**

(74) Representative: **Deambrogi, Edgardo et al**
**Jacobacci & Partners S.p.A.**
**Corso Emilia 8**
**10152 Torino (IT)**

(56) References cited:

**EP-A1- 2 665 203**
**WO-A2-2014/137203**
**CN-A- 102 082 653**
**US-A1- 2007 191 066**
**US-A1- 2009 274 227**
**US-A1- 2014 177 744**

- **HUAWEI ET AL: "Remaining details of codebook subsampling", 3GPP DRAFT; R1-133510, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Barcelona, Spain; 20130819 - 20130823 10 August 2013 (2013-08-10), XP050716617, Retrieved from the Internet: URL:http://www.3gpp.org/ftp/tsg_ran/WG1_RL1/TSGR1_74/Docs/ [retrieved on 2013-08-10]**
- **ERICSSON ET AL: "Codebook subsampling for PUCCH mode 1-1, submode 2", 3GPP DRAFT; R1-133412 7.2.2 CODEBOOK SUBSAMPLING FOR PUCCH MODE 1-1, SUBMODE 2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS , vol. RAN WG1, no. Barcelona, Spain; 20130819 - 20130823 9 August 2013 (2013-08-09), XP050716098, Retrieved from the Internet: URL:http://www.3gpp.org/ftp/tsg_ran/WG1_RL1/TSGR1_74/Docs/ [retrieved on 2013-08-09]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 282 617 B1

## Description

### Technical Field

The present disclosure relates to but not limited to the field of communications.

### Background

In a wireless communication system, a transmitter and a receiver may obtain a higher rate by adopting multiple antennas in a spatial multiplexing manner. With respect to a common spatial multiplexing method, an enhancement technology, in which a receiver may feed back channel information to a transmitter and the transmitter may employ some transmission precoding technologies according to the obtained channel information, may be adopted to greatly improve the transmission performance. In a single-user Multi-input Multi-output (MIMO), channel characteristic vector information may be directly used for precoding. In a multi-user MIMO, more accurate channel information may be needed.

In a Long Term Evolution (LTE) plan, channel information is mainly fed back using a relatively simple feedback method with a single codebook. The performance of the transmission precoding technology of the MIMO may be more relied on the accuracy of codebook feedback.

Here, a basic principle of channel information quantized feedback based on the codebook is briefly described as follows.

It is assumed that the capacity of a limited feedback channel is *B* bps/Hz, then the number of available code words may be $N = 2^B$. A characteristic vector space of a channel matrix may be quantized to form a codebook space $\Re = \{F_1, F_2 \cdots F_N\}$. The transmitter and the receiver may both store the codebook or generate the codebook in real time. Herein, the codebook at the transmitter and the receiver is the same. According to the channel matrix H obtained by the receiver, the receiver may select a code word $\hat{F}$ most matched with the channel from the codebook space $\Re$ according to a certain criterion and may feed a code word serial number *i* back to the transmitter. Here, the code word serial number is called as a Precoding Matrix Indicator (PMI). The transmitter may find a corresponding precoding code word $\hat{F}$ according to the code word serial number *i,* thereby obtaining the channel information. The precoding code word $\hat{F}$ represents the characteristic vector information of the channel.

Generally speaking, the codebook space $\Re$ may further be divided into codebooks corresponding to multiple ranks. Under each rank, there may be multiple corresponding code words to quantize the precoding matrix formed by channel characteristic vectors under this rank. The number of the ranks of the channel is the same as that of nonzero characteristic vectors, so in general, when the number of ranks is N, the number of columns in each code word is N. Hence, the codebook $\Re$ may be divided into multiple sub-codebooks in terms of different ranks, as shown in a Table A1.

Table A1

| $\Re$ | | | |
|---|---|---|---|
| Number of layers $\upsilon$ (Rank) | | | |
| 1 | 2 | ... | N |
| $\Re_1$ | $\Re_2$ | ... | $\Re_N$ |
| A set of code word vectors having one column | A set of code word vectors having two columns | | A set of code word vectors having N columns |

In the table, $\Re_1$ represents a set of code word vectors having one column, $\Re_2$ represents a set of code word vectors having two columns, and $\Re_N$ represents a set of code word vectors having N columns.

Herein, when Rank>1, the code words needing to be stored are all in a matrix form. In an LTE protocol, the codebook is fed back by this quantized codebook feedback method. The codebook for downlink four transmitting antennas in an LTE Rel-8 version is as shown in a Table A2. As a matter of fact, the precoding codebook and the channel information quantized codebook in the LTE may have the same meaning. Hereinafter, for simplicity, a vector may also be regarded as a one-dimensional matrix.

Table A2

| Code word index | $u_n$ | Total number of layers $\upsilon$ (RI) | | | |
|---|---|---|---|---|---|
| | | 1 | 2 | 3 | 4 |
| 0 | $u_0$ =[1 -1 -1 -1]$^T$ | $W_0^{\{1\}}$ | $W_0^{\{14\}}/\sqrt{2}$ | $W_0^{\{124\}}/\sqrt{3}$ | $W_0^{\{1234\}}/2$ |
| 1 | $u_1$ =[1 -$j$ 1 $j$]$^T$ | $W_1^{\{1\}}$ | $W_1^{\{12\}}/\sqrt{2}$ | $W_1^{\{123\}}/\sqrt{3}$ | $W_1^{\{1234\}}/2$ |
| 2 | $u_2$ =[1 1 -1 1]$^T$ | $W_2^{\{1\}}$ | $W_2^{\{12\}}/\sqrt{2}$ | $W_2^{\{123\}}/\sqrt{3}$ | $W_2^{\{3214\}}/2$ |
| 3 | $u_3$ =[1 $j$ 1 -$j$]$^T$ | $W_3^{\{1\}}$ | $W_3^{\{12\}}/\sqrt{2}$ | $W_3^{\{123\}}/\sqrt{3}$ | $W_3^{\{3214\}}/2$ |
| 4 | $u_4=\begin{bmatrix}1 & (-1-j)/\sqrt{2} & -j & (1-j)/\sqrt{2}\end{bmatrix}^T$ | $W_4^{\{1\}}$ | $W_4^{\{14\}}/\sqrt{2}$ | $W_4^{\{124\}}/\sqrt{3}$ | $W_4^{\{1234\}}/2$ |
| 5 | $u_5=\begin{bmatrix}1 & (1-j)/\sqrt{2} & j & (-1-j)/\sqrt{2}\end{bmatrix}^T$ | $W_5^{\{1\}}$ | $W_5^{\{14\}}/\sqrt{2}$ | $W_5^{\{124\}}/\sqrt{3}$ | $W_5^{\{1234\}}/2$ |
| 6 | $u_6=\begin{bmatrix}1 & (1+j)/\sqrt{2} & -j & (-1+j)/\sqrt{2}\end{bmatrix}^T$ | $W_6^{\{1\}}$ | $W_6^{\{13\}}/\sqrt{2}$ | $W_6^{\{134\}}/\sqrt{3}$ | $W_6^{\{1324\}}/2$ |
| 7 | $u_7=\begin{bmatrix}1 & (-1+j)/\sqrt{2} & j & (1+j)/\sqrt{2}\end{bmatrix}^T$ | $W_7^{\{1\}}$ | $W_7^{\{13\}}/\sqrt{2}$ | $W_7^{\{134\}}/\sqrt{3}$ | $W_7^{\{1324\}}/2$ |
| 8 | $u_8$ =[1 -1 1 1]$^T$ | $W_8^{\{1\}}$ | $W_8^{\{12\}}/\sqrt{2}$ | $W_8^{\{124\}}/\sqrt{3}$ | $W_8^{\{1234\}}/2$ |
| 9 | $u_9$ =[1 -$j$ -1 -$j$]$^T$ | $W_9^{\{1\}}$ | $W_9^{\{14\}}/\sqrt{2}$ | $W_9^{\{134\}}/\sqrt{3}$ | $W_9^{\{1234\}}/2$ |
| 10 | $u_{10}$ =[1 1 1 -1]$^T$ | $W_{10}^{\{1\}}$ | $W_{10}^{\{13\}}/\sqrt{2}$ | $W_{10}^{\{123\}}/\sqrt{3}$ | $W_{10}^{\{1324\}}/2$ |
| 11 | $u_{11}$ = [1 $j$ -1 $j$]$^T$ | $W_{11}^{\{1\}}$ | $W_{11}^{\{13\}}/\sqrt{2}$ | $W_{11}^{\{134\}}/\sqrt{3}$ | $W_{11}^{\{1324\}}/2$ |
| 12 | $u_{12}$ = [1 -1 -1 1]$^T$ | $W_{12}^{\{1\}}$ | $W_{12}^{\{12\}}/\sqrt{2}$ | $W_{12}^{\{123\}}/\sqrt{3}$ | $W_{12}^{\{1234\}}/2$ |
| 13 | $u_{13}$ = [1 -1 1 -1]$^T$ | $W_{13}^{\{1\}}$ | $W_{13}^{\{13\}}/\sqrt{2}$ | $W_{13}^{\{123\}}/\sqrt{3}$ | $W_{13}^{\{1324\}}/2$ |
| 14 | $u_{14}$ = [1 1 -1 -1]$^T$ | $W_{14}^{\{1\}}$ | $W_{14}^{\{13\}}/\sqrt{2}$ | $W_{14}^{\{123\}}/\sqrt{3}$ | $W_{14}^{\{3214\}}/2$ |
| 15 | $u_{15}$ = [1 1 1 1]$^T$ | $W_{15}^{\{1\}}$ | $W_{15}^{\{12\}}/\sqrt{2}$ | $W_{15}^{\{123\}}/\sqrt{3}$ | $W_{15}^{\{1234\}}/2$ |

Herein, $W_n = I - 2u_n u_n^H / u_n^H u_n$, I is a unit matrix, $W_k^{(j)}$ represents a $j^{th}$ column vector of a matrix $W_k^{(j)}$. $W_k^{(j_1,j_2,\ldots j_n)}$ represents a matrix formed by $j_1, j_2, \ldots, j_n$ th columns of the matrix $W_k$.

The code words under rank 1 for Rel-10 LTE downlink 8Tx are as shown in a Table A3, and the codebook under rank 2 is as shown in a Table A4.

Table A3

| $i_1$ | $i_2$ | | | | | | | |
|---|---|---|---|---|---|---|---|---|
| | **0** | **1** | **2** | **3** | **4** | **5** | **6** | **7** |
| 0 - 15 | $W_{2i_1,0}^{(1)}$ | $W_{2i_1,1}^{(1)}$ | $W_{2i_1,2}^{(1)}$ | $W_{2i_1,3}^{(1)}$ | $W_{2i_1+1,0}^{(1)}$ | $W_{2i_1+1,1}^{(1)}$ | $W_{2i_1+1,2}^{(1)}$ | $W_{2i_1+1,3}^{(1)}$ |
| $i_1$ | $i_2$ | | | | | | | |
| | **8** | **9** | **10** | **11** | **12** | **13** | **14** | **15** |
| 0 - 15 | $W_{2i_1+2,0}^{(1)}$ | $W_{2i_1+2,1}^{(1)}$ | $W_{2i_1+2,2}^{(1)}$ | $W_{2i_1+2,3}^{(1)}$ | $W_{2i_1+3,0}^{(1)}$ | $W_{2i_1+3,1}^{(1)}$ | $W_{2i_1+3,2}^{(1)}$ | $W_{2i_1+3,3}^{(1)}$ |
| where $W_{m,n}^{(1)} = \frac{1}{\sqrt{8}}\begin{bmatrix} v_m \\ \varphi_n v_m \end{bmatrix}$ | | | | | | | | |

Table A4

| $i_1$ | $i_2$ | | | |
|---|---|---|---|---|
| | **0** | **1** | **2** | **3** |
| 0 - 15 | $W_{2i_1,2i_1,0}^{(2)}$ | $W_{2i_1,2i_1,1}^{(2)}$ | $W_{2i_1+1,2i_1+1,0}^{(2)}$ | $W_{2i_1+1,2i_1+1,1}^{(2)}$ |
| $i_1$ | $i_2$ | | | |
| | **4** | **5** | **6** | **7** |
| 0 - 15 | $W_{2i_1+2,2i_1+2,0}^{(2)}$ | $W_{2i_1+2,2i_1+2,1}^{(2)}$ | $W_{2i_1+3,2i_1+3,0}^{(2)}$ | $W_{2i_1+3,2i_1+3,1}^{(2)}$ |
| $i_1$ | $i_2$ | | | |
| | **8** | **9** | **10** | **11** |
| 0-15 | $W_{2i_1,2i_1+1,0}^{(2)}$ | $W_{2i_1,2i_1+1,1}^{(2)}$ | $W_{2i_1+1,2i_1+2,0}^{(2)}$ | $W_{2i_1+1,2i_1+2,1}^{(2)}$ |
| $i_1$ | $i_2$ | | | |
| | **12** | **13** | **14** | **15** |
| 0 - 15 | $W_{2i_1,2i_1+3,0}^{(2)}$ | $W_{2i_1,2i_1+3,1}^{(2)}$ | $W_{2i_1+1,2i_1+3,0}^{(2)}$ | $W_{2i_1+1,2i_1+3,1}^{(2)}$ |
| where $W_{m,m',n}^{(2)} = \frac{1}{4}\begin{bmatrix} v_m & v_{m'} \\ \varphi_n v_m & -\varphi_n v_{m'} \end{bmatrix}$ | | | | |

Where:

$$\varphi_n = e^{j\pi n/2}$$
$$v_m = \begin{bmatrix} 1 & e^{j2\pi m/32} & e^{j4\pi m/32} & e^{j6\pi m/32} \end{bmatrix}^T \quad (1)$$

Table A5 to Table A10 respectively show the codebook under ranks 3 to 8 for the 8Tx.

Table A5

| $i_1$ | $i_2$ | | | |
|---|---|---|---|---|
| | **0** | **1** | **2** | **3** |
| 0 - 3 | $W^{(3)}_{8i_1,8i_1,8i_1+8}$ | $W^{(3)}_{8i_1+8,8i_1,8i_1+8}$ | $\tilde{W}^{(3)}_{8i_1,8i_1+8,8i_1+8}$ | $\tilde{W}^{(3)}_{8i_1+8,8i_1,8i_1}$ |
| $i_1$ | $i_2$ | | | |
| | **4** | **5** | **6** | **7** |
| 0 - 3 | $W^{(3)}_{8i_1+2,8i_1+2,8i_1+10}$ | $W^{(3)}_{8i_1+10,8i_1+2,8i_1+10}$ | $\tilde{W}^{(3)}_{8i_1+2,8i_1+10,8i_1+10}$ | $\tilde{W}^{(3)}_{8i_1+10,8i_1+2,8i_1+2}$ |
| $i_1$ | $i_2$ | | | |
| | **8** | **9** | **10** | **11** |
| 0-3 | $W^{(3)}_{8i_1+4,8i_1+4,8i_1+12}$ | $W^{(3)}_{8i_1+12,8i_1+4,8i_1+12}$ | $\tilde{W}^{(3)}_{8i_1+4,8i_1+12,8i_1+12}$ | $\tilde{W}^{(3)}_{8i_1+12,8i_1+4,8i_1+4}$ |
| $i_1$ | $i_2$ | | | |
| | **12** | **13** | **14** | **15** |
| 0 - 3 | $W^{(3)}_{8i_1+6,8i_1+6,8i_1+14}$ | $W^{(3)}_{8i_1+14,8i_1+6,8i_1+14}$ | $\tilde{W}^{(3)}_{8i_1+6,8i_1+14,8i_1+14}$ | $\tilde{W}^{(3)}_{8i_1+14,8i_1+6,8i_1+6}$ |
| where $W^{(3)}_{m,m',m''} = \frac{1}{\sqrt{24}}\begin{bmatrix} v_m & v_{m'} & v_{m''} \\ v_m & -v_{m'} & -v_{m''} \end{bmatrix}$, $\tilde{W}^{(3)}_{m,m',m''} = \frac{1}{\sqrt{24}}\begin{bmatrix} v_m & v_{m'} & v_{m''} \\ v_m & v_{m'} & -v_{m''} \end{bmatrix}$ | | | | |

Table A6

| $i_1$ | $i_2$ | | | |
|---|---|---|---|---|
| | **0** | **1** | **2** | **3** |
| 0 - 3 | $W^{(4)}_{8i_1,8i_1+8,0}$ | $W^{(4)}_{8i_1,8i_1+8,1}$ | $W^{(4)}_{8i_1+2,8i_1+10,0}$ | $W^{(4)}_{8i_1+2,8i_1+10,1}$ |
| $i_1$ | $i_2$ | | | |
| | **4** | **5** | **6** | **7** |
| 0 - 3 | $W^{(4)}_{8i_1+4,8i_1+12,0}$ | $W^{(4)}_{8i_1+4,8i_1+12,1}$ | $W^{(4)}_{8i_1+6,8i_1+14,0}$ | $W^{(4)}_{8i_1+6,8i_1+14,1}$ |
| where $W^{(4)}_{m,m',n} = \frac{1}{\sqrt{32}}\begin{bmatrix} v_m & v_{m'} & v_m & v_{m'} \\ \varphi_n v_m & \varphi_n v_{m'} & -\varphi_n v_m & -\varphi_n v_{m'} \end{bmatrix}$ | | | | |

Table A7

| $i_1$ | $i_2$ |
|---|---|
| | **0** |
| 0-3 | $W^{(5)}_{i_1} = \frac{1}{\sqrt{40}}\begin{bmatrix} v_{2i_1} & v_{2i_1} & v_{2i_1+8} & v_{2i_1+8} & v_{2i_1+16} \\ v_{2i_1} & -v_{2i_1} & v_{2i_1+8} & -v_{2i_1+8} & v_{2i_1+16} \end{bmatrix}$ |

Table A8

| $i_1$ | $i_2$ |
|---|---|
| | **0** |
| 0-3 | $W_{i_1}^{(6)} = \frac{1}{\sqrt{48}}\begin{bmatrix} v_{2i_1} & v_{2i_1} & v_{2i_1+8} & v_{2i_1+8} & v_{2i_1+16} & v_{2i_1+16} \\ v_{2i_1} & -v_{2i_1} & v_{2i_1+8} & -v_{2i_1+8} & v_{2i_1+16} & -v_{2i_1+16} \end{bmatrix}$ |

Table A9

| $i_1$ | $i_2$ |
|---|---|
| | **0** |
| 0 - 3 | $W_{i_1}^{(7)} = \frac{1}{\sqrt{56}}\begin{bmatrix} v_{2i_1} & v_{2i_1} & v_{2i_1+8} & v_{2i_1+8} & v_{2i_1+16} & v_{2i_1+16} & v_{2i_1+24} \\ v_{2i_1} & -v_{2i_1} & v_{2i_1+8} & -v_{2i_1+8} & v_{2i_1+16} & -v_{2i_1+16} & v_{2i_1+24} \end{bmatrix}$ |

Table A10

| $i_1$ | $i_2$ |
|---|---|
| | **0** |
| 0 | $W_{i_1}^{(8)} = \frac{1}{8}\begin{bmatrix} v_{2i_1} & v_{2i_1} & v_{2i_1+8} & v_{2i_1+8} & v_{2i_1+16} & v_{2i_1+16} & v_{2i_1+24} & v_{2i_1+24} \\ v_{2i_1} & -v_{2i_1} & v_{2i_1+8} & -v_{2i_1+8} & v_{2i_1+16} & -v_{2i_1+16} & v_{2i_1+24} & -v_{2i_1+24} \end{bmatrix}$ |

The codebook for 8Tx is designed using a combination of Discrete Fourier Transformation (DFT) vectors and therefore is more suitable for correlated channels. In Rel 12, an enhanced design is adopted by the codebooks for the 4Tx. Specifically, the codebooks under ranks 1 to 2 are changed, and the codebooks under ranks 3 to 4 are maintained. The enhanced codebooks for the 4Tx are as shown in Table A11 and Table A12.

Table A11

| $i_1$ | $i_2$ | | | | | | | |
|---|---|---|---|---|---|---|---|---|
| | **0** | **1** | **2** | **3** | **4** | **5** | **6** | **7** |
| 0 - 15 | $W_{i_1,0}^{(1)}$ | $W_{i_1,8}^{(1)}$ | $W_{i_1,16}^{(1)}$ | $W_{i_1,24}^{(1)}$ | $W_{i_1+8,2}^{(1)}$ | $W_{i_1+8,10}^{(1)}$ | $W_{i_1+8,18}^{(1)}$ | $W_{i_1+8,26}^{(1)}$ |
| $i_1$ | $i_2$ | | | | | | | |
| | **8** | **9** | **10** | **11** | **12** | **13** | **14** | **15** |
| 0 - 15 | $W_{i_1+16,4}^{(1)}$ | $W_{i_1+16,12}^{(1)}$ | $W_{i_1+16,20}^{(1)}$ | $W_{i_1+16,28}^{(1)}$ | $W_{i_1+24,6}^{(1)}$ | $W_{i_1+24,14}^{(1)}$ | $W_{i_1+24,22}^{(1)}$ | $W_{i_1+24,30}^{(1)}$ |
| where $W_{m,n}^{(1)} = \frac{1}{2}\begin{bmatrix} v'_m \\ \varphi'_n v'_m \end{bmatrix}$ | | | | | | | | |

Table A12

| $i_1$ | $i_2$ | | | |
|---|---|---|---|---|
| | **0** | **1** | **2** | **3** |
| 0 - 15 | $W_{i_1,i_1,0}^{(2)}$ | $W_{i_1,i_1,1}^{(2)}$ | $W_{i_1+8,i_1+8,0}^{(2)}$ | $W_{i_1+8,i_1+8,1}^{(2)}$ |

(continued)

| $i_1$ | $i_2$ | | | |
|---|---|---|---|---|
| | 4 | 5 | 6 | 7 |
| 0 - 15 | $W^{(2)}_{i_1+16,i_1+16,0}$ | $W^{(2)}_{i_1+16,i_1+16,1}$ | $W^{(2)}_{i_1+24,i_1+24,0}$ | $W^{(2)}_{i_1+24,i_1+24,1}$ |
| $i_1$ | $i_2$ | | | |
| | 8 | 9 | 10 | 11 |
| 0-15 | $W^{(2)}_{i_1,i_1+8,0}$ | $W^{(2)}_{i_1,i_1+8,1}$ | $W^{(2)}_{i_1+8,i_1+16,0}$ | $W^{(2)}_{i_1+8,i_1+16,1}$ |
| 12 | 13 | 14 | 15 | |
| 0 - 15 | $W^{(2)}_{i_1,i_1+24,0}$ | $W^{(2)}_{i_1,i_1+24,1}$ | $W^{(2)}_{i_1+8,i_1+24,0}$ | $W^{(2)}_{i_1+8,i_1+24,1}$ |
| where $W^{(2)}_{m,m',n} = \frac{1}{\sqrt{8}}\begin{bmatrix} v'_m & v'_{m'} \\ \varphi_n v'_m & -\varphi_n v'_{m'} \end{bmatrix}$ | | | | |

The above illustrates a principle of a codebook feedback technology in the LTE. During practical application, some detailed feedback methods may be involved.

First of all, a feedback granularity of the channel information is introduced as follows. In an LTE standard, a minimum feedback unit of the channel information is subband channel information. One subband may be composed of a plurality of Resource Blocks (RBs). Each of the RBs may consist of multiple Resource Elements (REs). The RE here is considered as a minimum unit for a time-frequency resource. A resource representation method of the LTE continues to be used in the LTE-A. Several subbands may be called as a multi-subband, and a great number of subbands may be called as a wideband.

A feedback content associated with the channel information in the LTE is introduced as follows. The types of Channel State Information (CSI) fed back may include: Channel Quality Indication (CQI) information, a Program Management Instruction (PMI) and a Rank Indicator (RI). Here, a most concerned CSI content may be the PMI information, but of course, the RI and the CQI also pertain to the content in the CSI feedback.

The CQI is an indicator for evaluating whether a downlink channel is good or bad. In a 36-213 protocol, the CQI is represented by an integer value within a range of 0-15. These integer values respectively represent different CQI levels, and different CQIs may correspond to their respective Modulation and Coding Schemes (MCS).

The RI is used for indicating the number of spatial independent channels and corresponds to ranks of a channel response matrix. Under open-loop spatial multiplexing and closed-loop spatial multiplexing modes, there is a need for a User Equipment (UE) to feed back the RI information. However, under other modes, the RI information may not need to be fed back. The ranks and the layers of the channel matrix are corresponding to each other.

Along with high-speed development of wireless communication technologies, wireless applications of users are increasingly rich, which leads to rapid growth of wireless data services. In future ten years, the data services may grow at 1.6-2 times of the rate each year and in turn brings an enormous challenge to a wireless access network. A multi-antenna technology is a key technology to cope with the explosive growth of the wireless data services. At present, the multi-antenna technology supported in a 4$^{th}$ Generation (4G) only supports a horizontal-dimension beamforming technology for eight ports at maximum and hence there is still a relatively large potential to greatly improve the system capacity.

With the development of the communication technology, a base station side may be provided with more antennas, thereby further improving the system capacity. While the antennas are increased and particularly a Three-Dimensional (3D) channel is established, it may be needed to redesign a downlink multi-antenna codebook. The design for the 8Tx described above complies with a Group of Blocks (GoB) model and may be viewed as follows.

$$W = W_1 \cdot W_2 \qquad (2)$$

Where $W_1$ is composed of four adjacent DFT vectors and is indicated by $i_1$. $W_2$ indicates a combination of sequence numbers of columns extracted from the $W_1$ and is indicated by $i_2$. Due to a $W_1$ form, the codebook for the 8Tx may be only suitable for the correlated channels. Once the $W_1$ for a long-cycle feedback is wrongly selected, within this cycle, no matter how the $W_2$ may be selected, a suitable codebook may not be found and therefore the performance of the whole cycle may be affected.

The above enhanced codebook for the 4Tx also employs the GoB model and is also represented by the model of the Formula (2). A difference between enhanced codebooks for the 4Tx and the 8Tx is that the $W_1$ of the enhanced codebook for the 4Tx consists of four orthogonal nonadjacent DFT vectors and is indicated by $i_1$. $W_2$ indicates a combination of sequence numbers of columns extracted from the $W_1$ and is indicated by $i_2$. The reasons for such design lie in that when the base station side adopts 4Tx dual-polarization configuration, the distance between the antennas may be very large and even up to four times of a wavelength. Under such a condition, the channel may be uncorrelated and therefore the designed code words are suitable for the uncorrelated channels. From a composition of the codebook for the 4Tx, it may be seen that when the $W_1$ for the long-cycle feedback is wrongly selected, the performance may not be seriously affected. However, after the $W_1$ for the long-cycle feedback may be selected, as the four DFT vectors in the $W_1$ are far apart, when the channel changes slowly, the same DFT vector combination may be selected by the $W_2$ all the time, such that the code word may not reflect the channel change.

US 2014/177744 A1 and EP 2 665 203 provide related technical solutions; however, the above mentioned problem still remains unsolved.

## Summary

The invention is defined by the subject-matter of the independent claims 1 and 13. Preferred embodiments are defined in the dependent claims. In the following, aspects and embodiments not falling within the scope of the claims should be understood as examples useful to understand the invention.

The following provides a summary to a subject matter described in detail in the exemplary embodiments of the present disclosure. The summary herein is not intended to limit the scope of protection of the claims.

The exemplary embodiments of the present disclosure provide a method and device for feeding back CSI in a multi-input multi-output system, which may solve the problem on how to implement the adaptability between a code word and a channel.

A method for feeding back CSI in a multi-input multi-output system may include the following acts.

A UE may feed back CSI including codebook index information to an eNodeB.

The codebook index information may include: a first type of codebook index set **I** and a second type of codebook index set $J$. A combination of the first type of index set **I** and the second type of index set $J$ may be used for indicating a precoding matrix **U.** The precoding matrix **U** is an $N_t \times r$ matrix, where $N_t$ represents a total number of ports or a total number of antennas and $r$ represents a number of transmission layers. The precoding matrix **U** may be composed of at least $Q \times r$ basic vectors having a dimension of $N_t/Q$, where $Q \geq 2$, $r \geq 1$, and $Q$ and $r$ are both positive integers. The basic vectors may be columns extracted from a matrix **B** composed of M columns of $N_t/Q$-dimensional vectors, where M may be a positive integer.

A union of the first type of index set **I** and the second type of index set $J$ may include codebook indication information $i_1$, $i_2$ and $i_3$

The codebook indication information $i_1$ may be used for representing selection information of K matrixes $W_{i_11} \cdots W_{i_1k}$, where K may be a positive integer, each column of the K matrixes $W_{i_11} \cdots W_{i_1k}$, may be extracted from column vectors included in the matrix **B.** The codebook indication information $i_3$ may be used for representing a matrix $W_{i_1l}$ selected from the K matrixes. The codebook indication information $i_2$ may be used for representing information of one or more basic vectors extracted from the matrix $W_{i_1l}$ and used to construct the precoding matrix **U.**

In an exemplary embodiment, the precoding matrix **U** may meet a model:

$$\mathbf{U}=\begin{bmatrix} v_0 \\ \beta v_1 \end{bmatrix} \text{ or } \mathbf{U}=\begin{bmatrix} v_0' \\ \alpha v_1' \\ \beta v_2' \\ \alpha\beta v_3' \end{bmatrix} \text{ or } \mathbf{U}=\begin{bmatrix} v_0 & v_2 \\ \beta v_1 & -\beta v_3 \end{bmatrix} \text{ or } \mathbf{U}=\begin{bmatrix} v_0' & v_4' \\ \alpha v_1' & \alpha v_5' \\ \beta v_2' & -\beta v_6' \\ \alpha\beta v_3' & -\alpha\beta v_7' \end{bmatrix}.$$

In the exemplary embodiment, vectors $v_0$, $v_1$, $v_2$ and $v_3$ may be vectors having a dimension of $N_t/2 \times 1$, vectors $v_0^{'}$, $v_1^{'}$, $v_2^{'}$, $v_3^{'}$, $v_4^{'}$, $v_5^{'}$, $v_6^{'}$ and $v_7^{'}$ may be vectors having a dimension of $N_t/4 \times 1$, $\alpha = e^{j\theta_1}$, and $\beta = e^{j\theta_2}$, where $0 \le \theta_1 \le 2\pi$, $0 \le \theta_2 \le 2\pi$.

In an exemplary embodiment, the first type of codebook index set **I** may at least include $i_1$ and $i_3$ information; and the second type of codebook index set $J$ may at least include $i_2$ information.

Alternatively, the first type of codebook index set **I** may at least include $i_1$ and $i_2$ information; and the second type of codebook index set $J$ may at least include $i_3$ information.

Alternatively, the first type of codebook index set **I** may at least include $i_1$ information; and the second type of codebook index set $J$ may at least include $i_2$ and $i_3$ information.

In an exemplary embodiment, the basic vectors composing the precoding matrix **U** may be divided into N1 groups; and the codebook indication information $i_3$ may include N1 pieces of sub-information $i_3(1)\cdots i_3(N1)$ $N1 \ge 2$ and may be a positive integer. In the exemplary embodiment, $i_3(x)$ may be used for representing information of a matrix $W_{i_1 l_x}$ selected for an $X$ th group of vectors from the K matrixes $W_{i_1 1}\cdots W_{i_1 k}$ indicated by $i_1$, where $2 \le x \le N1$.

In an exemplary embodiment, the basic vectors composing the precoding matrix **U** may be divided into N2 groups; and the codebook indication information $i_2$ may include N2 pieces of sub-information $i_2(1)\cdots i_2(N2)$ $N2 \ge 2$. In the exemplary embodiment, $i_2(y)$ may be used for representing information of one or more basic vectors extracted from a matrix $W_{i_1 l_y}$ jointly indicated by $i_1$ and $i_3$ and used to construct the precoding matrix **U,** $2 \le y \le N2$.

In an exemplary embodiment, for the codebook model $\mathbf{U} = \begin{bmatrix} v_0^{'} \\ \alpha v_1^{'} \\ \beta v_2^{'} \\ \alpha\beta v_3^{'} \end{bmatrix}$ or $\mathbf{U} = \begin{bmatrix} v_0^{'} & v_4^{'} \\ \alpha v_1^{'} & \alpha v_5^{'} \\ \beta v_2^{'} & -\beta v_6^{'} \\ \alpha\beta v_3^{'} & -\alpha\beta v_7^{'} \end{bmatrix}$, at least one of the codebook indication information $i_1$, $i_2$ and $i_3$ may be further used to represent $\alpha$ information in the codebook model **U.**

In an exemplary embodiment, at least one of the codebook indication information $i_1$, $i_2$ and $i_3$ may be further used to represent $\beta$ information in the codebook model **U**.

In an exemplary embodiment, for the model $\mathbf{U} = \begin{bmatrix} v_0 & v_2 \\ \beta v_1 & -\beta v_3 \end{bmatrix}$, the codebook indication information $i_3$ may include two pieces of sub-information $i_3(1)$ and $i_3(2)$.

In the exemplary embodiment, $i_3(1)$ may be used for representing information of a matrix $W_{i_1 i_3(1)}$ from which vectors $v_0$ and $v_2$ are extracted; and $i_3(2)$ may be used for representing information of a matrix $W_{i_1 i_3(2)}$ from which vectors $v_1$ and $v_3$ are extracted.

In the exemplary embodiment, alternatively, $i_3(1)$ may be used for representing information of a matrix $W_{i_1 i_3(1)}$ from which vectors $v_0$ and $v_1$ are extracted; and $i_3(2)$ may be used for representing information of a matrix $W_{i_1 i_3(2)}$ from which vectors $v_2$ and $v_3$ are extracted.

In an exemplary embodiment, for the model $\mathbf{U} = \begin{bmatrix} v_0^{'} \\ \alpha v_1^{'} \\ \beta v_2^{'} \\ \alpha\beta v_3^{'} \end{bmatrix}$, the codebook indication information $i_3$ may include two pieces of sub-information $i_3(1)$ and $i_3(2)$.

In the exemplary embodiment, $i_3(1)$ may be used for representing information of a matrix $W_{i_1 i_3(1)}$ from which vectors $v_0^{'}$ and $v_1^{'}$ are extracted; and $i_3(2)$ may be used for representing information of a matrix $W_{i_1 i_3(2)}$ from which vectors $v_2^{'}$ and $v_3^{'}$ are extracted.

n.Dthe exemplary embodiment, alternatively, $i_3(1)$ may be used for representing information of a matrix $W_{i_1 i_3(1)}$ from which vectors $v_0^{'}$ and $v_2^{'}$ are extracted; and $i_3(2)$ may be used for representing information of a matrix $W_{i_1 i_3(2)}$ from which vectors $v_1^{'}$ and $v_3^{'}$ are extracted.

In an exemplary embodiment, for the model $\mathbf{U}=\begin{bmatrix} v_0^{'} \\ \alpha v_1^{'} \\ \beta v_2^{'} \\ \alpha\beta v_3^{'} \end{bmatrix}$, the codebook indication information $i_2$ may include two pieces of sub-information $i_2(1)$ and $i_2(2)$.

In the exemplary embodiment, $i_2(1)$ may be used for representing information of a basic vector extracted from the matrix $W_{i_1 l}$ for vectors $v_0^{'}$ and $v_1^{'}$; and $i_2(2)$ may be used for representing information of a basic vector extracted from the matrix $W_{i_1 l}$ for vectors $v_2^{'}$ and $v_3^{'}$.

In the exemplary embodiment, alternatively, $i_2(1)$ may be used for representing information of a basic vector extracted from the matrix $W_{i_1 l}$ for vectors $v_0^{'}$ and $v_2^{'}$; and $i_2(2)$ may be used for representing information of a basic vector extracted from the matrix $W_{i_1 l'}$ for vectors $v_1^{'}$ and $v_3^{'}$.

In an exemplary embodiment, for the model $\mathbf{U}=\begin{bmatrix} v_0 & v_2 \\ \beta v_1 & -\beta v_3 \end{bmatrix}$, the codebook indication information $i_2$ may include two pieces of sub-information $i_2(1)$ and $i_2(2)$.

In the exemplary embodiment, $i_2(1)$ may be used for representing information of a basic vector extracted from the matrix $W_{i_1 l}$ for vectors $v_0$ and $v_2$; and $i_2(2)$ may be used for representing information of a basic vector extracted from the matrix $W_{i_1 l'}$ for vectors $v_1$ and $v_3$.

In the exemplary embodiment, alternatively, $i_2(1)$ may be used for representing information of a basic vector extracted from the matrix $W_{i_1 l}$ for vectors $v_0$ and $v_1$; and $i_2(2)$ may be used for representing information of a basic vector extracted from the matrix $W_{i_1 l'}$ for vectors $v_2$ and $v_3$.

In an exemplary embodiment, for the model $\mathbf{U}=\begin{bmatrix} v_0^{'} & v_4^{'} \\ \alpha v_1^{'} & \alpha v_5^{'} \\ \beta v_2^{'} & -\beta v_6^{'} \\ \alpha\beta v_3^{'} & -\alpha\beta v_7^{'} \end{bmatrix}$, the codebook indication information $i_2$ may include four pieces of sub-information $i_2(1)$, $i_2(2)$, $i_2(3)$ and $i_2(4)$.

In the exemplary embodiment, $i_2(1)$ may be used for representing information of a basic vector extracted from the matrix $W_{i_1 l}$ for vectors $v_0^{'}$ and $v_4^{'}$; $i_2(2)$ may be used for representing information of a basic vector extracted from the matrix $W_{i_1 l'}$ for vectors $v_1^{'}$ and $v_5^{'}$; ; $i_2(3)$ may be used for representing information of a basic vector extracted from the matrix $W_{i_1 l''}$ for vectors $v_2^{'}$ and $v_6^{'}$; and $i_2(4)$ may be used for representing information of a basic vector extracted from the matrix $W_{i_1 l'''}$ for vectors $v_3^{'}$ and $v_7^{'}$.

In an exemplary embodiment, for the model $\mathbf{U}=\begin{bmatrix} v_0' & v_4' \\ \alpha v_1' & \alpha v_5' \\ \beta v_2' & -\beta v_6' \\ \alpha\beta v_3' & -\alpha\beta v_7' \end{bmatrix},$ the codebook indication information $i_2$ may include four pieces of sub-information $i_2(1)$, $i_2(2)$, $i_2(3)$ and $i_2(4)$.

In the exemplary embodiment, $i_2(1)$ may be used for representing information of a basic vector extracted from the matrix $W_{i_1l}$ for vectors $v_0'$ and $v_1'$; ; $i_2(2)$ may be used for representing information of a basic vector extracted from the matrix $W_{i_1l'}$ for vectors $v_2'$ and $v_3'$; ; $i_2(3)$ may be used for representing information of a basic vector extracted from the matrix $W_{i_1l''}$ for vectors $v_4'$ and $v_5'$; and $i_2(4)$ may be used for representing information of a basic vector extracted from the matrix $W_{i_1l'''}$ for vectors $v_6'$ and $v_7'$.

In the exemplary embodiment, alternatively, $i_2(1)$ may be used for representing information of a basic vector extracted from the matrix $W_{i_1l}$ for vectors $v_0'$ and $v_2'$; $i_2(2)$ may be used for representing information of a basic vector extracted from the matrix $W_{i_1l'}$ for vectors $v_1'$ and $v_3'$; $i_2(3)$ may be used for representing information of a basic vector extracted from the matrix $W_{i_1l''}$ for vectors $v_4'$ and $v_6'$; and $i_2(4)$ may be used for representing information of a basic vector extracted from the matrix $W_{i_1l'''}$ for vectors $v_5'$ and $v_7'$.

In an exemplary embodiment, $i_3(1)\cdots i_3(N1)$ may have a linear relationship. When the CSI is reported, the UE may at least report one codebook indication information in $i_3(1)\cdots i_3(N1)$.

In an exemplary embodiment, $i_2(1)\cdots i_2(N2)$ may have a linear relationship. When the CSI is reported, the UE may at least report one codebook indication information in $i_2(1)\cdots i_2(N2)$.

In an exemplary embodiment, $i_3(1) = i_3(2)$.

In an exemplary embodiment, $i_3(1) = i_3(2)$.

In an exemplary embodiment, $i_3(1) = i_3(2) = i_3(3) = i_3(4)$.

In an exemplary embodiment, $i_2(1) = i_2(2)$.

In an exemplary embodiment, $i_2(1) = i_2(2)$.

In an exemplary embodiment, $i_2(1) = i_2(2) = i_2(3) = i_2(4)$.

In an exemplary embodiment, the M columns of vectors composing the matrix **B** may be DFT vectors.

A method for feeding back CSI in a multi-input multi-output system may include the following acts.

A UE may feed back CSI including codebook index information to an eNodeB.

The codebook index information may include: a first type of codebook index set **I** and a second type of codebook index set *J*. A combination of the first type of index set **I** and the second type of index set *J* may be used for indicating a precoding matrix **U.** A union of the first type of index set **I** and the second type of index set *J* may include codebook indication information $i_1$, $i_2$ and $i_3$. The precoding matrix may meet a model: $\mathbf{U} = W_1 \cdot W_2$, where **U** is an $N_t \times r$ matrix, $N_t$ represents a total number of ports or a total number of antennas and $r$ represents a number of transmission layers.

The codebook indication information $i_1$ may be used for representing selection information of K matrixes $W_{i_11} \cdots W_{i_1k}$, where K may be a positive integer. The codebook indication information $i_3$ may be used for representing a matrix $W_{i_1l}$ selected from the K matrixes. The codebook indication information $i_1$ and $i_3$ may jointly indicate $W_1$ information. The codebook indication information $i_2$ may be used for representing $W_2$ information. The codebook indication information $i_1$, $i_2$ and $i_3$ may jointly determine a precoding code word matrix **U.**

In an exemplary embodiment, the first type of codebook index set **I** may at least include $i_1$ and $i_3$ information; and the second type of codebook index set *J* may at least include $i_2$ information.

Alternatively, the first type of codebook index set **I** may at least include $i_1$ and $i_2$ information; and the second type of codebook index set *J* may at least include $i_3$ information.

Alternatively, the first type of codebook index set **I** may at least include $i_1$ information; and the second type of codebook index set $J$ may at least include $i_2$ and $i_3$ information.

A device for feeding back CSI in a multi-input multi-output system may include: a first obtaining module and a first sending module.

The first obtaining module may be configured to obtain codebook index information.

The first sending module may be configured to feed back the CSI including the codebook index information to an eNodeB.

The codebook index information may include: a first type of codebook index set **I** and a second type of codebook index set $J$. A combination of the first type of index set **I** and the second type of index set $J$ may be used for indicating a precoding matrix **U**. The precoding matrix **U** is an $N_t \times_r$ matrix, where $N_t$ represents a total number of ports or a total number of antennas and $r$ represents a number of transmission layers. The precoding matrix **U** may be composed of at least $Q \times r$ basic vectors having a dimension of $N_t/Q$, where $Q \geq 2$, $r \geq 1$, and $Q$ and $r$ are both positive integers. The basic vectors may be columns extracted from a matrix **B** composed of M columns of $N_t/Q$-dimensional vectors, where M may be a positive integer.

A union of the first type of index set **I** and the second type of index set $J$ may include codebook indication information $i_1$, $i_2$ and $i_3$

The codebook indication information $i_1$ may be used for representing selection information of K matrixes $W_{i_1 1} \cdots W_{i_1 k}$, where K may be a positive integer, and each column of the K matrixes $W_{i_1 1} \cdots W_{i_1 k}$, may be extracted from column vectors included in the matrix **B.** The codebook indication information $i_3$ may be used for representing a matrix $W_{i_1 l}$ selected from the K matrixes. The codebook indication information $i_2$ may be used for representing information of one or more basic vectors extracted from the matrix $W_{i_1 l}$ and used to construct the precoding matrix **U.**

In an exemplary embodiment, the precoding matrix **U** may meet a model:

$$\mathbf{U} = \begin{bmatrix} v_0 \\ \beta v_1 \end{bmatrix} \text{ or } \mathbf{U} = \begin{bmatrix} v_0' \\ \alpha v_1' \\ \beta v_2' \\ \alpha\beta v_3' \end{bmatrix} \text{ or } \mathbf{U} = \begin{bmatrix} v_0 & v_2 \\ \beta v_1 & -\beta v_3 \end{bmatrix} \text{ or } \mathbf{U} = \begin{bmatrix} v_0' & v_4' \\ \alpha v_1' & \alpha v_5' \\ \beta v_2' & -\beta v_6' \\ \alpha\beta v_3' & -\alpha\beta v_7' \end{bmatrix},$$

In the exemplary embodiment, vectors $v_0$, $v_1$, $v_2$ and $v_3$ may be vectors having a dimension of $N_t/2 \times 1$, vectors $v_0'$, $v_1'$, $v_2'$, $v_3'$, $v_4'$, $v_5'$, $v_6'$ and $v_7'$ may be vectors having a dimension of $N_t/4 \times 1$, $\alpha = e^{j\theta_1}$, and $\beta = e^{j\theta_2}$, where $0 \leq \theta_1 \leq 2\pi$, $0 \leq \theta_2 \leq 2\pi$.

In an exemplary embodiment, the first type of codebook index set **I** may at least include $i_1$ and $i_3$ information; and the second type of codebook index set $J$ may at least include $i_2$ information.

Alternatively, the first type of codebook index set **I** may at least include $i_1$ and $i_2$ information; and the second type of codebook index set $J$ may at least include $i_3$ information.

Alternatively, the first type of codebook index set **I** may at least include $i_1$ information; and the second type of codebook index set $J$ may at least include $i_2$ and $i_3$ information.

In an exemplary embodiment, the basic vectors composing the precoding matrix **U** may be divided into N1 groups; the codebook indication information $i_3$ may include N1 pieces of sub-information $i_3(1) \cdots i_3(N1)$ $N1 \geq 2$ and may be a positive integer. In the exemplary embodiment, $i_3(x)$ may be used for representing information of a matrix $W_{i_1 l_x}$ selected for an $X$ th group of vectors from the K matrixes $W_{i_1 1} \cdots W_{i_1 k}$ indicated by $i_1$, where $2 \leq x \leq N1$.

In an exemplary embodiment, the basic vectors composing the precoding matrix **U** may be divided into N2 groups; and the codebook indication information $i_2$ may include N2 pieces of sub-information $i_2(1) \cdots i_2(N2)$ $N2 \geq 2$. In the exemplary embodiment, $i_2(y)$ may be used for representing information of one or more basic vectors extracted from a matrix $W_{i_1 l_y}$ jointly indicated by $i_1$ and $i_3$ and used to construct the precoding matrix **U**, $2 \leq y \leq N2$.

For the codebook model $\mathbf{U}=\begin{bmatrix} v_0^{'} \\ \alpha v_1^{'} \\ \beta v_2^{'} \\ \alpha\beta v_3^{'} \end{bmatrix}$ or $\mathbf{U}=\begin{bmatrix} v_0^{'} & v_4^{'} \\ \alpha v_1^{'} & \alpha v_5^{'} \\ \beta v_2^{'} & -\beta v_6^{'} \\ \alpha\beta v_3^{'} & -\alpha\beta v_7^{'} \end{bmatrix}$, at least one of the codebook indication information $i_1$, $i_2$ and $i_3$ may be further used to represent $\alpha$ information in the codebook model **U.**

In an exemplary embodiment, at least one of the codebook indication information $i_1$, $i_2$ and $i_3$ may be further used to represent $\beta$ information in the codebook model **U.**

In an exemplary embodiment, for the model $\mathbf{U}=\begin{bmatrix} v_0 & v_2 \\ \beta v_1 & -\beta v_3 \end{bmatrix}$, the codebook indication information $i_3$ may include two pieces of sub-information $i_3(1)$ and $i_3(2)$.

In the exemplary embodiment, $i_3(1)$ may be used for representing information of a matrix $W_{i_1 i_3(1)}$ from which vectors $v_0$ and $v_2$ are extracted; and $i_3(2)$ may be used for representing information of a matrix $W_{i_1 i_3(2)}$ from which vectors $v_1$ and $v_3$ are extracted.

In the exemplary embodiment, alternatively, $i_3(1)$ may be used for representing information of a matrix $W_{i_1 i_3(1)}$ from which vectors $v_0$ and $v_1$ are extracted; and $i_3(2)$ may be used for representing information of a matrix $W_{i_1 i_3(2)}$ from which vectors $v_2$ and $v_3$ are extracted.

In an exemplary embodiment, for the model $\mathbf{U}=\begin{bmatrix} v_0^{'} \\ \alpha v_1^{'} \\ \beta v_2^{'} \\ \alpha\beta v_3^{'} \end{bmatrix}$, the codebook indication information $i_3$ may include two pieces of sub-information $i_3(1)$ and $i_3(2)$.

In the exemplary embodiment, $i_3(1)$ may be used for representing information of a matrix $W_{i_1 i_3(1)}$ from which vectors $v_0^{'}$ and $v_1^{'}$ are extracted; and $i_3(2)$ may be used for representing information of a matrix $W_{i_1 i_3(2)}$ from which vectors $v_2^{'}$ and $v_3^{'}$ are extracted.

In the exemplary embodiment, alternatively, $i_3(1)$ may be used for representing information of a matrix $W_{i_1 i_3(1)}$ from which vectors $v_0^{'}$ and $v_2^{'}$ are extracted; and $i_3(2)$ may be used for representing information of a matrix $W_{i_1 i_3(2)}$ from which vectors $v_1^{'}$ and $v_3^{'}$ are extracted.

In an exemplary embodiment, for the model $\mathbf{U}=\begin{bmatrix} v_0^{'} & v_4^{'} \\ \alpha v_1^{'} & \alpha v_5^{'} \\ \beta v_2^{'} & -\beta v_6^{'} \\ \alpha\beta v_3^{'} & -\alpha\beta v_7^{'} \end{bmatrix}$, the codebook indication information $i_3$ may include four pieces of sub-information $i_3(1)$, $i_3(2)$, $i_3(3)$ and $i_3(4)$. In the exemplary embodiment, $i_3(1)$ may be used for representing information of a matrix $W_{i_1 i_3(1)}$ from which vectors $v_0^{'}$ and $v_4^{'}$ are extracted; $i_3(2)$ may be used for representing information of a matrix $W_{i_1 i_3(2)}$ from which vectors $v_1^{'}$ and $v_5^{'}$ are extracted; $i_3(3)$ may be used for representing information of a matrix $W_{i_1 i_3(3)}$ from which vectors $v_2^{'}$ and $v_6^{'}$ are extracted; and $i_3(4)$ may be used for representing information of a matrix $W_{i_1 i_{3(4)}}$ from which vectors $v_3^{'}$ and $v_7^{'}$ are extracted.

In an exemplary embodiment, for the model $\mathbf{U} = \begin{bmatrix} v_0^{'} \\ \alpha v_1^{'} \\ \beta v_2^{'} \\ \alpha\beta v_3^{'} \end{bmatrix}$, the codebook indication information $i_2$ may include two pieces of sub-information $i_2(1)$ and $i_2(2)$.

In the exemplary embodiment, $i_2(i)$ may be used for representing information of a basic vector extracted from the matrix $W_{i_1 l}$ for vectors $v_0^{'}$ and $v_1^{'}$; $i_2(2)$ may be used for representing information of a basic vector extracted from the matrix $W_{i_1 l'}$ for vectors $v_2^{'}$ and $v_3^{'}$.

In the exemplary embodiment, alternatively, $i_2(1)$ may be used for representing information of a basic vector extracted from the matrix $W_{i_1 l}$ for vectors $v_0^{'}$ and $v_2^{'}$; and $i_2(2)$ may be used for representing information of a basic vector extracted from the matrix $W_{i_1 l'}$ for vectors $v_1^{'}$ and $v_3^{'}$.

In an exemplary embodiment, for the model $\mathbf{U} = \begin{bmatrix} v_0 & v_2 \\ \beta v_1 & -\beta v_3 \end{bmatrix}$, the codebook indication information $i_2$ may include two pieces of sub-information $i_2(1)$ and $i_2(2)$.

In the exemplary embodiment, $i_2(1)$ may be used for representing information of a basic vector extracted from the matrix $W_{i_1 l}$ for vectors $v_0$ and $v_2$; and $i_2(2)$ may be used for representing information of a basic vector extracted from the matrix $W_{i_1 l'}$ for vectors $v_1$ and $v_3$.

In the exemplary embodiment, alternatively, $i_2(i)$ may be used for representing information of a basic vector extracted from the matrix $W_{i_1 l}$ for vectors $v_0$ and $v_1$; and $i_2(2)$ may be used for representing information of a basic vector extracted from the matrix $W_{i_1 l'}$ for vectors $v_2$ and $v_3$.

In an exemplary embodiment, for the model $\mathbf{U} = \begin{bmatrix} v_0^{'} & v_4^{'} \\ \alpha v_1^{'} & \alpha v_5^{'} \\ \beta v_2^{'} & -\beta v_6^{'} \\ \alpha\beta v_3^{'} & -\alpha\beta v_7^{'} \end{bmatrix}$, the codebook indication information $i_2$ may include four pieces of sub-information $i_2(1)$, $i_2(2)$, $i_2(3)$ and $i_2(4)$.

In the exemplary embodiment, $i_2(1)$ may be used for representing information of a basic vector extracted from the matrix $W_{i_1 l}$ for vectors $v_0^{'}$ and $v_4^{'}$; $i_2(2)$ may be used for representing information of a basic vector extracted from the matrix $W_{i_1 l'}$ for vectors $v_1^{'}$ and $v_5^{'}$; $i_2(3)$ may be used for representing information of a basic vector extracted from the matrix $W_{i_1 l''}$ for vectors $v_2^{'}$ and $v_6^{'}$; and $i_2(4)$ may be used for representing information of a basic vector extracted from the matrix $W_{i_1 l'''}$ for vectors $v_3^{'}$ and $v_7^{'}$.

In an exemplary embodiment, for the model $\mathbf{U}=\begin{bmatrix} v_0' & v_4' \\ \alpha v_1' & \alpha v_5' \\ \beta v_2' & -\beta v_6' \\ \alpha\beta v_3' & -\alpha\beta v_7' \end{bmatrix}$, the codebook indication information $i_2$ may include four pieces of sub-information $i_2(1)$, $i_2(2)$, $i_2(3)$ and $i_2(4)$.

In the exemplary embodiment, $i_2(1)$ may be used for representing information of a basic vector extracted from the matrix $W_{i_1 l}$ for vectors $v_0'$ and $v_1'$; $i_2(2)$ may be used for representing information of a basic vector extracted from the matrix $W_{i_1 l'}$ for vectors $v_2'$ and $v_3'$; $i_2(3)$ may be used for representing information of a basic vector extracted from the matrix $W_{i_1 l''}$ for vectors $v_4'$ and $v_5'$; and $i_2(4)$ may be used for representing information of a basic vector extracted from the matrix $W_{i_1 l'''}$ for vectors $v_6'$ and $v_7'$.

In the exemplary embodiment, alternatively, $i_2(1)$ may be used for representing information of a basic vector extracted from the matrix $W_{i_1 l}$ for vectors $v_0'$ and $v_2'$; $i_2(2)$ may be used for representing information of a basic vector extracted from the matrix $W_{i_1 l'}$ for vectors $v_1'$ and $v_3'$; $i_2(3)$ may be used for representing information of a basic vector extracted from the matrix $W_{i_1 l''}$ for vectors $v_4'$ and $v_6'$; and $i_2(4)$ may be used for representing information of a basic vector extracted from the matrix $W_{i_1 l'''}$ for vectors $v_5'$ and $v_7'$.

In an exemplary embodiment, $i_3(1) \cdots i_3(N1)$ may have a linear relationship. When the CSI is reported, the UE may at least report one codebook indication information in $i_3(1) \cdots i_3(N1)$.

In an exemplary embodiment, $i_2(1) \cdots i_2(N2)$ may have a linear relationship. When the CSI is reported, the UE may at least report one codebook indication information in $i_2(1) \cdots i_2(N2)$.

In an exemplary embodiment, $i_3(1) = i_3(2)$.

In an exemplary embodiment, $i_3(1) = i_3(2)$.

In an exemplary embodiment, $i_3(1) = i_3(2) = i_3(3) = i_3(4)$.

In an exemplary embodiment, $i_2(1) = i_2(2)$.

In an exemplary embodiment, $i_2(1) = i_2(2)$.

In an exemplary embodiment, $i_2(1) = i_2(2) = i_2(3) = i_2(4)$.

In an exemplary embodiment, the M columns of vectors composing the matrix **B** may be DFT vectors.

A device for feeding back CSI in a multi-input multi-output system may include: a second obtaining module and a second sending module.

The second obtaining module may be configured to obtain codebook index information.

The second sending module may be configured to feed back the CSI including the codebook index information to an eNodeB.

The codebook index information may include: a first type of codebook index set **I** and a second type of codebook index set *J*. A combination of the first type of index set **I** and the second type of index set *J* may be used for indicating a precoding matrix **U;** a union of the first type of index set **I** and the second type of index set *J* may include codebook indication information $i_1$, $i_2$ and $i_3$. The precoding matrix may meet a model: $\mathbf{U} = W_1 \cdot W_2$, where **U** is an $N_t \times r$ matrix, $N_t$ represents a total number of ports or a total number of antennas and $r$ represents a number of transmission layers.

The codebook indication information $i_1$ may be used for representing selection information of K matrixes $W_{i_1 1} \cdots W_{i_1 k}$, where K may be a positive integer; $i_3$ may be used for representing a matrix $W_{i1l}$ selected from the K matrixes; $i_1$ and $i_3$ may jointly indicate $W_1$ information; $i_2$ may be used for representing $W_2$ information; the $i_1$, $i_2$ and $i_3$ may jointly determine a precoding code word matrix **U.**

In an exemplary embodiment, the first type of codebook index set **I** may at least include $i_1$ and $i_3$ information; the second type of codebook index set *J* may at least include $i_2$ information.

Alternatively, the first type of codebook index set **I** may at least include $i_1$ and $i_2$ information; the second type of codebook index set *J* may at least include $i_3$ information.

Alternatively, the first type of codebook index set **I** may at least include $i_1$ information; the second type of codebook index set $J$ may at least include $i_2$ and $i_3$ information.

A computer readable storage medium is also provided. The computer readable storage medium may store a computer executable instruction, and the computer executable instruction may be used to implement any one of the methods.

According to some embodiments of the present disclosure, the code word may be not only suitable for the correlated channels, but also suitable for the uncorrelated channels. It may be ensured that the code word may achieve a relatively good performance when the $W_1$ is wrongly selected. Furthermore, when the channel changes slowly in a cycle, the code word may still be changed; and thus, the good adaptability may be achieved.

After reading and understanding the accompanying drawings and the detailed description, other aspects of the present disclosure may be clearly understood.

## Brief Description of the Drawings

Fig. 1 is a flowchart of a method for feeding back CSI in a multi-input multi-output system according to an embodiment of the present disclosure.

Fig. 2 is a structural diagram of a device for feeding back CSI in a multi-input multi-output system according to an embodiment of the present disclosure.

Fig. 3 is a structural diagram of another device for feeding back CSI in a multi-input multi-output system according to an embodiment of the present disclosure.

## Detailed Description of the Embodiments

The present disclosure is described below with reference to the drawings and embodiments in detail. It should be noted that the embodiments of the present application and the characteristics of the embodiments may be combined with each other if there is no conflict. Fig. 1 is a flowchart of a method for feeding back CSI in a multi-input multi-output system according to an embodiment of the present disclosure. As shown in Fig. 1, the method may include the following acts.

At act 101, a UE may obtain CSI.

At act 102, the UE may feed back CSI including codebook index information to an eNodeB.

The codebook index information provided by the embodiments of the present disclosure will be described below.

### First embodiment

The eNB is provided with eight antennas and the UE is provided with two receiving antennas. The eNB may send a channel state measurement pilot frequency of 16Tx to the UE, and the UE may perform a channel measurement according to the received measurement pilot frequency and may feed back the CSI information including PMI information to the eNB.

The codebook of 8Tx is $U_8 = W_1 \cdot W_2$.

Where: $\mathbf{W}_{1,n} = \begin{bmatrix} \mathbf{X}_n & 0 \\ 0 & \mathbf{X}_n \end{bmatrix}$ where $n$ = 0,1,..,15

$$\mathbf{X}_n = \begin{bmatrix} 1 & 1 & 1 & 1 \\ q_1^{n} & q_1^{n+8} & q_1^{n+16} & q_1^{n+24} \\ q_1^{2n} & q_1^{2n+16} & q_1^{2n} & q_1^{2n+16} \\ q_1^{3n} & q_1^{3n+24} & q_1^{3n+16} & q_1^{3n+8} \end{bmatrix}$$

where $q_1 = e^{j2\pi/32}$ For rank 1, $\mathbf{W}_{2,n} \in \left\{ \frac{1}{2\sqrt{2}} \begin{bmatrix} \mathbf{Y} \\ \alpha(i)\mathbf{Y} \end{bmatrix}, \frac{1}{2\sqrt{2}} \begin{bmatrix} \mathbf{Y} \\ j\alpha(i)\mathbf{Y} \end{bmatrix}, \frac{1}{2\sqrt{2}} \begin{bmatrix} \mathbf{Y} \\ -\alpha(i)\mathbf{Y} \end{bmatrix}, \frac{1}{2\sqrt{2}} \begin{bmatrix} \mathbf{Y} \\ -j\alpha(i)\mathbf{Y} \end{bmatrix} \right\}$

Where: $\mathbf{Y} \in \{e_1,e_2,e_3,e_4\}$ and $\alpha(i) = q_1^{2(i-1)}$; $W_2$ code words are sequenced in a manner the same as enhanced codebooks of 4Tx in 36.213.

$$\mathbf{W}_{2,n} \in \left\{ \frac{1}{4}\begin{bmatrix} \mathbf{Y}_1 & \mathbf{Y}_2 \\ \mathbf{Y}_1 & -\mathbf{Y}_2 \end{bmatrix}, \frac{1}{4}\begin{bmatrix} \mathbf{Y}_1 & \mathbf{Y}_2 \\ j\mathbf{Y}_1 & -j\mathbf{Y}_2 \end{bmatrix} \right\}$$

For rank 2,

Where: $(\mathbf{Y}_1,\mathbf{Y}_2) = (e_i,e_k) \in \{(e_1,e_1),(e_2,e_2),(e_3,e_3),(e_4,e_4),(e_1,e_2),(e_2,e_3),(e_1,e_4),(e_2,e_4)\}$

In an exemplary embodiment, for the rank 2, the $W_2$ code words are sequenced as a Table B1-1 below.

Table B1-1

| $W_2$ Index | 0 | 1 | 2 | 4 |
|---|---|---|---|---|
| Code word structure ($Y_1$, $Y_2$) | $\frac{1}{4}\begin{bmatrix} \mathbf{Y}_1 & \mathbf{Y}_2 \\ \mathbf{Y}_1 & -\mathbf{Y}_2 \end{bmatrix}$ $(e_1,e_1)$ | $\frac{1}{4}\begin{bmatrix} \mathbf{Y}_1 & \mathbf{Y}_2 \\ j\mathbf{Y}_1 & -j\mathbf{Y}_2 \end{bmatrix}$ $(e_1,e_1)$ | $\frac{1}{4}\begin{bmatrix} \mathbf{Y}_1 & \mathbf{Y}_2 \\ \mathbf{Y}_1 & -\mathbf{Y}_2 \end{bmatrix}$ $(e_2,e_2)$ | $\frac{1}{4}\begin{bmatrix} \mathbf{Y}_1 & \mathbf{Y}_2 \\ j\mathbf{Y}_1 & -j\mathbf{Y}_2 \end{bmatrix}$ $(e_2,e_2)$ |
| $W_2$ Index | 5 | 6 | 7 | 8 |
| Code word structure ($Y_1$, $Y_2$) | $\frac{1}{4}\begin{bmatrix} \mathbf{Y}_1 & \mathbf{Y}_2 \\ \mathbf{Y}_1 & -\mathbf{Y}_2 \end{bmatrix}$ $(e_3,e_3)$ | $\frac{1}{4}\begin{bmatrix} \mathbf{Y}_1 & \mathbf{Y}_2 \\ j\mathbf{Y}_1 & -j\mathbf{Y}_2 \end{bmatrix}$ $(e_3,e_3)$ | $\frac{1}{4}\begin{bmatrix} \mathbf{Y}_1 & \mathbf{Y}_2 \\ \mathbf{Y}_1 & -\mathbf{Y}_2 \end{bmatrix}$ $(e_4,e_4)$ | $\frac{1}{4}\begin{bmatrix} \mathbf{Y}_1 & \mathbf{Y}_2 \\ j\mathbf{Y}_1 & -j\mathbf{Y}_2 \end{bmatrix}$ $(e_4,e_4)$ |
| $W_2$ Index | 9 | 10 | 11 | 12 |
| Code word structure ($Y_1$, $Y_2$) | $\frac{1}{4}\begin{bmatrix} \mathbf{Y}_1 & \mathbf{Y}_2 \\ \mathbf{Y}_1 & -\mathbf{Y}_2 \end{bmatrix}$ $(e_1,e_2)$ | $\frac{1}{4}\begin{bmatrix} \mathbf{Y}_1 & \mathbf{Y}_2 \\ j\mathbf{Y}_1 & -j\mathbf{Y}_2 \end{bmatrix}$ $(e_1,e_2)$ | $\frac{1}{4}\begin{bmatrix} \mathbf{Y}_1 & \mathbf{Y}_2 \\ \mathbf{Y}_1 & -\mathbf{Y}_2 \end{bmatrix}$ $(e_2,e_3)$ | $\frac{1}{4}\begin{bmatrix} \mathbf{Y}_1 & \mathbf{Y}_2 \\ j\mathbf{Y}_1 & -j\mathbf{Y}_2 \end{bmatrix}$ $(e_2,e_3)$ |
| $W_2$ Index | 13 | 14 | 15 | 16 |
| Code word structure ($Y_1$, $Y_2$) | $\frac{1}{4}\begin{bmatrix} \mathbf{Y}_1 & \mathbf{Y}_2 \\ \mathbf{Y}_1 & -\mathbf{Y}_2 \end{bmatrix}$ $(e_1,e_4)$ | $\frac{1}{4}\begin{bmatrix} \mathbf{Y}_1 & \mathbf{Y}_2 \\ j\mathbf{Y}_1 & -j\mathbf{Y}_2 \end{bmatrix}$ $(e_1,e_4)$ | $\frac{1}{4}\begin{bmatrix} \mathbf{Y}_1 & \mathbf{Y}_2 \\ \mathbf{Y}_1 & -\mathbf{Y}_2 \end{bmatrix}$ $(e_2,e_4)$ | $\frac{1}{4}\begin{bmatrix} \mathbf{Y}_1 & \mathbf{Y}_2 \\ j\mathbf{Y}_1 & -j\mathbf{Y}_2 \end{bmatrix}$ $(e_2,e_4)$ |

The codebook indication information may include three parts, namely $i_1$, $i_2$ and $i_3$, where $i_1$ indication information is shown in a Table B1-2.

Table B1-2

| $i_1$ Index | Including $W_{1-n}$ relationship $i_3$ Index | | | |
|---|---|---|---|---|
| | 0 | 1 | 2 | 3 |
| 0 | $W_{1,0}$ | $W_{1,1}$ | $W_{1,2}$ | $W_{1,3}$ |
| 1 | $W_{1,4}$ | $W_{1,5}$ | $W_{1,6}$ | $W_{1,7}$ |
| 2 | $W_{1,8}$ | $W_{1,9}$ | $W_{1,10}$ | $W_{1,11}$ |
| 3 | $W_{1,12}$ | $W_{1,13}$ | $W_{1,14}$ | $W_{1,15}$ |

The UE may select a value of $i_1$ to be $i_1$ =0 according to a channel measurement information result. Then, an act is carried out to select $i_3$, the UE may select $i_3$ =0 according to the channel measurement result. In combination with the results of $i_3$ and $i_3$, the selected $W_1$ may be finally determined and then $i_2$ may be selected.

It is assumed that the code word selected by the UE is a code cord under rank 1 and $i_2$=1 is selected, the code word selected by the UE is $\frac{1}{2\sqrt{2}}\begin{bmatrix} 1 \\ j \\ -1 \\ -j \\ e^{j\frac{\pi}{16}} \\ j\cdot e^{j\frac{\pi}{16}} \\ -e^{j\frac{\pi}{16}} \\ -j\cdot e^{j\frac{\pi}{16}} \end{bmatrix}$.

The UE may report RI=1 and report the PMI information **I,** *J* of the selected code word. Herein, **I** is reported as $i_1$=0 and *J* is reported as $i_3$=0 and $i_2$ =1.

Alternatively, the UE may report the PMI information **I,** *J* of the selected code word. Herein, **I** is reported as $i_1$=0 and $i_3$=0 and *J* is reported as $i_2$=1.

Alternatively, the UE may report the PMI information **I,** *J* of the selected code word. Herein, **I** is reported as $i_1$=0 and $i_2$=1 and *J* is reported as $i_3$=0.

It is assumed that the code word selected by the UE is a code cord under rank 2 and $i_2$=0 is selected, the code word selected by the UE is $\frac{1}{4}\begin{bmatrix} 1 & 1 \\ 1 & 1 \\ 1 & 1 \\ 1 & 1 \\ 1 & -1 \\ 1 & -1 \\ 1 & -1 \\ 1 & -1 \end{bmatrix}$.

At this moment, the UE may report RI=2 and report the PMI information **I,** *J* of the selected code word. Herein, reported information of **I** may include $i_1$=0, and reported information of *J* may include $i_3$=0 and $i_2$=0.

Alternatively, the UE may report the PMI information **I,** *J* of the selected code word. Herein, reported information of **I** may include $i_1$=0 and $i_3$ =0, and reported information of *J* may include $i_2$=0.

Alternatively, the UE may report the PMI information **I,** *J* of the selected code word. Herein, reported information of **I** may include $i_1$=0 and $i_2$=0, and reported information of *J* may include $i_3$=0.

## Second embodiment

The eNB is provided with eight antennas and the UE is provided with two receiving antennas. The eNB may send a channel state measurement pilot frequency of 16Tx to the UE, and the UE may perform a channel measurement according to the received measurement pilot frequency and may feed back the CSI information including PMI information to the eNB.

The codebook of 8Tx is $U_8=W_1\cdot W_2$.

Where: $\mathbf{W}_{1,n} = \begin{bmatrix} \mathbf{X}_n & 0 \\ 0 & \mathbf{X}_n \end{bmatrix}$ where *n* = 0,1,..,15

$$\mathbf{X}_n = \begin{bmatrix} 1 & 1 & 1 & 1 \\ q_1^{\,n} & q_1^{\,n+8} & q_1^{\,n+16} & q_1^{\,n+24} \\ q_1^{\,2n} & q_1^{\,2n+16} & q_1^{\,2n} & q_1^{\,2n+16} \\ q_1^{\,3n} & q_1^{\,3n+24} & q_1^{\,3n+16} & q_1^{\,3n+8} \end{bmatrix}$$

where $q_1 = e^{j2\pi/32}$

For rank 1, $$\mathbf{W}_{2,n} \in \left\{ \frac{1}{2\sqrt{2}} \begin{bmatrix} \mathbf{Y} \\ \alpha(i)\mathbf{Y} \end{bmatrix}, \frac{1}{2\sqrt{2}} \begin{bmatrix} \mathbf{Y} \\ j\alpha(i)\mathbf{Y} \end{bmatrix}, \frac{1}{2\sqrt{2}} \begin{bmatrix} \mathbf{Y} \\ -\alpha(i)\mathbf{Y} \end{bmatrix}, \frac{1}{2\sqrt{2}} \begin{bmatrix} \mathbf{Y} \\ -j\alpha(i)\mathbf{Y} \end{bmatrix} \right\}$$

Where: $Y \in \{e_1, e_2, e_3, e_4\}$ and $\alpha(i) = q_1^{2(i-1)}$;

For rank 2, $$\mathbf{W}_{2,n} \in \left\{ \frac{1}{4} \begin{bmatrix} \mathbf{Y}_1 & \mathbf{Y}_2 \\ \mathbf{Y}_1 & -\mathbf{Y}_2 \end{bmatrix}, \frac{1}{4} \begin{bmatrix} \mathbf{Y}_1 & \mathbf{Y}_2 \\ j\mathbf{Y}_1 & -j\mathbf{Y}_2 \end{bmatrix} \right\}$$

Where: $(Y_1, Y_2) = (e_i, e_k) \in \{(e_1, e_1), (e_2, e_2), (e_3, e_3), (e_4, e_4), (e_1, e_2), (e_2, e_3), (e_1, e_4), (e_2, e_4)\}$

The codebook sequencing index method is as shown in the first embodiment.

The codebook indication information may include three parts, namely $i_1$, $i_2$ and $i_3$, where $i_1$ indication information is shown in a Table B2-1.

Table B2-1

| $i_1$ Index | Including $W_{1-n}$ relationship $i_3$ Index | | | |
|---|---|---|---|---|
| | 0 | 1 | 2 | 3 |
| 0 | $W_{1,0}$ | $W_{1,1}$ | $W_{1,2}$ | $W_{1,3}$ |
| 1 | $W_{1,2}$ | $W_{1,3}$ | $W_{1,4}$ | $W_{1,5}$ |
| 2 | $W_{1,4}$ | $W_{1,5}$ | $W_{1,6}$ | $W_{1,7}$ |
| 3 | $W_{1,6}$ | $W_{1,7}$ | $W_{1,8}$ | $W_{1,9}$ |
| 4 | $W_{1,8}$ | $W_{1,9}$ | $W_{1,10}$ | $W_{1,11}$ |
| 5 | $W_{1,10}$ | $W_{1,11}$ | $W_{1,12}$ | $W_{1,13}$ |
| 6 | $W_{1,12}$ | $W_{1,13}$ | $W_{1,14}$ | $W_{1,15}$ |
| 7 | $W_{1,14}$ | $W_{1,15}$ | $W_{1,0}$ | $W_{1,1}$ |

The UE may select a value of $i_3$ to be $i_1$=7 according to a channel measurement information result. Then, an act is carried out to select $i_3$ , for example, the UE may select $i_3$=2 according to the channel measurement result. In combination with the results of $i_1$ and $i_3$, the selected $W_1$, may be finally determined and then $i_2$ may be selected.

It is assumed that the code word selected by the UE is a code cord under rank 1 1 and $i_2$=1 is selected, the code word selected by the UE is $$\frac{1}{2\sqrt{2}} \begin{bmatrix} 1 \\ j \\ -1 \\ -j \\ e^{j\frac{\pi}{16}} \\ j \cdot e^{j\frac{\pi}{16}} \\ -e^{j\frac{\pi}{16}} \\ -j \cdot e^{j\frac{\pi}{16}} \end{bmatrix}.$$

The UE may report RI=1 and report the PMI information I, *J* of the selected codeword. Herein, **I** is reported as $i_1$=7 and *J* is reported as $i_3$=2 and $i_2$=1.

It is assumed that the code word selected by the UE is a code cord under rank 2 and $i_2$=0 is selected, the code word selected by the UE is $\frac{1}{4}\begin{bmatrix} 1 & 1 \\ 1 & 1 \\ 1 & 1 \\ 1 & 1 \\ 1 & -1 \\ 1 & -1 \\ 1 & -1 \\ 1 & -1 \end{bmatrix}$.

At this moment, the UE may report RI=2 and report the PMI information **I,** *J* of the selected code word. Herein, reported information of **I** may include $i_1$=7, and reported information of *J* may include $i_3$=2 and $i_2$=0.

**Third embodiment**

The eNB is provided with sixteen antennas and the UE is provided with two receiving antennas. The eNB may send a channel state measurement pilot frequency of 16Tx to the UE, and the UE may perform a channel measurement according to the received measurement pilot frequency and may feed back the CSI information including PMI information to the eNB.

The codebook structure of the 16Tx under rank 1/2 is as follows.

$$U_1 = \begin{bmatrix} v_0 \\ \beta v_1 \end{bmatrix} \qquad U_2 = \begin{bmatrix} v_0 & v_2 \\ \beta v_1 & -\beta v_3 \end{bmatrix}$$

In the code word, the $v_0$, $v_1$, $v_2$ and $v_3$ are all DFT vectors and are column vectors extracted from a matrix **B,** where the matrix **B** is defined as follows.

$$\mathbf{B} = \begin{bmatrix} \mathbf{b}_0 & \mathbf{b}_1 & \cdots & \mathbf{b}_{31} \end{bmatrix} \quad , \quad \left[\mathbf{B}\right]_{1+m,1+n} = e^{j\frac{2\pi mn}{32}}, \quad m = 0,1,\cdots,7,\ n = 0,1,\cdots,31$$

$$\mathbf{X}^{(p)} \in \left\{ \begin{bmatrix} \mathbf{b}_{2k \bmod 32} & \mathbf{b}_{(2k+1) \bmod 32} & \mathbf{b}_{(2k+2) \bmod 32} & \mathbf{b}_{(2k+3) \bmod 32} \end{bmatrix} : p = 0,1,\cdots,15 \right\}$$

The corresponding relationship between $i_1$ and $X^{(p)}$ is as shown in a Table B3-1.

Table 3-1

Table B3-1

| $i_1$ Index | Including $\mathbf{X}^{(p)}$ relationship $i_3$ Index | | | |
|---|---|---|---|---|
| | 0 | 1 | 2 | 3 |
| 0 | $\mathbf{X}^{(0)}$ | $\mathbf{X}^{(4)}$ | $\mathbf{X}^{(8)}$ | $\mathbf{X}^{(12)}$ |
| 1 | $\mathbf{X}^{(1)}$ | $\mathbf{X}^{(5)}$ | $\mathbf{X}^{(9)}$ | $\mathbf{X}^{(13)}$ |
| 2 | $\mathbf{X}^{(2)}$ | $\mathbf{X}^{(6)}$ | $\mathbf{X}^{(10)}$ | $\mathbf{X}^{(14)}$ |
| 3 | $\mathbf{X}^{(3)}$ | $\mathbf{X}^{(7)}$ | $\mathbf{X}^{(11)}$ | $\mathbf{X}^{(15)}$ |

The $i_3$ is used to determine, together with the $i_1$, a DFT vector range $X^{(p)}$ for vector selection. The $i_2$ may be used for indicating information of the column vectors extracted from the $X^{(p)}$ .

For the rank 1: $C_2 = \left\{ \begin{bmatrix} \mathbf{Y} \\ \mathbf{Y} \end{bmatrix}, \begin{bmatrix} \mathbf{Y} \\ j\mathbf{Y} \end{bmatrix}, \begin{bmatrix} \mathbf{Y} \\ -\mathbf{Y} \end{bmatrix}, \begin{bmatrix} \mathbf{Y} \\ -j\mathbf{Y} \end{bmatrix} \right\},$ $\mathbf{Y} \in \{\tilde{e}_1, \tilde{e}_2, \tilde{e}_3, \tilde{e}_4\}$

For the rank 2: $C_2 = \left\{ \begin{bmatrix} \mathbf{Y}_1 & \mathbf{Y}_2 \\ \mathbf{Y}_1 & -\mathbf{Y}_2 \end{bmatrix}, \begin{bmatrix} \mathbf{Y}_1 & \mathbf{Y}_2 \\ j\mathbf{Y}_1 & -j\mathbf{Y}_2 \end{bmatrix} \right\},$

$$(\mathbf{Y}_1, \mathbf{Y}_2) \in \left\{ (\tilde{\mathbf{e}}_1, \tilde{\mathbf{e}}_1), (\tilde{\mathbf{e}}_2, \tilde{\mathbf{e}}_2), (\tilde{\mathbf{e}}_3, \tilde{\mathbf{e}}_3), (\tilde{\mathbf{e}}_4, \tilde{\mathbf{e}}_4), (\tilde{\mathbf{e}}_1, \tilde{\mathbf{e}}_2), (\tilde{\mathbf{e}}_2, \tilde{\mathbf{e}}_3), (\tilde{\mathbf{e}}_1, \tilde{\mathbf{e}}_4), (\tilde{\mathbf{e}}_2, \tilde{\mathbf{e}}_4) \right\}$$

Where, $e_l$ is an $l$ th column in a unit matrix and indicates to extract the I th column from the matrix $X^{(p)}$ to serve as a DFT vector of a matrix **U.**

It is assumed that the code word selected by the UE is a code cord under rank 2, the UE may select a value of $i_1$ to be $i_1$=1 according to a channel measurement information result. Then $i_3$=2 may be selected. The selected $X^{(p_1)}$ and $X^{(p_2)}$ are finally determined by the UE according to the results of $i_1$ and $i_3$, and thereafter, $i_2$ =0 may be selected.

At this moment, the UE may report RI=2 and report the PMI information **I,** *J* of the selected code word. Herein, reported information of **I** may include $i_1$=1, and reported information of *J* may include $i_3$=2 and $i_2$=0.

Alternatively, the UE may report the PMI information **I,** *J* of the selected code word. Herein, reported information of **I** may include $i_1$=1 and $i_3$=2, and reported information of *J* may include $i_2$=0.

Alternatively, the UE may report the PMI information **I,** *J* of the selected code word. Herein, reported information of **I** may include $i_1$=1 and $i_2$=0, and reported information of *J* may include $i_3$=2.

**Fourth embodiment**

The eNB is provided with sixteen antennas and the UE is provided with two receiving antennas. The eNB may send a channel state measurement pilot frequency of 16Tx to the UE, and the UE may perform a channel measurement according to the received measurement pilot frequency and may feed back the CSI information including PMI information to the eNB.

The codebook structure of the 16Tx under rank 1/2 is as follows.

$$U_1 = \begin{bmatrix} v_0 \\ \beta v_1 \end{bmatrix} \qquad U_2 = \begin{bmatrix} v_0 & v_2 \\ \beta v_1 & -\beta v_3 \end{bmatrix}$$

A certain adjustment is made for the above Formula, and the common factors are extracted out to obtain:

$$U'_1 = \frac{1}{4}\begin{bmatrix} v'_0 \\ \beta v'_1 \end{bmatrix} \qquad U'_2 = \frac{1}{4\sqrt{2}}\begin{bmatrix} v'_0 & v'_2 \\ \beta v'_1 & -\beta v'_3 \end{bmatrix}$$

In the code word, $v_0^{'}$, $v_1^{'}$, $v_2^{'}$ and $v_3^{'}$ are all DFT vectors and are column vectors extracted from a matrix **B,** where the matrix **B** is defined as follows.

$$\mathbf{B} = \begin{bmatrix} \mathbf{b}_0 & \mathbf{b}_1 & \cdots & \mathbf{b}_{31} \end{bmatrix} \quad , \quad [\mathbf{B}]_{1+m,1+n} = e^{j\frac{2\pi mn}{32}}, \quad m = 0,1,\cdots,7, n = 0,1,\cdots,31$$

$$\mathbf{X}^{(p)} \in \left\{ \begin{bmatrix} \mathbf{b}_{2k \bmod 32} & \mathbf{b}_{(2k+1) \bmod 32} & \mathbf{b}_{(2k+2) \bmod 32} & \mathbf{b}_{(2k+3) \bmod 32} \end{bmatrix} : p = 0,1,\cdots,15 \right\}$$

The $i_1$ may be used for indicating information about a range to extract the DFT vectors in $v_0^{'}$ : $v_1^{'}$, $v_2^{'}$ and $v_3^{'}$. The corresponding relationship between $i_1$ and $X^{(p)}$ is as shown in a Table B4-1.

Table B4-1

| $i_1$ Index | Including $\mathbf{X}^{(p)}$ relationship $i_3$ Index | | | |
|---|---|---|---|---|
| | 0 | 1 | 2 | 3 |
| 0 | $\mathbf{X}^{(0)}$ | $\mathbf{X}^{(4)}$ | $\mathbf{X}^{(8)}$ | $\mathbf{X}^{(12)}$ |
| 1 | $\mathbf{X}^{(1)}$ | $\mathbf{X}^{(5)}$ | $\mathbf{X}^{(9)}$ | $\mathbf{X}^{(13)}$ |
| 2 | $\mathbf{X}^{(2)}$ | $\mathbf{X}^{(6)}$ | $\mathbf{X}^{(10)}$ | $\mathbf{X}^{(14)}$ |
| 3 | $\mathbf{X}^{(3)}$ | $\mathbf{X}^{(7)}$ | $\mathbf{X}^{(11)}$ | $\mathbf{X}^{(15)}$ |

The $i_3$ is used to determine, together with the $i_1$, a DFT vector matrix $X^{(p)}$ for vector selection and may include two parts, namely $i_3(1)$ and $i_3(2)$. The $i_2$ may be used for indicating information of the column vectors extracted from the $X^{(p)}$ and may include phase $\beta$ information.

For the code word under rank 1, $i_3(1)$ is used to represent a DFT vector selection matrix $X^{P i_3(1)}$ of the vector $v_0'$ based on $i_1$; and $i_3(2)$ is used to represent a DFT vector selection matrix $X^{P i_3(2)}$ of the vector $v_1'$ based on $i_1$.

For the code word under rank 2, $i_3(1)$ is used to represent a DFT vector selection matrix $X^{P i_3(1)}$ of the vectors $v_0'$ and $v_1'$ based on $i_1$; and $i_3(2)$ is used to represent a DFT vector selection matrix $X^{P i_3(2)}$ of the vectors $v_2'$ and $v_3'$ based on $i_1$.

For the rank 1: $C_2 = \left\{ \begin{bmatrix} \mathbf{Y} \\ \mathbf{Y} \end{bmatrix}, \begin{bmatrix} \mathbf{Y} \\ j\mathbf{Y} \end{bmatrix}, \begin{bmatrix} \mathbf{Y} \\ -\mathbf{Y} \end{bmatrix}, \begin{bmatrix} \mathbf{Y} \\ -j\mathbf{Y} \end{bmatrix} \right\},$ $Y \in \{\tilde{e}_1, \tilde{e}_2, \tilde{e}_3, \tilde{e}_4\}$

For the rank 2: $C_2 = \left\{ \begin{bmatrix} \mathbf{Y}_1 & \mathbf{Y}_2 \\ \mathbf{Y}_1 & -\mathbf{Y}_2 \end{bmatrix}, \begin{bmatrix} \mathbf{Y}_1 & \mathbf{Y}_2 \\ j\mathbf{Y}_1 & -j\mathbf{Y}_2 \end{bmatrix} \right\},$

$$(\mathbf{Y}_1, \mathbf{Y}_2) \in \left\{ (\tilde{\mathbf{e}}_1, \tilde{\mathbf{e}}_1), (\tilde{\mathbf{e}}_2, \tilde{\mathbf{e}}_2), (\tilde{\mathbf{e}}_3, \tilde{\mathbf{e}}_3), (\tilde{\mathbf{e}}_4, \tilde{\mathbf{e}}_4), (\tilde{\mathbf{e}}_1, \tilde{\mathbf{e}}_2), (\tilde{\mathbf{e}}_2, \tilde{\mathbf{e}}_3), (\tilde{\mathbf{e}}_1, \tilde{\mathbf{e}}_4), (\tilde{\mathbf{e}}_2, \tilde{\mathbf{e}}_4) \right\}$$

Where, $e_l$ is an $l$ th column in a unit matrix and indicates to extract the I th column from the matrix $X^{(p)}$ to serve as a DFT vector of a matrix **U.**

It is assumed that the code word selected by the UE is a code cord under rank 2, and the UE may select a value of $i_1$ to be $i_1$=1 according to a channel measurement information result. Then, an act is carried out to select $i_3$ and respectively select values of the $i_3(1)$ and $i_3(2)$, the UE may select $i_3(1)$=1 and $i_3(2)$=2 according to the channel measurement result. The $X^{(p1)}$ and $X^{(p2)}$ are finally determined according to the results of $i_1$ and $i_3$ . And $i_2$=0 may be selected.

At this moment, the UE may report RI=2 and report the PMI information **I,** *J* of the selected code word. Herein, reported information of **I** may include $i_1$=1, and reported information of *J* may include $i_3(1)$=1, $i_3(2)$ =2 and $i_2$=0.

Alternatively, the UE may report the PMI information **I,** *J* of the selected code word. Herein, reported information of **I** may include $i_1$=1, $i_3(i)$=1 and $i_3(2)$=2, and reported information of *J* may include $i_2$=0.

## Fifth embodiment

The eNB is provided with sixteen antennas and the UE is provided with two receiving antennas. The eNB may send a channel state measurement pilot frequency of 16Tx to the UE, and the UE may perform a channel measurement according to the received measurement pilot frequency and may feed back the CSI information including PMI information to the eNB.

The codebook structure of the 16Tx under ranks 1-2 is as follows.

$$U_1 = \begin{bmatrix} v_0 \\ \beta v_1 \end{bmatrix} \qquad U_2 = \begin{bmatrix} v_0 & v_2 \\ \beta v_1 & -\beta v_3 \end{bmatrix}$$

A certain adjustment is made for the above Formula, and the common factors are extracted out to obtain:

$$U'_1 = \frac{1}{4}\begin{bmatrix} v'_0 \\ \beta v'_1 \end{bmatrix} \qquad U'_2 = \frac{1}{4\sqrt{2}}\begin{bmatrix} v'_0 & v'_2 \\ \beta v'_1 & -\beta v'_3 \end{bmatrix}$$

In the code word, $v_0^{'}$, $v_1^{'}$, $v_2^{'}$ and $v_3^{'}$ are all DFT vectors and are column vectors extracted from a matrix **B,** where the matrix **B** is defined as follows.

$$\mathbf{B} = \begin{bmatrix} \mathbf{b}_0 & \mathbf{b}_1 & \cdots & \mathbf{b}_{31} \end{bmatrix} \quad , \quad [\mathbf{B}]_{1+m,1+n} = e^{j\frac{2\pi mn}{32}}, \quad m = 0,1,\cdots,7, n = 0,1,\cdots,31$$

$$\mathbf{X}^{(p)} \in \left\{ \begin{bmatrix} \mathbf{b}_{2k \bmod 32} & \mathbf{b}_{(2k+1) \bmod 32} & \mathbf{b}_{(2k+2) \bmod 32} & \mathbf{b}_{(2k+3) \bmod 32} \end{bmatrix} : p = 0,1,\cdots,15 \right\}$$

The $i_1$ may be used for indicating information about a range to extract the DFT vectors in $v_0^{'}$, $v_1^{'}$, $v_2^{'}$ and $v_3^{'}$. The corresponding relationship between $i_1$ and $X^{(p)}$ is as shown in a Table B5-1.

Table B5-1

| $i_1$ Index | Including $\mathbf{X}^{(p)}$ relationship $i_3$ Index | | | |
|---|---|---|---|---|
| | 0 | 1 | 2 | 3 |
| 0 | $\mathbf{X}^{(0)}$ | $\mathbf{X}^{(4)}$ | $\mathbf{X}^{(8)}$ | $\mathbf{X}^{(12)}$ |
| 1 | $\mathbf{X}^{(1)}$ | $\mathbf{X}^{(5)}$ | $\mathbf{X}^{(9)}$ | $\mathbf{X}^{(13)}$ |
| 2 | $\mathbf{X}^{(2)}$ | $\mathbf{X}^{(6)}$ | $\mathbf{X}^{(10)}$ | $\mathbf{X}^{(14)}$ |
| 3 | $\mathbf{X}^{(3)}$ | $\mathbf{X}^{(7)}$ | $\mathbf{X}^{(11)}$ | $\mathbf{X}^{(15)}$ |

The $i_3$ is used to determine, together with the $i_1$, a DFT vector range for vector selection and may include two parts, namely $i_3(1)$ and $i_3(2)$.

For the code word under rank 1, $i_3(1)$ is used to represent a DFT vector selection matrix $X^{Pi_3(1)}$ of the vector $v_0^{'}$ based on $i_1$; and $i_3(2)$ is used to represent a DFT vector selection matrix $X^{Pi_3(2)}$ of the vector $v_1^{'}$ based on $i_1$.

For the code word under rank 2, $i_3(1)$ is used to represent a DFT vector selection matrix $X^{Pi_3(1)}$ of the vectors $v_0^{'}$ and $v_1^{'}$ based on $i_1$; and $i_3(2)$ is used to represent a DFT vector selection matrix $X^{Pi_3(2)}$ of the vectors $v_2^{'}$ and $v_3^{'}$ based on $i_1$.

The $i_2$ may be used for indicating information of the column vectors extracted from the $X^{(p)}$ and may include phase $\beta$ information. The $i_2$ may include two parts. $i_2^{(1)}$ is used to represent a column vector extracted based on $i_1$ and $i_3(1)$ selection matrix $X^{Pi_3(1)}$; and $i_2(2)$ is used to represent a column vector extracted based on $i_1$ and $i_3(1)$ selection matrix $X^{Pi_3(2)}$.

For the rank 1, the corresponding relationship among $i_2(1)$, $i_2(2)$ and $\beta$ is as shown in a Table B5-2.

Table B5-2

| Index | 0 | 1 | 2 | 3 |
|---|---|---|---|---|
| $i_2(1)$ | $\tilde{\mathbf{e}}_1$ | $\tilde{\mathbf{e}}_2$ | $\tilde{\mathbf{e}}_3$ | $\tilde{\mathbf{e}}_4$ |
| $i_2(2)$ | $\tilde{\mathbf{e}}_1$ | $\tilde{\mathbf{e}}_2$ | $\tilde{\mathbf{e}}_3$ | $\tilde{\mathbf{e}}_4$ |
| $\beta$ | 1 | i | -1 | -j |

For the rank 2: $C_{i_2(1)} = \left\{ \begin{bmatrix} Y_1 \\ Y_1' \end{bmatrix} \begin{bmatrix} Y_1 \\ jY_1' \end{bmatrix} \right\}$ $C_{i_2(2)} = \left\{ \begin{bmatrix} Y_2 \\ -Y_2' \end{bmatrix} \begin{bmatrix} Y_2 \\ -jY_2' \end{bmatrix} \right\}$

$$(\mathbf{Y}_1,\mathbf{Y}_1^{'}),(\mathbf{Y}_2,\mathbf{Y}_2^{'}) \in \left\{ \left(\tilde{\mathbf{e}}_1,\tilde{\mathbf{e}}_1\right),\left(\tilde{\mathbf{e}}_2,\tilde{\mathbf{e}}_2\right),\left(\tilde{\mathbf{e}}_3,\tilde{\mathbf{e}}_3\right),\left(\tilde{\mathbf{e}}_4,\tilde{\mathbf{e}}_4\right),\left(\tilde{\mathbf{e}}_1,\tilde{\mathbf{e}}_2\right),\left(\tilde{\mathbf{e}}_2,\tilde{\mathbf{e}}_3\right),\left(\tilde{\mathbf{e}}_1,\tilde{\mathbf{e}}_4\right),\left(\tilde{\mathbf{e}}_2,\tilde{\mathbf{e}}_4\right) \right\}$$

Where, $e_l$ is an $l$ th column in a unit matrix and indicates to extract the I th column from the matrix $X^{(p)}$ to serve as a DFT vector of a matrix **U.**

It is assumed that the code word selected by the UE is a code cord under rank 2, and the UE may select a value of $i_1$ to be $i_1$=1 according to a channel measurement information result. Then, an act is carried out to select $i_3$ and respectively select values of the $i_3(1)$ and $i_3(2)$, the UE may select $i_3(1)$=1 and $i_3(2)$=2 according to the channel measurement result. The selected $X^{(p1)}$ and $X^{(p2)}$ are finally determined according to the results of $i_1$ and $i_3$. Thereafter, $i_2$ may be selected and $i_2(1)$=1 and $i_2(2)$ =3 are selected.

At this moment, the UE may report RI=2 and report the PMI information **I,** *J* of the selected code word. Herein, reported information of **I** may include $i_1$=1, and reported information of *J* may include $i_3(1)$=1, $i_3(2)$=2, $i_2(1)$=1 and $i_2(2)$=3.

Alternatively, the UE may report the PMI information **I,** *J* of the selected code word. Herein, reported information of I may include $i_1$=1, $i_3(1)$=1 and $i_3(2)$=2, and reported information of *J* may include $i_2(1)$=1 and $i_2(2)$=3.

**Sixth embodiment**

The eNB is provided with sixteen antennas and the UE is provided with two receiving antennas. The eNB may send a channel state measurement pilot frequency of 16Tx to the UE, and the UE may perform a channel measurement according to the received measurement pilot frequency and may feed back the CSI information including PMI information to the eNB.

The codebook structure of the 16Tx under ranks 1-2 is as follows.

$$U_1 = \begin{bmatrix} v_0 \\ \beta v_1 \end{bmatrix} \qquad U_2 = \begin{bmatrix} v_0 & v_2 \\ \beta v_1 & -\beta v_3 \end{bmatrix}$$

A certain adjustment is made for the above Formula, and the common factors are extracted out to obtain:

$$U'_1 = \frac{1}{4}\begin{bmatrix} v'_0 \\ \beta v'_1 \end{bmatrix} \qquad U'_2 = \frac{1}{4\sqrt{2}}\begin{bmatrix} v'_0 & v'_2 \\ \beta v'_1 & -\beta v'_3 \end{bmatrix}$$

In the code word, $v_0^{'}$, $v_1^{'}$, $v_2^{'}$ and $v_3^{'}$ are all DFT vectors and are column vectors extracted from a matrix **B,** where the matrix **B** is defined as follows.

$$\mathbf{B} = \begin{bmatrix} \mathbf{b}_0 & \mathbf{b}_1 & \cdots & \mathbf{b}_{31} \end{bmatrix} \quad , \quad \left[\mathbf{B}\right]_{1+m,1+n} = e^{j\frac{2\pi mn}{32}} , \quad m = 0,1,\cdots,7, n = 0,1,\cdots,31$$

$$\mathbf{X}^{(p)} \in \left\{ \begin{bmatrix} \mathbf{b}_{k \bmod 32} & \mathbf{b}_{(k+8) \bmod 32} & \mathbf{b}_{(k+16) \bmod 32} & \mathbf{b}_{(k+24) \bmod 32} \end{bmatrix} : p = 0,1,\cdots,15 \right\}$$

The $i_1$ may be used for indicating information about a range to extract the DFT vectors in $v_0^{'}$, $v_1^{'}$, $v_2^{'}$ and $v_3^{'}$. The corresponding relationship between $i_1$ and $X^{(p)}$ is as shown in a Table B6-1.

Table B6-1

| $i_1$ Index | Including $\mathbf{X}^{(p)}$ relationship $i_3$ Index | | | |
|---|---|---|---|---|
| | 0 | 1 | 2 | 3 |
| 0 | $\mathbf{X}^{(0)}$ | $\mathbf{X}^{(1)}$ | $\mathbf{X}^{(2)}$ | $\mathbf{X}^{(3)}$ |
| 1 | $\mathbf{X}^{(4)}$ | $\mathbf{X}^{(5)}$ | $\mathbf{X}^{(6)}$ | $\mathbf{X}^{(7)}$ |

(continued)

| $i_1$ Index | Including $\mathbf{X}^{(p)}$ relationship $i_3$ Index | | | |
|---|---|---|---|---|
| | 0 | 1 | 2 | 3 |
| 2 | $\mathbf{X}^{(8)}$ | $\mathbf{X}^{(9)}$ | $\mathbf{X}^{(10)}$ | $\mathbf{X}^{(11)}$ |
| 3 | $\mathbf{X}^{(12)}$ | $\mathbf{X}^{(13)}$ | $\mathbf{X}^{(14)}$ | $\mathbf{X}^{(15)}$ |

The $i_3$ is used to determine, together with the $i_1$, a DFT vector range for vector selection and may include two parts, namely $i_3(1)$ and $i_3(2)$. The $i_2$ may be used for indicating information of the column vectors extracted from the $X^{(p)}$ and may include phase $\beta$ information.

For the code word under rank 1, $i_3(1)$ is used to represent a DFT vector selection matrix $X^{Pi_3(1)}$ of the vector $v_0^{'}$ based on $i_1$; and $i_3(2)$ is used to represent a DFT vector selection matrix $X^{Pi_3(2)}$ of the vector $v_1^{'}$ based on $i_1$.

For the code word under rank 2, $i_3(1)$ is used to represent a DFT vector selection matrix $X^{Pi_3(1)}$ of the vectors $v_0^{'}$ and $v_2^{'}$ based on $i_1$; and $i_3(2)$ is used to represent a DFT vector selection matrix $X^{Pi_3(2)}$ of the vectors $v_1^{'}$ and $v_3^{'}$ based on $i_1$.

The $i_2$ is represented as follows.

For the rank 1: $C_2=\left\{\begin{bmatrix}\mathbf{Y}\\\mathbf{Y}\end{bmatrix},\begin{bmatrix}\mathbf{Y}\\j\mathbf{Y}\end{bmatrix},\begin{bmatrix}\mathbf{Y}\\-\mathbf{Y}\end{bmatrix},\begin{bmatrix}\mathbf{Y}\\-j\mathbf{Y}\end{bmatrix}\right\}$, $Y \in \{\tilde{e}_1,\tilde{e}_2,\tilde{e}_3,\tilde{e}_4\}$

For the rank 2: $C_2=\left\{\begin{bmatrix}\mathbf{Y}_1 & \mathbf{Y}_2\\\mathbf{Y}_1 & -\mathbf{Y}_2\end{bmatrix},\begin{bmatrix}\mathbf{Y}_1 & \mathbf{Y}_2\\j\mathbf{Y}_1 & -j\mathbf{Y}_2\end{bmatrix}\right\}$,

$$(\mathbf{Y}_1,\mathbf{Y}_2)\in\left\{\left(\tilde{\mathbf{e}}_1,\tilde{\mathbf{e}}_1\right),\left(\tilde{\mathbf{e}}_2,\tilde{\mathbf{e}}_2\right),\left(\tilde{\mathbf{e}}_3,\tilde{\mathbf{e}}_3\right),\left(\tilde{\mathbf{e}}_4,\tilde{\mathbf{e}}_4\right),\left(\tilde{\mathbf{e}}_1,\tilde{\mathbf{e}}_2\right),\left(\tilde{\mathbf{e}}_2,\tilde{\mathbf{e}}_3\right),\left(\tilde{\mathbf{e}}_1,\tilde{\mathbf{e}}_4\right),\left(\tilde{\mathbf{e}}_2,\tilde{\mathbf{e}}_4\right)\right\}$$

Where, $e_l$ is an $l$ th column in a unit matrix and indicates to extract the $l$ th column from the matrix $X^{(p)}$ to serve as a DFT vector of a matrix **U.**

It is assumed that the code word selected by the UE is a code cord under rank 2, the UE may select a value of $i_1$ to be $i_1$=1 according to a channel measurement information result. Then, an act is carried out to select $i_3$ and respectively select values of the $i_3(1)$ and $i_3(2)$, the UE may select $i_3(1)$=1 and $i_3(2)$=2 according to the channel measurement result. The $X^{(p_1)}$ and $X^{(p_2)}$ are finally determined according to the results of $i_1$ and $i_3$. And $i_2$=0 may be selected.

At this moment, the UE may report RI=2 and report the PMI information **I,** *J* of the selected code word. Herein, reported information of **I** may include $i_1$=1, and reported information of *J* may include $i_3(1)$=1, $i_3(2)$ =2 and $i_2$=0.

Alternatively, the UE may report the PMI information **I,** *J* of the selected code word. Herein, reported information of I may include $i_1$=1, $i_3(1)$=1 and $i_3(2)$=2, and reported information of *J* may include $i_2$=0.

**Seventh embodiment**

The eNB is provided with sixteen antennas and the UE is provided with two receiving antennas. The eNB may send a channel state measurement pilot frequency of 16Tx to the UE, and the UE may perform a channel measurement according to the received measurement pilot frequency and may feed back the CSI information including PMI information to the eNB.

The codebook structure of the 16Tx under ranks 1-2 is as follows.

$$U_1=\begin{bmatrix}v_0\\\beta v_1\end{bmatrix}\qquad U_2=\begin{bmatrix}v_0 & v_2\\\beta v_1 & -\beta v_3\end{bmatrix}$$

A certain adjustment is made for the above Formula, and the common factors are extracted out to obtain:

$$U'_1 = \frac{1}{4}\begin{bmatrix} v'_0 \\ \beta v'_1 \end{bmatrix} \qquad U'_1 = \frac{1}{4}\begin{bmatrix} v'_0 \\ \beta v'_1 \end{bmatrix}$$

In the code word, $v_0^{'}$, $v_1^{'}$, $v_2^{'}$ and $v_3^{'}$ are all DFT vectors and are column vectors extracted from a matrix **B,** where the matrix **B** is defined as follows.

$$\mathbf{B} = \begin{bmatrix} \mathbf{b}_0 & \mathbf{b}_1 & \cdots & \mathbf{b}_{31} \end{bmatrix} \quad , \quad \left[\mathbf{B}\right]_{1+m,1+n} = e^{j\frac{2\pi mn}{32}}, \quad m = 0,1,\cdots,7, n = 0,1,\cdots,31$$

$$\mathbf{X}^{(p)} \in \left\{ \begin{bmatrix} \mathbf{b}_{2k \bmod 32} & \mathbf{b}_{(2k+1) \bmod 32} & \mathbf{b}_{(2k+2) \bmod 32} & \mathbf{b}_{(2k+3) \bmod 32} \end{bmatrix} : p = 0,1,\cdots,15 \right\}$$

The $i_1$ may be used for indicating information about a range to extract the DFT vectors in $v_0^{'}$, $v_1^{'}$, $v_2^{'}$ and $v_3^{'}$. The corresponding relationship between $i_1$ and $X^{(p)}$ is as shown in a Table B7-1.

Table B7-1

| $i_1$ Index | Including $\mathbf{X}^{(p)}$ relationship $i_3$ Index | | | |
|---|---|---|---|---|
| | 0 | 1 | 2 | 3 |
| 0 | $\mathbf{X}^{(0)}$ | $\mathbf{X}^{(4)}$ | $\mathbf{X}^{(8)}$ | $\mathbf{X}^{(12)}$ |
| 1 | $\mathbf{X}^{(1)}$ | $\mathbf{X}^{(5)}$ | $\mathbf{X}^{(9)}$ | $\mathbf{X}^{(13)}$ |
| 2 | $\mathbf{X}^{(2)}$ | $\mathbf{X}^{(6)}$ | $\mathbf{X}^{(10)}$ | $\mathbf{X}^{(14)}$ |
| 3 | $\mathbf{X}^{(3)}$ | $\mathbf{X}^{(7)}$ | $\mathbf{X}^{(11)}$ | $\mathbf{X}^{(15)}$ |

The $i_3$ is used to determine, together with the $i_1$, a DFT vector range for vector selection and may include two parts, namely $i_3(1)$ and $i_3(2)$. The $i_2$ may be used for indicating information of the column vectors extracted from the $X^{(p)}$.

For the code word under rank 1, $i_3(1)$ is used to represent a DFT vector selection matrix $X^{Pi_3(1)}$ of the vector $v_0^{'}$ based on $i_1$; and $i_3(2)$ is used to represent a DFT vector selection matrix $X^{Pi_3(2)}$ of the vector $v_1^{'}$ based on $i_1$.

For the code word under rank 2, $i_3(1)$ is used to represent a DFT vector selection matrix $X^{Pi_3(1)}$ of the vectors $v_0^{'}$ and $v_1^{'}$ based on $i_1$; and $i_3(2)$ is used to represent a DFT vector selection matrix $X^{Pi_3(2)}$ of the vectors $v_2^{'}$ and $v_3^{'}$ based on $i_1$.

The relationship between $i_3(1)$ and $i_3(2)$ is as shown in a Table B7-2.

Table B7-2

| Index | 0 | 1 | 2 | 3 |
|---|---|---|---|---|
| $i_3(1)$ | 1 | 2 | 3 | 4 |
| $i_3(2)$ | 2 | 3 | 4 | 1 |

The $i_2$ is represented as follows.

For the rank 1: $C_2 = \left\{ \begin{bmatrix} \mathbf{Y} \\ \mathbf{Y} \end{bmatrix}, \begin{bmatrix} \mathbf{Y} \\ j\mathbf{Y} \end{bmatrix}, \begin{bmatrix} \mathbf{Y} \\ -\mathbf{Y} \end{bmatrix}, \begin{bmatrix} \mathbf{Y} \\ -j\mathbf{Y} \end{bmatrix} \right\}$, $Y \in \{\tilde{e}_1, \tilde{e}_2, \tilde{e}_3, \tilde{e}_4\}$

For the rank 2: $C_2 = \left\{ \begin{bmatrix} \mathbf{Y}_1 & \mathbf{Y}_2 \\ \mathbf{Y}_1 & -\mathbf{Y}_2 \end{bmatrix}, \begin{bmatrix} \mathbf{Y}_1 & \mathbf{Y}_2 \\ j\mathbf{Y}_1 & -j\mathbf{Y}_2 \end{bmatrix} \right\}$,

$$(\mathbf{Y}_1,\mathbf{Y}_2)\in\left\{\left(\tilde{\mathbf{e}}_1,\tilde{\mathbf{e}}_1\right),\left(\tilde{\mathbf{e}}_2,\tilde{\mathbf{e}}_2\right),\left(\tilde{\mathbf{e}}_3,\tilde{\mathbf{e}}_3\right),\left(\tilde{\mathbf{e}}_4,\tilde{\mathbf{e}}_4\right),\left(\tilde{\mathbf{e}}_1,\tilde{\mathbf{e}}_2\right),\left(\tilde{\mathbf{e}}_2,\tilde{\mathbf{e}}_3\right),\left(\tilde{\mathbf{e}}_1,\tilde{\mathbf{e}}_4\right),\left(\tilde{\mathbf{e}}_2,\tilde{\mathbf{e}}_4\right)\right\}$$

Where, $e_l$ is an $l$ th column in a unit matrix and indicates to extract the l th column from the matrix $X^{(p)}$ to serve as a DFT vector of a matrix **U.**

The UE may select a value of $i_1$ to be $i_1$=1 according to a channel measurement information result. Then, an act is carried out to select $i_3$, as there exists a fixed relationship between the $i_3(1)$ and $i_3(2)$, the UE may only need to report a common index and may select $i_3$=2 according to the channel measurement result. The selected $X^{(p1)}$ and $X^{(p2)}$ are finally determined according to the results of $i_1$ and $i_3$. Thereafter, $i_2$ may be selected.

It is assumed that the code word selected by the UE is a code word under rank 2, and the $i_2$ =3 may be selected.

At this moment, the UE may report RI=2 and report the PMI information **I,** *J* of the selected code word. Herein, reported information of **I** may include $i_1$=1, and reported information of *J* may include $i_3$=2 and $i_2$=3.

## Eighth embodiment

The eNB is provided with sixteen antennas and the UE is provided with two receiving antennas. The eNB may send a channel state measurement pilot frequency of 16Tx to the UE, and the UE may perform a channel measurement according to the received measurement pilot frequency and may feed back the CSI information including PMI information to the eNB.

The codebook structure of the 16Tx under ranks 1-2 is as follows.

$$U_1=\begin{bmatrix} v_0 \\ \beta v_1 \end{bmatrix} \qquad U_2=\begin{bmatrix} v_0 & v_2 \\ \beta v_1 & -\beta v_3 \end{bmatrix}$$

A certain adjustment is made for the above Formula, and the common factors are extracted out to obtain:

$$U'_1=\frac{1}{4}\begin{bmatrix} v'_0 \\ \beta v'_1 \end{bmatrix} \qquad U'_2=\frac{1}{4\sqrt{2}}\begin{bmatrix} v'_0 & v'_2 \\ \beta v'_1 & -\beta v'_3 \end{bmatrix}$$

In the code word, $v'_0$, $v'_1$, $v'_2$ and $v'_3$ are all DFT vectors and are column vectors extracted from a matrix **B,** where the matrix **B** is defined as follows.

$$\mathbf{B}=\begin{bmatrix}\mathbf{b}_0 & \mathbf{b}_1 & \cdots & \mathbf{b}_{31}\end{bmatrix} \quad , \quad \left[\mathbf{B}\right]_{1+m,1+n}=e^{j\frac{2\pi mn}{32}}, \quad m=0,1,\cdots,7, n=0,1,\cdots,31$$

$$\mathbf{X}^{(p)}\in\left\{\begin{bmatrix}\mathbf{b}_{2k \bmod 32} & \mathbf{b}_{(2k+1)\bmod 32} & \mathbf{b}_{(2k+2)\bmod 32} & \mathbf{b}_{(2k+3)\bmod 32}\end{bmatrix}: p=0,1,\cdots,15\right\}$$

The $i_1$ may be used for indicating information about a range to extract the DFT vectors in $v'_0$, $v'_1$, $v'_2$ and $v'_3$. The corresponding relationship between $i_1$ and $X^{(p)}$ is as shown in a Table B8-1.

Table B8-1

| $i_1$ Index | Including $\mathbf{X}^{(p)}$ relationship $i_3$ Index | | | |
|---|---|---|---|---|
| | 0 | 1 | 2 | 3 |
| 0 | $\mathbf{X}^{(0)}$ | $\mathbf{X}^{(4)}$ | $\mathbf{X}^{(8)}$ | $\mathbf{X}^{(12)}$ |
| 1 | $\mathbf{X}^{(1)}$ | $\mathbf{X}^{(5)}$ | $\mathbf{X}^{(9)}$ | $\mathbf{X}^{(13)}$ |
| 2 | $\mathbf{X}^{(2)}$ | $\mathbf{X}^{(6)}$ | $\mathbf{X}^{(10)}$ | $\mathbf{X}^{(14)}$ |
| 3 | $\mathbf{X}^{(3)}$ | $\mathbf{X}^{(7)}$ | $\mathbf{X}^{(11)}$ | $\mathbf{X}^{(15)}$ |

The $i_3$ is used to determine,, a DFT vector range for vector selection and may include two parts, namely $i_3(1)$ and $i_3(2)$, both of which having the same meaning with the foregoing embodiments. The $i_2$ may be used for indicating information of the column vectors extracted from the $X^{(p)}$ and may be divided into two parts, namely $i_2(1)$ and $i_2(2)$. $i_2(1)$ is used to represent a column vector extracted based on $i_1$ and $i_3(1)$ selection matrix $X^{Pi_3(1)}$, and $i_2(2)$ is used to represent a column vector extracted based on $i_1$ and $i_3(2)$ selection matrix $X^{Pi_3(2)}$.

The relationship between $i_2(1)$ and $i_2(2)$ is as shown in a Table B8-2.

Table 8-2

Table B8-2

| Index | 0 | 1 | 2 | 3 |
|---|---|---|---|---|
| $i_2(1)$ | 1 | 2 | 3 | 4 |
| $i_2(2)$ | 3 | 4 | 1 | 2 |

The relationship between $i_2^{(1)}$ and $i_2(2)$ under rank 1 is as shown in a Table B8-3.

Table B8-3

| Index | 0 | 1 | 2 | 3 |
|---|---|---|---|---|
| $i_2(1)$ | $\tilde{\mathbf{e}}_1$ | $\tilde{\mathbf{e}}_2$ | $\tilde{\mathbf{e}}_3$ | $\tilde{\mathbf{e}}_4$ |
| $i_2(2)$ | $\tilde{\mathbf{e}}_3$ | $\tilde{\mathbf{e}}_4$ | $\tilde{\mathbf{e}}_1$ | $\tilde{\mathbf{e}}_2$ |

For the rank 2: $C_{i_2(1)} = \left\{ \begin{bmatrix} Y_1 \\ Y_1' \end{bmatrix} \begin{bmatrix} Y_1 \\ -Y_1' \end{bmatrix} \right\}$ $C_{i_2(2)} = \left\{ \begin{bmatrix} Y_2 \\ -Y_2' \end{bmatrix} \begin{bmatrix} Y_2 \\ -jY_2' \end{bmatrix} \right\}$

$$(\mathbf{Y}_1, \mathbf{Y}_1'), (\mathbf{Y}_2, \mathbf{Y}_2') \in \left\{ (\tilde{\mathbf{e}}_1, \tilde{\mathbf{e}}_1), (\tilde{\mathbf{e}}_2, \tilde{\mathbf{e}}_2), (\tilde{\mathbf{e}}_3, \tilde{\mathbf{e}}_3), (\tilde{\mathbf{e}}_4, \tilde{\mathbf{e}}_4), (\tilde{\mathbf{e}}_1, \tilde{\mathbf{e}}_2), (\tilde{\mathbf{e}}_2, \tilde{\mathbf{e}}_3), (\tilde{\mathbf{e}}_1, \tilde{\mathbf{e}}_4), (\tilde{\mathbf{e}}_2, \tilde{\mathbf{e}}_4) \right\}$$

Where, $e_l$ is an $l$ th column in a unit matrix and indicates to extract the $l$ th column from the matrix $X^{(p)}$ to serve as a DFT vector of a matrix **U.**

The UE may select a value of $i_1$ to be $i_1$=1 according to a channel measurement information result. Then, an act is carried out to select $i_3$, $i_3(1)$=0 and $i_3(2)$ =1 are selected. The UE finally determines the selected $X^{(p_1)}$ and $X^{(p_2)}$ according to the results of $i_1$ and $i_3$. And then, an act is carried out to select $i_2$, as the relationship between $i_2(1)$ and $i_2(2)$ is determined, the UE may only need to report a common index.

It is assumed that the code word selected by the UE is a code word under rank 2, and the $i_2$=3 may be selected.

At this moment, the UE may report RI=2 and report the PMI information I, *J* of the selected code word. Herein, reported information of I may include $i_1$=1, and reported information of *J* may include $i_3(1)$=0, $i_3(2)$=1 and $i_2$=3.

## Ninth embodiment

The eNB is provided with sixteen antennas and the UE is provided with two receiving antennas. The eNB may send a channel state measurement pilot frequency of 16Tx to the UE, and the UE may perform a channel measurement according to the received measurement pilot frequency and may feed back the CSI information including PMI information to the eNB.

The codebook structure of the 16Tx under rank 2 is as follows.

$$U_2 = \begin{bmatrix} v'_0 & v'_4 \\ \alpha v'_1 & \alpha v'_5 \\ \beta v'_2 & -\beta v'_6 \\ \alpha\beta v'_3 & -\alpha\beta v'_7 \end{bmatrix}$$

In the code word, the $v_0^{'}$, $v_1^{'}$, $v_2^{'}$, $v_4^{'}$, $v_5^{'}$, $v_6^{'}$ and $v_7^{'}$ are all DFT vectors and are column vectors extracted from a matrix B', where B' is defined as follows.

$$\mathbf{B}^{'} = \begin{bmatrix} \mathbf{b}_0 & \mathbf{b}_1 & \cdots & \mathbf{b}_{31} \end{bmatrix} \quad , \quad \left[\mathbf{B}^{'}\right]_{1+m,1+n} = e^{j\frac{2\pi mn}{32}}, \quad m = 0,1,2,3, n = 0,1,\cdots,31$$

$$\mathbf{X}^{(p)} \in \left\{ \begin{bmatrix} \mathbf{b}_{k \bmod 32} & \mathbf{b}_{(k+8) \bmod 32} & \mathbf{b}_{(k+16) \bmod 32} & \mathbf{b}_{(k+24) \bmod 32} \end{bmatrix} : p = 0,1,\cdots,15 \right\}$$

The $i_1$ may be used for indicating information about a range to extract the DFT vectors in the $v_0^{'}$, $v_1^{'}$, $v_2^{'}$, $v_3^{'}$, $v_4^{'}$, $v_5^{'}$, $v_6^{'}$ and $v_7^{'}$. The corresponding relationship between $i_1$ and $X^{(p)}$ is as shown in a Table B9-1.

Table B9-1

| $i_1$ Index | Including $\mathbf{X}^{(p)}$ relationship $i_3$ Index | | | |
|---|---|---|---|---|
| | 0 | 1 | 2 | 3 |
| 0 | $\mathbf{X}^{(0)}$ | $\mathbf{X}^{(1)}$ | $\mathbf{X}^{(2)}$ | $\mathbf{X}^{(3)}$ |
| 1 | $\mathbf{X}^{(4)}$ | $\mathbf{X}^{(5)}$ | $\mathbf{X}^{(6)}$ | $\mathbf{X}^{(7)}$ |
| 2 | $\mathbf{X}^{(8)}$ | $\mathbf{X}^{(9)}$ | $\mathbf{X}^{(10)}$ | $\mathbf{X}^{(11)}$ |
| 3 | $\mathbf{X}^{(12)}$ | $\mathbf{X}^{(13)}$ | $\mathbf{X}^{(14)}$ | $\mathbf{X}^{(15)}$ |

The $i_3$ is used to determine, together with the $i_1$, a DFT vector range for vector selection and may include four parts, namely $i_3(1)$, $i_3(2)$, $i_3(3)$ and $i_3(4)$, where $i_3(1)$ may be used for indicating information on a DFT vector selection matrix $X^{(i_3(1))}$ of the vectors $v_0^{'}$ and $v_4^{'}$ based on $i_1$; $i_3(2)$ may be used for indicating information on a DFT vector selection matrix $X^{(i_3(2))}$ of the vectors $v_1^{'}$ and $v_5^{'}$ based on $i_1$; $i_3(3)$ may be used for indicating information on a DFT vector selection matrix $X^{(i_3(3))}$ of the vectors $v_2^{'}$ and $v_6^{'}$ based on $i_1$; and $i_3(4)$ may be used for indicating information on a DFT vector selection matrix $X^{(i_3(4))}$ of the vectors $v_3^{'}$ and $v_7^{'}$ based on $i_1$.

The $i_2$ may be used for indicating information of the column vectors extracted from the $X^{(p)}$, may have phase $\alpha$ or $\beta$ information and may include four parts. Specifically, $i_2(_1)$ is used to represent a column vector based on $i_1$ and extracted under $i_3(1)$; $i_2(2)$ is used to represent a column vector based on $i_1$ and extracted under $i_3(2)$; $i_2(3)$ is used to represent a column vector based on $i_1$ and extracted under $i_3(3)$; and $i_2(4)$ is used to represent a column vector based on $i_1$ and extracted under $i_3(4)$. When the UE reports the CSI, $i_3(1) = i_3(2)$, $i_3(3) = i_3(4)$ and $i_2(1)=i_2(2)$, $i_2(3)=i_2(4)$ are selected.

For the rank 2:

$$C_2 = \left\{ \begin{bmatrix} \mathbf{Y}_1 & \mathbf{Y}'_1 \\ \mathbf{Y}_2 & \mathbf{Y}'_2 \\ \mathbf{Y}_3 & \mathbf{Y}'_3 \\ \mathbf{Y}_4 & \mathbf{Y}'_4 \end{bmatrix} \begin{bmatrix} \mathbf{Y}_1 & \mathbf{Y}'_1 \\ \mathbf{Y}_2 & \mathbf{Y}'_2 \\ j\mathbf{Y}_3 & -j\mathbf{Y}'_3 \\ j\mathbf{Y}_4 & -j\mathbf{Y}'_4 \end{bmatrix} \begin{bmatrix} \mathbf{Y}_1 & \mathbf{Y}'_1 \\ e^{j\frac{\pi}{4}}\mathbf{Y}_2 & e^{j\frac{\pi}{4}}\mathbf{Y}'_2 \\ \mathbf{Y}_3 & \mathbf{Y}'_3 \\ e^{j\frac{\pi}{4}}\mathbf{Y}_4 & e^{j\frac{\pi}{4}}\mathbf{Y}'_4 \end{bmatrix} \begin{bmatrix} \mathbf{Y}_1 & \mathbf{Y}'_1 \\ e^{j\frac{\pi}{4}}\mathbf{Y}_2 & e^{j\frac{\pi}{4}}\mathbf{Y}'_2 \\ j\mathbf{Y}_3 & -j\mathbf{Y}'_3 \\ j \cdot e^{j\frac{\pi}{4}}\mathbf{Y}_4 & -j \cdot e^{j\frac{\pi}{4}}\mathbf{Y}'_4 \end{bmatrix} \right\}$$

$$(\mathbf{Y}_i, \mathbf{Y}'_i) \in \left\{ (\tilde{\mathbf{e}}_1, \tilde{\mathbf{e}}_1), (\tilde{\mathbf{e}}_2, \tilde{\mathbf{e}}_2), (\tilde{\mathbf{e}}_3, \tilde{\mathbf{e}}_3), (\tilde{\mathbf{e}}_4, \tilde{\mathbf{e}}_4), (\tilde{\mathbf{e}}_1, \tilde{\mathbf{e}}_2), (\tilde{\mathbf{e}}_2, \tilde{\mathbf{e}}_3), (\tilde{\mathbf{e}}_1, \tilde{\mathbf{e}}_4), (\tilde{\mathbf{e}}_2, \tilde{\mathbf{e}}_4) \right\} \; i \in \{1,2,3,4\}$$

Where, $e_l$ is an $l$ th column in a unit matrix.

The UE may select a value of $i_1$ to be $i_1$=0 according to a channel measurement information result. Then, an act is carried out to select $i_3$ and respectively select the values of $i_3(1)$, $i_3(2)$, $i_3(3)$ and $i_3(4)$, the UE may select $i_3(1) = i_3(2)$=2 and $i_3(3)=i_3(4)$=0 according to the channel measurement result. The selected $X^{(P1)}$, $X^{(P2)}$, $X^{(P3)}$ and $X^{(P4)}$ are finally determined according to the results of $i_1$ and $i_3$. Thereafter, $i_2$ may be selected.

It is assumed that the code word selected by the UE is a code word under rank 2, and $i_2(1) = i_2(2)$ =1 and $i_2(3) = i_2(4)$ =0 are selected.

At this moment, the UE may report RI=2 and report the PMI information I, *J* of the selected code word. Herein, reported information of I may include $i_1$=1, and reported information of *J* may include $i_3(1)$=2, $i_3(3)$=0, $i_2(1)$=1 and $i_2(3)$=0.

## Tenth embodiment

The eNB is provided with sixteen antennas and the UE is provided with two receiving antennas. The eNB may send a channel state measurement pilot frequency of 16Tx to the UE, and the UE may perform a channel measurement according to the received measurement pilot frequency and may feed back the CSI information including PMI information to the eNB.

The codebook structure of the 16Tx under rank 1 is as follows.

$$U_1 = \begin{bmatrix} v_0 \\ \alpha v_1 \\ \beta v_2 \\ \alpha\beta v_3 \end{bmatrix}$$

In the code word, the $v_0$, $v_1$, $v_2$ and $v_3$ are all DFT vectors and are column vectors extracted from a matrix **B**, where **B'** is defined as follows.

$$\mathbf{B}' = \begin{bmatrix} \mathbf{b}_0 & \mathbf{b}_1 & \cdots & \mathbf{b}_{31} \end{bmatrix} \quad , \quad \left[\mathbf{B}'\right]_{1+m,1+n} = e^{j\frac{2\pi mn}{32}}, \quad m = 0,1,2,3, n = 0,1,\cdots,31$$

$$\mathbf{X}^{(p)} \in \left\{ \begin{bmatrix} \mathbf{b}_{k \bmod 32} & \mathbf{b}_{(k+8) \bmod 32} & \mathbf{b}_{(k+16) \bmod 32} & \mathbf{b}_{(k+24) \bmod 32} \end{bmatrix} : p = 0,1,\cdots,15 \right\}$$

The $i_1$ may be used for indicating information about a range to extract the DFT vectors in the $v_0$, $v_1$, $v_2$ and $v_3$. The corresponding relationship between $i_1$ and $\mathbf{X}^{(p)}$ is as shown in a Table B10-1.

Table B10-1

| $i_1$ Index | Including $\mathbf{X}^{(p)}$ relationship $i_3$ Index | | | |
|---|---|---|---|---|
| | 0 | 1 | 2 | 3 |
| 0 | $\mathbf{X}^{(0)}$ | $\mathbf{X}^{(1)}$ | $\mathbf{X}^{(2)}$ | $\mathbf{X}^{(3)}$ |
| 1 | $\mathbf{X}^{(4)}$ | $\mathbf{X}^{(5)}$ | $\mathbf{X}^{(6)}$ | $\mathbf{X}^{(7)}$ |
| 2 | $\mathbf{X}^{(8)}$ | $\mathbf{X}^{(9)}$ | $\mathbf{X}^{(10)}$ | $\mathbf{X}^{(11)}$ |
| 3 | $\mathbf{X}^{(12)}$ | $\mathbf{X}^{(13)}$ | $\mathbf{X}^{(14)}$ | $\mathbf{X}^{(15)}$ |

The $i_3$ is used to determine, together with the $i_1$, a DFT vector range for vector selection and may include two parts, namely $i_3(1)$ and $i_3(2)$. Specifically, $i_3(1)$ may be used for indicating information on a DFT vector selection matrix $X^{(i_3(1))}$ of the vectors $v_0$ and $v_1$ based on $i_1$ ; and $i_3(2)$ may be used for indicating information on a DFT vector selection matrix $X^{(i_3(2))}$ of the vectors $v_2$ and $v_3$ based on $i_1$.

The $i_2$ may be used for indicating information of the column vectors extracted from the $\mathbf{X}^{(p)}$ and may have phase $\alpha$ or $\beta$ information.

$$C_2 = \left\{ \begin{bmatrix} Y_1 \\ Y_1 \\ Y_2 \\ Y_2 \end{bmatrix} \begin{bmatrix} Y_1 \\ Y_1 \\ jY_2 \\ jY_2 \end{bmatrix} \begin{bmatrix} Y \\ jY_1 \\ Y_2 \\ jY_2 \end{bmatrix} \begin{bmatrix} Y \\ jY_1 \\ -Y_2 \\ -jY_2 \end{bmatrix} \right\}$$

$$(Y_1, Y_2) \in \{(e_1, e_2) \quad (e_2, e_3) \quad (e_1, e_4) \quad (e_2, e_4)\} \;\; i \in \{1 \quad 2 \quad 3 \quad 4\}$$

Where, $e_l$ is an $l$ th column in a unit matrix.

The UE may select a value of $i_1$ to be $i_1$ =0 according to a channel measurement information result. Then, an act is carried out to select $i_3$ and respectively select the values of the $i_3(1)$ and $i_3(2)$, the UE may select $i_3(1)$=2 and $i_3(2)$=0 according to the channel measurement result. The selected $X^{(p_1)}$ and $X^{(p_2)}$ are finally determined according to the results of $i_1$ and $i_3$. Thereafter, the $i_2$ =1 may be selected.

At this moment, the UE may report RI=1 and report the PMI information I, $J$ of the selected code word. Herein, reported information of I may include $i_1$ =0, and reported information of $J$ may include $i_3(1)$ =2, $i_3(2)$ =0 and $i_2$ =1.

### Eleventh embodiment

The eNB is provided with sixteen antennas and the UE is provided with two receiving antennas. The eNB may send a channel state measurement pilot frequency of 16Tx to the UE, and the UE may perform a channel measurement according to the received measurement pilot frequency and may feed back the CSI information including PMI information to the eNB.

The codebook structure of the 16Tx under rank 1 is as follows.

$$U_1 = \begin{bmatrix} v_0 \\ \alpha v_1 \\ \beta v_2 \\ \alpha\beta v_3 \end{bmatrix}$$

In the code word, $v_0$, $v_1$, $v_2$ and $v_3$ are all DFT vectors and are column vectors extracted from a matrix **B'**, where **B'** is defined as follows.

$$\mathbf{B}' = \begin{bmatrix} \mathbf{b}_0 & \mathbf{b}_1 & \cdots & \mathbf{b}_{31} \end{bmatrix} \quad , \quad \left[\mathbf{B}'\right]_{1+m,1+n} = e^{j\frac{2\pi mn}{32}}, \quad m = 0,1,2,3, n = 0,1,\cdots,31$$

$$\mathbf{X}^{(p)} \in \left\{ \begin{bmatrix} \mathbf{b}_{k \bmod 32} & \mathbf{b}_{(k+8) \bmod 32} & \mathbf{b}_{(k+16) \bmod 32} & \mathbf{b}_{(k+24) \bmod 32} \end{bmatrix} : p = 0,1,\cdots,15 \right\}$$

The $i_1$ may be used for indicating information about a range to extract the DFT vectors in the $v_0$, $v_1$, $v_2$ and $v_3$. The corresponding relationship between $i_1$ and $\mathbf{X}^{(p)}$ is as shown in a Table B11-1.

Table B11-1

| $i_1$ Index | Including $\mathbf{X}^{(p)}$ relationship $i_3$ Index | | | |
|---|---|---|---|---|
| | 0 | 1 | 2 | 3 |
| 0 | $\mathbf{X}^{(0)}$ | $\mathbf{X}^{(1)}$ | $\mathbf{X}^{(2)}$ | $\mathbf{X}^{(3)}$ |
| 1 | $\mathbf{X}^{(4)}$ | $\mathbf{X}^{(5)}$ | $\mathbf{X}^{(6)}$ | $\mathbf{X}^{(7)}$ |
| 2 | $\mathbf{X}^{(8)}$ | $\mathbf{X}^{(9)}$ | $\mathbf{X}^{(10)}$ | $\mathbf{X}^{(11)}$ |
| 3 | $\mathbf{X}^{(12)}$ | $\mathbf{X}^{(13)}$ | $\mathbf{X}^{(14)}$ | $\mathbf{X}^{(15)}$ |

The $i_3$ is used to determine, together with the $i_1$, a DFT vector range for vector selection and may include two parts, namely $i_3(1)$ and $i_3(2)$. Specifically, $i_3(1)$ may be used for indicating information on a DFT vector selection matrix $X^{(i_3(1))}$ of the vectors $v_0$ and $v_1$ based on $i_1$, and $i_3(2)$ may be used for indicating information on a DFT vector selection matrix $X^{(i_3(2))}$ of the vectors $v_2$ and $v_3$ based on $i_1$.

The $i_2$ may be used for indicating information of the column vectors extracted from the $\mathbf{X}^{(p)}$, may have phase $\alpha$ or $\beta$ information and may include two parts, namely $i_2(1)$ and $i_2(2)$. Specifically, $i_2(1)$ indicates a DFT vector selected based on $i_1$ and $i_3(1)$ for the vectors $v_0$ and $v_1$ ; and $i_2(2)$ indicates a DFT vector selected based on $i_3(2)$ for the vectors $v_2$ and $v_3$.

$$C_2 = \left\{ \begin{bmatrix} Y_1 \\ Y'_1 \\ Y_2 \\ Y'_2 \end{bmatrix} \begin{bmatrix} Y_1 \\ Y'_1 \\ jY_2 \\ jY'_2 \end{bmatrix} \begin{bmatrix} Y \\ jY'_1 \\ Y_2 \\ jY'_2 \end{bmatrix} \begin{bmatrix} Y \\ jY'_1 \\ -Y_2 \\ -jY'_2 \end{bmatrix} \right\}$$

$$(\mathbf{Y}_i, \mathbf{Y}'_i) \in \left\{ (\tilde{\mathbf{e}}_1, \tilde{\mathbf{e}}_1), (\tilde{\mathbf{e}}_2, \tilde{\mathbf{e}}_2), (\tilde{\mathbf{e}}_3, \tilde{\mathbf{e}}_3), (\tilde{\mathbf{e}}_4, \tilde{\mathbf{e}}_4), (\tilde{\mathbf{e}}_1, \tilde{\mathbf{e}}_2), (\tilde{\mathbf{e}}_2, \tilde{\mathbf{e}}_3), (\tilde{\mathbf{e}}_1, \tilde{\mathbf{e}}_4), (\tilde{\mathbf{e}}_2, \tilde{\mathbf{e}}_4) \right\} \; i \in \{1,2,3,4\}$$

Where, $e_l$ is an $l$ th column in a unit matrix.

The UE may select a value of $i_1$ to be $i_1$=1 according to a channel measurement information result. Then, an act is carried out to select $i_3$ and respectively select the values of the $i_3(1)$ and $i_3(2)$, the UE may select $i_3(1)$ =2 and $i_3(2)$=0 according to the channel measurement result. The selected $\mathbf{X}^{(p1)}$ and $\mathbf{X}^{(p2)}$ are finally determined according to the results of $i_1$ and $i_3$. Thereafter, $i_2(1)$=5 and $i_2(2)$=1 are selected.

At this moment, the UE may report RI=1 and report the PMI information I, $J$ of the selected code word. Herein, reported information of I may include $i_1$=0, and reported information of $J$ may include $i_3(1)$=0, $i_3(2)$=2, $i_2(1)$=5 and $i_2(2)$=1.

**Twelfth embodiment**

The eNB is provided with sixteen antennas and the UE is provided with two receiving antennas. The eNB may send a channel state measurement pilot frequency of 16Tx to the UE, and the UE may perform a channel measurement according to the received measurement pilot frequency and may feed back the CSI information including PMI information to the eNB.

The codebook structure of the 16Tx under rank 1 is as follows.

$$U_1 = \begin{bmatrix} v_0 \\ \alpha v_1 \\ \beta v_2 \\ \alpha\beta v_3 \end{bmatrix}$$

In the code word, $v_0$, $v_1$, $v_2$ and $v_3$ are all DFT vectors and are column vectors extracted from a matrix **B'**, where **B'** is defined as follows.

$$\mathbf{B}' = \begin{bmatrix} \mathbf{b}_0 & \mathbf{b}_1 & \cdots & \mathbf{b}_{31} \end{bmatrix} \quad , \quad \begin{bmatrix} \mathbf{B}' \end{bmatrix}_{1+m,1+n} = e^{j\frac{2\pi mn}{32}}, \quad m = 0,1,2,3,\ n = 0,1,\cdots,31$$

$$\mathbf{X}^{(p)} \in \left\{ \begin{bmatrix} \mathbf{b}_{k \bmod 32} & \mathbf{b}_{(k+8) \bmod 32} & \mathbf{b}_{(k+16) \bmod 32} & \mathbf{b}_{(k+24) \bmod 32} \end{bmatrix} : p = 0,1,\cdots,15 \right\}$$

The $i_1$ may be used for indicating information about a range to extract the DFT vectors in $v_0$, $v_1$, $v_2$ and $v_3$. The corresponding relationship between $i_1$ and $\mathbf{X}^{(p)}$ is as shown in a Table B12-1.

Table B12-1

| $i_1$ Index | Including $\mathbf{X}^{(p)}$ relationship $i_3$ Index | | | |
|---|---|---|---|---|
| | 0 | 1 | 2 | 3 |
| 0 | $\mathbf{X}^{(0)}$ | $\mathbf{X}^{(1)}$ | $\mathbf{X}^{(2)}$ | $\mathbf{X}^{(3)}$ |
| 1 | $\mathbf{X}^{(4)}$ | $\mathbf{X}^{(5)}$ | $\mathbf{X}^{(6)}$ | $\mathbf{X}^{(7)}$ |
| 2 | $\mathbf{X}^{(8)}$ | $\mathbf{X}^{(9)}$ | $\mathbf{X}^{(10)}$ | $\mathbf{X}^{(11)}$ |
| 3 | $\mathbf{X}^{(12)}$ | $\mathbf{X}^{(13)}$ | $\mathbf{X}^{(14)}$ | $\mathbf{X}^{(15)}$ |

The $i_3$ is used to determine, together with the $i_1$, a DFT vector range for vector selection and may include two parts, namely $i_3(1)$ and $i_3(2)$. Specifically, $i_3(1)$ may be used for indicating information on a DFT vector selection matrix $X^{(i_3(1))}$ of the vectors $v_0$ and $v_1$ based on $i_1$, and $i_3(2)$ may be used for indicating information on a DFT vector selection matrix $X^{(i_3(2))}$ of the vectors $v_2$ and $v_3$ based on $i_1$.

The $i_2$ may be used for indicating information of the column vectors extracted from the $\mathbf{X}^{(p)}$, may have phase $\alpha$ or $\beta$ information and may include two parts, namely $i_2(1)$ and $i_2(2)$. Specifically, $i_2(1)$ indicates a DFT vector selected based on $i_1$ and $i_3(1)$ for the vectors $v_0$ and $v_2$; and $i_2(2)$ indicates a DFT vector selected based on $i_1$ and $i_3(2)$ for the vectors $v_1$ and $v_3$.

$$C_2 = \left\{ \begin{bmatrix} Y_1 \\ Y'_1 \\ Y_2 \\ Y'_2 \end{bmatrix} \begin{bmatrix} Y_1 \\ Y'_1 \\ jY_2 \\ jY'_2 \end{bmatrix} \begin{bmatrix} Y \\ jY'_1 \\ Y_2 \\ jY'_2 \end{bmatrix} \begin{bmatrix} Y \\ jY'_1 \\ -Y_2 \\ -jY'_2 \end{bmatrix} \right\}$$

$$(\mathbf{Y}_i, \mathbf{Y}'_i) \in \left\{ (\tilde{\mathbf{e}}_1, \tilde{\mathbf{e}}_1), (\tilde{\mathbf{e}}_2, \tilde{\mathbf{e}}_2), (\tilde{\mathbf{e}}_3, \tilde{\mathbf{e}}_3), (\tilde{\mathbf{e}}_4, \tilde{\mathbf{e}}_4), (\tilde{\mathbf{e}}_1, \tilde{\mathbf{e}}_2), (\tilde{\mathbf{e}}_2, \tilde{\mathbf{e}}_3), (\tilde{\mathbf{e}}_1, \tilde{\mathbf{e}}_4), (\tilde{\mathbf{e}}_2, \tilde{\mathbf{e}}_4) \right\} \ i \in \{1,2,3,4\}$$

Where, $e_l$ is an $l$ th column in a unit matrix.

The UE may select a value of $i_1$ to be $i_1$=1 according to a channel measurement information result. Then, an act is carried out to select $i_3$ and respectively select the values of the $i_3(1)$ and $i_3(2)$, the UE may select $i_3(1)$ =0 and $i_3(2)$ =2 according to the channel measurement result. The selected $\mathbf{X}^{(p1)}$ and $\mathbf{X}^{(p2)}$ are finally determined according to the results of $i_1$ and $i_3$. Thereafter, $i_2(1)$=5 and $i_2(2)$=1 are selected.

At this moment, the UE may report RI=1 and report the PMI information I, *J* of the selected code word. Herein, reported information of I may include $i_1$=0, and reported information of *J* may include $i_3(1)=0$, $i_3(2)=2$, $i_2(1)=5$ and $i_2(2)=1$.

The codebook obtained by multiplying the code word under rank 1 and the code word under rank 2 by any nonzero plural is equivalent to that before being changed.

The codebook formed after the code word under rank 1 and the code word under rank 2 are subjected to any column transformation, or are multiplied by a constant coefficient, or all code words are jointly subjected to the row transformation is equivalent to that before being transformed.

The codebook formed after any column in the code word under rank 1 and the code word under rank 2 is multiplied by $e^{j\phi}$ is equivalent to that before being transformed, where $\phi$ is any nonzero real number.

In conclusion, the exemplary embodiments of the present disclosure provide a method for feeding back CSI in a multi-input multi-output system. The method may include the following acts.

A UE may obtain codebook index information.

The UE may feed back the CSI including the codebook index information to an eNodeB.

The codebook index information may include: a first type of codebook index set I and a second type of codebook index set *J*. A combination of the first type of index set I and the second type of index set *J* may be used for indicating a precoding matrix **U.** The precoding matrix **U** is an $N_t \times r$ matrix, where $N_t$ represents a total number of ports or a total number of antennas and *r* represents a number of transmission layers. The precoding matrix **U** may be composed of at least $Q \times r$ basic vectors having a dimension of $N_t/Q$, where $Q \geq 2$, $r \geq 1$, and *Q* and r are both positive integers. The basic vectors may be columns extracted from a matrix **B** composed of M columns of $N_t/Q$-dimensional vectors, where M may be a positive integer.

A union of the first type of index set I and the second type of index set *J* may at least include codebook indication information $i_1$, $i_2$ and $i_3$

The codebook indication information $i_1$ may be used for representing selection information of K matrixes $W_{i_11} \cdots W_{i_1k}$, where K may be a positive integer, each column of the K matrixes $W_{i_11} \cdots W_{i_1k}$ may be extracted from column vectors included in the matrix **B.** The codebook indication information $i_3$ may be used for representing a matrix $W_{i_1l}$ selected from the K matrixes. The codebook indication information $i_2$ may be used for representing information of one or more basic vectors extracted from the matrix $W_{i_1l}$ and used to construct the precoding matrix **U.**

Alternatively, the codebook index information may include: a first type of codebook index set I and a second type of codebook index set *J*. A combination of the first type of index set I and the second type of index set *J* may be used for indicating a precoding matrix **U.** A union of the first type of index set I and the second type of index set *J* may at least include codebook indication information $i_1$, $i_2$ and $i_3$. The precoding matrix may meet a model: $\mathbf{U} = W_1 \cdot W_2$, where **U** is an $N_t \times r$ matrix, $N_t$ represents a total number of ports or a total number of antennas and *r* represents a number of transmission layers.

The codebook indication information $i_1$ may be used for representing selection information of K matrixes $W_{i_11} \cdots W_{i_1k}$. The codebook indication information $i_3$ may be used for representing a matrix $W_{i_1l}$ selected from the K matrixes. The codebook indication information $i_1$ and $i_3$ may jointly indicate $W_1$ information. The codebook indication information $i_2$ may be used for representing $W_2$ information. The codebook indication information $i_1$, $i_2$, $i_3$ may jointly determine a precoding code word matrix **U.**

According to the method provided by the exemplary embodiments of the present disclosure, the code word may be not only suitable for the correlated channels, but also suitable for the uncorrelated channels. It may be ensured that the code word may achieve a relatively good performance when the $W_1$ is wrongly selected. Furthermore, when the channel changes slowly in a cycle, the code word may still be changed; and thus, the good adaptability may be achieved.

Fig. 2 is a structure diagram of a device for feeding back CSI in a multi-input multi-output system. The device may include: a first obtaining module 201 and a first sending module 202.

The first obtaining module 201 may be configured to obtain codebook index information.

The first sending module 202 may be configured to feed back the CSI including the codebook index information to an eNodeB.

The codebook index information may include: a first type of codebook index set I and a second type of codebook index set *J*. A combination of the first type of index set I and the second type of index set *J* may be used for indicating a precoding matrix **U.** The precoding matrix **U** is an $N_t \times r$ matrix, where $N_t$ represents a total number of ports or a total number of antennas and *r* represents a number of transmission layers. The precoding matrix **U** may be composed of at

least $Q \times r$ basic vectors having a dimension of $N_t/Q$, where $Q \geq 2$, $r \geq 1$, and $Q$ and r are both positive integers. The basic vectors may be columns extracted from a matrix **B** composed of M columns of $N_t/Q$-dimensional vectors, where M may be a positive integer.

A union of the first type of index set I and the second type of index set $J$ may at least include codebook indication information $i_1$, $i_2$ and $i_3$

The codebook indication information $i_1$ may be used for representing selection information of K matrixes $W_{i_1 1} \cdots W_{i_1 k}$, where K may be a positive integer, each column of the K matrixes $W_{i_1 1} \cdots W_{i_1 k}$ may be extracted from column vectors included in the matrix **B.** The codebook indication information $i_3$ may be used for representing a matrix $W_{i_1 l}$ selected from the K matrixes. The codebook indication information $i_2$ may be used for representing information of one or more basic vectors extracted from the matrix $W_{i_1 l}$ and used to construct the precoding matrix **U.**

In an exemplary embodiment, the precoding matrix **U** may meet a model:

$$\mathbf{U} = \begin{bmatrix} v_0 \\ \beta v_1 \end{bmatrix} \text{ or } \mathbf{U} = \begin{bmatrix} v_0' \\ \alpha v_1' \\ \beta v_2' \\ \alpha\beta v_3' \end{bmatrix} \text{ or } \mathbf{U} = \begin{bmatrix} v_0 & v_2 \\ \beta v_1 & -\beta v_3 \end{bmatrix} \text{ or } \mathbf{U} = \begin{bmatrix} v_0' & v_4' \\ \alpha v_1' & \alpha v_5' \\ \beta v_2' & -\beta v_6' \\ \alpha\beta v_3' & -\alpha\beta v_7' \end{bmatrix},$$

Where vectors $v_0$, $v_1$, $v_2$ and $v_3$ may be vectors having a dimension of $N_t/2 \times 1$, vectors $v_0'$, $v_1'$, $v_2'$, $v_3'$, $v_4'$, $v_5'$, $v_6'$ and $v_7'$ may be vectors having a dimension of $N_t/4 \times 1$, $\alpha = e^{j\theta_1}$, $\beta = e^{j\theta_2}$, where $0 \leq \theta_1 \leq 2\pi$, $0 \leq \theta_2 \leq 2\pi$.

In an exemplary embodiment, the first type of codebook index set I may at least include $i_1$ and $i_3$ information; the second type of codebook index set $J$ may at least include $i_2$ information.

In an exemplary embodiment, the first type of codebook index set I may at least include $i_1$ and $i_2$ information; the second type of codebook index set $J$ may at least include $i_3$ information.

In an exemplary embodiment, the first type of codebook index set I may at least include $i_1$ information; the second type of codebook index set $J$ may at least include $i_2$ and $i_3$ information.

In an exemplary embodiment, the basic vectors composing the precoding matrix **U** may be divided into N1 groups. The codebook indication information $i_3$ may include N1 pieces of sub-information $i_3(1) \cdots i_3(N1)$ $N1 \geq 2$ and may be a positive integer. The codebook indication information $i_3(x)$ may be used for representing information of a matrix $W_{i_1 l_x}$ selected for an $x$ th group of vectors from the K matrixes $W_{i_1 1} \cdots W_{i_1 k}$ indicated by $i_1$, where $2 \leq x \leq N1$.

In an exemplary embodiment, the basic vectors composing the precoding matrix **U** may be divided into N2 groups. The codebook indication information $i_2$ may include N2 pieces of sub-information $i_2(1) \cdots i_2(N2)$ $N2 \geq 2$ ; where $i_2(y)$ may be used for representing information of one or more basic vectors extracted from a matrix $W_{i_1 l_y}$ jointly indicated by $i_1$ and $i_3$ and used to construct the precoding matrix **U,** $2 \leq y \leq N2$.

In an exemplary embodiment, for the codebook model $\mathbf{U} = \begin{bmatrix} v_0' \\ \alpha v_1' \\ \beta v_2' \\ \alpha\beta v_3' \end{bmatrix}$ or $\mathbf{U} = \begin{bmatrix} v_0' & v_4' \\ \alpha v_1' & \alpha v_5' \\ \beta v_2' & -\beta v_6' \\ \alpha\beta v_3' & -\alpha\beta v_7' \end{bmatrix}$, at least one of the codebook indication information $i_1$, $i_2$ and $i_3$ may be further used to represent $\alpha$ information in the codebook model **U.**

In an exemplary embodiment, at least one of the codebook indication information $i_1$, $i_2$ and $i_3$ may be further used to represent $\beta$ information in the codebook model **U**.

In an exemplary embodiment, for the model $\mathbf{U}=\begin{bmatrix} v_0 & v_2 \\ \beta v_1 & -\beta v_3 \end{bmatrix}$, the codebook indication information $i_3$ may include two pieces of sub-information $i_3(1)$ and $i_3(2)$.

In an exemplary embodiment, $i_3(1)$ may be used for representing information of a matrix $w_{i_1 i_3(1)}$ from which vectors $v_0$ and $v_2$ are extracted; and $i_3(2)$ may be used for representing information of a matrix $W_{i_1 i_3(2)}$ from which vectors $v_1$ and $v_3$ are extracted.

In an exemplary embodiment, $i_3(1)$ may be used for representing information of a matrix $W_{i_1 i_3(1)}$ from which vectors $v_0$ and $v_1$ are extracted; and $i_3(2)$ may be used for representing information of a matrix $W_{i_1 i_3(2)}$ from which vectors $v_2$ and $v_3$ are extracted.

In an exemplary embodiment, for the model $$\mathbf{U}=\begin{bmatrix} v_0^{'} \\ \alpha v_1^{'} \\ \beta v_2^{'} \\ \alpha\beta v_3^{'} \end{bmatrix},$$ the codebook indication information $i_3$ may include two pieces of sub-information $i_3(1)$ and $i_3(2)$.

In an exemplary embodiment, $i_3(1)$ may be used for representing information of a matrix $W_{i_1 i_3(1)}$ from which vectors $v_0^{'}$ and $v_1^{'}$ are extracted; and $i_3(2)$ may be used for representing information of a matrix $W_{i_1 i_3(2)}$ from which vectors $v_2^{'}$ and $v_3^{'}$ are extracted.

In an exemplary embodiment, $i_3(1)$ may be used for representing information of a matrix $W_{i_1 i_3(1)}$ from which vectors $v_0^{'}$ and $v_2^{'}$ are extracted; and $i_3(2)$ may be used for representing information of a matrix $W_{i_1 l'}$ for vectors $v_1^{'}$ and $v_3^{'}$.

For the model $$\mathbf{U}=\begin{bmatrix} v_0^{'} & v_4^{'} \\ \alpha v_1^{'} & \alpha v_5^{'} \\ \beta v_2^{'} & -\beta v_6^{'} \\ \alpha\beta v_3^{'} & -\alpha\beta v_7^{'} \end{bmatrix},$$ the codebook indication information $i_3$ may include four pieces of sub-information $i_3(1)$, $i_3(2)$, $i_3(3)$ and $i_3(4)$. Specifically, $i_3(1)$ may be used for representing information of a matrix $W_{i_1 i_3(1)}$ from which vectors $v_0^{'}$ and $v_4^{'}$ are extracted; $i_3(2)$ may be used for representing information of a matrix $W_{i_1 i_3(2)}$ from which vectors $v_1^{'}$ and $v_5^{'}$ are extracted; $i_3(3)$ may be used for representing information of a matrix $W_{i_1 i_3(3)}$ from which vectors $v_2^{'}$ and $v_6^{'}$ are extracted; and $i_3(4)$ may be used for representing information of a matrix $W_{i_1 i_3(4)}$ from which vectors $v_3^{'}$ and $v_7^{'}$ are extracted.

For the model $$\mathbf{U}=\begin{bmatrix} v_0^{'} \\ \alpha v_1^{'} \\ \beta v_2^{'} \\ \alpha\beta v_3^{'} \end{bmatrix},$$ the codebook indication information $i_2$ may include two pieces of sub-infor-

mation $i_2(1)$ and $i_2(2)$.

In the exemplary embodiment, $i_2(1)$ may be used for representing information of a basic vector extracted from the matrix $W_{i_1l}$ for vectors $v_0^{'}$ and $v_1^{'}$; and $i_2(2)$ may be used for representing information of a basic vector extracted from the matrix $W_{i_1l'}$ for vectors $v_2^{'}$ and $v_3^{'}$.

Alternatively, $i_2(1)$ may be used for representing information of a basic vector extracted from the matrix $W_{i_1l}$ for vectors $v_0^{'}$ and $v_2^{'}$; and $i_2(2)$ may be used for representing information of a basic vector extracted from the matrix $W_{i_1l'}$ for vectors $v_1^{'}$ and $v_3^{'}$.

For the model $\mathbf{U}=\begin{bmatrix} v_0 & v_2 \\ \beta v_1 & -\beta v_3 \end{bmatrix}$, the codebook indication information $i_2$ may include two pieces of sub-information $i_2(1)$ and $i_2(2)$.

In an exemplary embodiment, $i_2(1)$ may be used for representing information of a basic vector extracted from the matrix $W_{i_1l}$ for vectors $v_0$ and $v_2$ ; and $i_2(2)$ may be used for representing information of a basic vector extracted from the matrix $W_{i_1l'}$ for vectors $v_1$ and $v_3$.

Alternatively, $i_2(1)$ may be used for representing information of a basic vector extracted from the matrix $W_{i_1l}$ for vectors $v_0$ and $v_1$ ; and $i_2(2)$ may be used for representing information of a basic vector extracted from the matrix $W_{i_1l'}$. for vectors $v_2$ and $v_3$.

For the model $\mathbf{U}=\begin{bmatrix} v_0^{'} & v_4^{'} \\ \alpha v_1^{'} & \alpha v_5^{'} \\ \beta v_2^{'} & -\beta v_6^{'} \\ \alpha\beta v_3^{'} & -\alpha\beta v_7^{'} \end{bmatrix}$, the codebook indication information $i_2$ may include four pieces of sub-information $i_2(1)$, $i_2(2)$, $i_2(3)$ and $i_2(4)$.

In an exemplary embodiment, $i_2(1)$ may be used for representing information of a basic vector extracted from the matrix $W_{i_1l}$ for vectors $v_0^{'}$ and $v_4^{'}$; $i_2(2)$ may be used for representing information of a basic vector extracted from the matrix $W_{i_1l'}$ for vectors $v_1^{'}$ and $v_5^{'}$; $i_2(3)$ may be used for representing information of a basic vector extracted from the matrix $W_{i_1l''}$ for vectors $v_2^{'}$ and $v_6^{'}$; and $i_2(4)$ may be used for representing information of a basic vector extracted from the matrix $W_{i_1l'''}$ for vectors $v_3^{'}$ and $v_7^{'}$.

For the model $\mathbf{U}=\begin{bmatrix} v_0^{'} & v_4^{'} \\ \alpha v_1^{'} & \alpha v_5^{'} \\ \beta v_2^{'} & -\beta v_6^{'} \\ \alpha\beta v_3^{'} & -\alpha\beta v_7^{'} \end{bmatrix}$, the codebook indication information $i_2$ may include four pieces of sub-information $i_2(1)$, $i_2(2)$, $i_2(3)$ and $i_2(4)$.

In an exemplary embodiment, $i_2(1)$ may be used for representing information of a basic vector extracted from the matrix $W_{i_1l}$ for vectors $v_0^{'}$ and $v_1^{'}$; $i_2(2)$ may be used for representing information of a basic vector extracted from the matrix $W_{i_1l'}$ for vectors $v_2^{'}$ and $v_3^{'}$; $i_2(3)$ may be used for representing information of a basic vector extracted from the matrix $W_{i_1l''}$ for vectors $v_4^{'}$ and $v_5^{'}$; and $i_2(4)$ may be used for representing information of a basic vector extracted from the matrix $W_{i_1l'''}$ for vectors $v_6^{'}$ and $v_7^{'}$.

Alternatively, $i_2(1)$ may be used for representing information of a basic vector extracted from the matrix $W_{i_1l}$ for vectors $v_0^{'}$ and $v_2^{'}$; $i_2(2)$ may be used for representing information of a basic vector extracted from the matrix $W_{i_1l'}$ for vectors $v_1^{'}$ and $v_3^{'}$; $i_2(3)$ may be used for representing information of a basic vector extracted from the matrix $W_{i_1l''}$ for vectors $v_4^{'}$ and $v_6^{'}$; and $i_2(4)$ may be used for representing information of a basic vector extracted from the matrix $W_{i_1l'''}$ for vectors $v_5^{'}$ and $v_7^{'}$.

The $i_3(1) \cdots i_3(N1)$ may have a linear relationship. When the CSI is reported, the first sending module 202 may at least report one codebook indication information in $i_3(1) \cdots i_3(N1)$.

The $i_2(1) \cdots i_2(N2)$ may have a linear relationship. When the CSI is reported, the first sending module 202 may at least report one codebook indication information in $i_2(1) \cdots i_2(N2)$.

In an exemplary embodiment, $i_3(1) = i_3(2)$ ; or, as described in the device according to claim 38 or 44, $i_3(1) = i_3(2)$.

In an exemplary embodiment, $i_3(1) = i_3(2) = i_3(3) = i_3(4)$.

In an exemplary embodiment, $i_2(1) = i_2(2)$; or, $i_2(1) = i_2(2)$.

In an exemplary embodiment, $i_2(1) = i_2(2) = i_2(3) = i_2(4)$.

In an exemplary embodiment, the M columns of vectors composing the matrix **B** may be DFT vectors.

According to the device provided by the exemplary embodiments of the present disclosure, the code word may be not only suitable for the correlated channels, but also suitable for the uncorrelated channels. It may be ensured that the code word may achieve a relatively good performance when the $W_1$ is wrongly selected. Furthermore, when the channel changes slowly in a cycle, the code word may still be changed; and thus, the good adaptability may be achieved.

As shown in Fig. 3, the embodiments of the disclosure provide a device for feeding back CSI in a multi-input multi-output system. The device may include: a second obtaining module 301 and a second sending module 302.

The second obtaining module 301 may be configured to obtain codebook index information.

The second sending module 302 may be configured to feed back the CSI including the codebook index information to an eNodeB.

The codebook index information may include: a first type of codebook index set I and a second type of codebook index set *J*. A combination of the first type of index set I and the second type of index set *J* may be used for indicating a precoding matrix **U;** a union of the first type of index set I and the second type of index set *J* may include codebook indication information $i_1$, $i_2$ and $i_1$. The precoding matrix may meet a model: $\mathbf{U} = W_1 \cdot W_2$, where **U** is an $N_t \times r$ matrix, $N_t$ represents a total number of ports or a total number of antennas and *r* represents a number of transmission layers.

The codebook indication information $i_1$ may be used for representing selection information of K matrixes $W_{i_1 1} \cdots W_{i_1 k}$, where K may be a positive integer; $i_3$ may be used for representing a matrix $W_{i_1 l}$ selected from the K matrixes; $i_1$ and $i_3$ may jointly indicate $W_1$ information; $i_2$ may be used for representing $W_2$ information; $i_1$, $i_2$, $i_3$ may jointly determine a precoding code word matrix **U.**

In an exemplary embodiment, the first type of codebook index set I may at least include $i_1$ and $i_3$ information; the second type of codebook index set *J* may at least include $i_2$ information.

In an exemplary embodiment, the first type of codebook index set I may at least include $i_1$ and $i_2$ information; the second type of codebook index set *J* may at least include $i_3$ information.

In an exemplary embodiment, the first type of codebook index set I may at least include $i_1$ information; the second type of codebook index set *J* may at least include $i_2$ and $i_3$ information.

According to the device provided by the exemplary embodiments of the present disclosure, the code word may be not only suitable for the correlated channels, but also suitable for the uncorrelated channels. It may be ensured that the code word may achieve a relatively good performance when the $W_1$ is wrongly selected. Furthermore, when the channel changes slowly in a cycle, the code word may still be changed; and thus, the good adaptability may be achieved.

It should be appreciated understood by those of ordinary skill in the art that all or some of the acts of the foregoing embodiments may be implemented by a computer program flow. The computer program described above may be stored in a computer-readable storage medium. The computer program is executed on a corresponding hardware platform (such as a system, a device, an apparatus, a component, etc.), and when executed, may include one of the acts of the method embodiment or a combination thereof.

In an exemplary embodiment, all or some of the acts of the foregoing embodiments may also be implemented using an integrated circuit. These acts may be individually manufactured into an integrated circuit module, or multiple modules or acts therein are manufactured into a single integrated circuit module.

Each device/functional module/functional unit in the above embodiments may be implemented using a universal computing device, or may be integrated to a single computing device and may also be distributed on a network consisting of multiple computing devices.

If being implemented in form of a software function module and sold or used as an independent product, each device/functional module/functional unit in the above embodiments may be stored in a computer-readable storage medium. The above-mentioned computer-readable storage medium may be a Read-Only Memory (ROM), a magnetic disk or a compact disc.

## Industrial Applicability

In some exemplary embodiments of the present disclosure, the code word may be not only suitable for the correlated channels, but also suitable for the uncorrelated channels. It may be ensured that the code word may achieve a relatively good performance when the $W_1$ is wrongly selected. Furthermore, when the channel changes slowly in a cycle, the code word may still be changed; and thus, the good adaptability may be achieved.

## Claims

**1.** A method for feeding back Channel State Information, CSI, in a multi-input multi-output system, comprising:

feeding back (102), by a User Equipment, UE, CSI comprising codebook index information to an evolved Node B, eNodeB, wherein

the codebook index information comprises: a first type of codebook index set I and a second type of codebook index set $J$ ; a combination of the first type of index set I and the second type of index set $J$ is used for indicating a precoding matrix **U,** and the precoding matrix **U** is an $N_t \times r$ matrix, where $N_t$ represents a total number of ports or a total number of antennas and $r$ represents a number of transmission layers; the precoding matrix **U** is composed of at least $Q \times r$ basic vectors having a dimension of $N_t/Q$, where $Q \geq 2$, $r \geq 1$, and $Q$ and $r$ are both positive integers; the basic vectors are columns extracted from a matrix **B** composed of M columns of $N_t/Q$-dimensional vectors, where M is a positive integer;

a union of the first type of index set I and the second type of index set $J$ comprises codebook indication information $i_1$, $i_2$ and $i_3$;

the codebook indication information $i_1$ is used for representing selection information of K matrixes $W_{i_11} \cdots W_{i_1k}$, where K is a positive integer, each column of the K matrixes $W_{i_11} \cdots W_{i_1k}$ is extracted from column vectors comprised in the matrix **B**; $i_3$ is used for representing a matrix $W_{i_1l}$ selected from the K matrixes; $i_2$ is used for representing information of one or more basic vectors extracted from the matrix $W_{i_1l}$ and used to construct the precoding matrix **U**;

wherein the precoding matrix **U** meets a model:

$$\mathbf{U} = \begin{bmatrix} v_0 \\ \beta v_1 \end{bmatrix} \text{ or } \mathbf{U} = \begin{bmatrix} v_0' \\ \alpha v_1' \\ \beta v_2' \\ \alpha\beta v_3' \end{bmatrix} \text{ or } \mathbf{U} = \begin{bmatrix} v_0 & v_2 \\ \beta v_1 & -\beta v_3 \end{bmatrix} \text{ or } \mathbf{U} = \begin{bmatrix} v_0' & v_4' \\ \alpha v_1' & \alpha v_5' \\ \beta v_2' & -\beta v_6' \\ \alpha\beta v_3' & -\alpha\beta v_7' \end{bmatrix},$$

where, vectors $v_0$, $v_1$, $v_2$ and $v_3$ are vectors having a dimension of $N_t/2 \times 1$, vectors $v_0'$, $v_1'$, $v_2'$, $v_3'$, $v_4'$,

$v_5^{'}$, $v_6^{'}$ and $v_7^{'}$ are vectors having a dimension of $N_t/4 \times 1$, $\alpha = e^{j\theta_1}$, and $\beta = e^{j\theta_2}$, where $0 \le \theta_1 \le 2\pi$, $0 \le \theta_2 \le 2\pi$.

**2.** The method as claimed in claim 1, wherein the first type of codebook index set I at least comprises $i_1$ and $i_3$ information; and the second type of codebook index set $J$ at least comprises $i_2$ information; or,
the first type of codebook index set I at least comprises $i_1$ and $i_2$ information; and the second type of codebook index set $J$ at least comprises $i_3$ information; or,
the first type of codebook index set I at least comprises $i_1$ information; and the second type of codebook index set $J$ at least comprises $i_2$ and $i_3$ information.

**3.** The method as claimed in claim 1, wherein the basic vectors composing the precoding matrix U are divided into N1 groups; the codebook indication information $i_3$ comprises N1 pieces of sub-information $i_3(1)\cdots i_3(N1)$ $N1 \ge 2$ and is a positive integer; wherein $i_3(x)$ is used for representing information of a matrix $W_{i_1 l_x}$ selected for an $x$ th group of vectors from the K matrixes $W_{i_{1_1}} \cdots W_{i_1 k}$ indicated by $i_1$, where $2 \le x \le N1$.

**4.** The method as claimed in claim 1, wherein the basic vectors composing the precoding matrix **U** are divided into N2 groups; the codebook indication information $i_2$ comprises N2 pieces of sub-information $i_2(1)\cdots i_2(N2)$ $N2 \ge 2$; where $i_2(y)$ is used for representing information of one or more basic vectors extracted from a matrix $W_{i_1 l_y}$ jointly indicated by $i_1$ and $i_3$ and used to construct the precoding matrix **U,** $2 \le y \le N2$.

**5.** The method as claimed in claim 1, wherein for the codebook model $\mathbf{U} = \begin{bmatrix} v_0^{'} \\ \alpha v_1^{'} \\ \beta v_2^{'} \\ \alpha\beta v_3^{'} \end{bmatrix}$ or $\mathbf{U} = \begin{bmatrix} v_0^{'} & v_4^{'} \\ \alpha v_1^{'} & \alpha v_5^{'} \\ \beta v_2^{'} & -\beta v_6^{'} \\ \alpha\beta v_3^{'} & -\alpha\beta v_7^{'} \end{bmatrix}$,
at least one of the codebook indication information $i_1$, $i_2$ and $i_3$ is further used to represent $\alpha$ information in the codebook model **U;**
or,
at least one of the codebook indication information $i_1$, $i_2$ and $i_3$ is further used to represent $\beta$ information in the codebook model **U.**

**6.** The method as claimed in claim 1 or 3, wherein for the model $\mathbf{U} = \begin{bmatrix} v_0 & v_2 \\ \beta v_1 & -\beta v_3 \end{bmatrix}$, the codebook indication information $i_3$ comprises two pieces of sub-information $i_3(1)$ and $i_3(2)$ ;
wherein $i_3(1)$ is used for representing information of a matrix $W_{i_1 i_3(1)}$ from which vectors $v_0$ and $v_2$ are extracted; and $i_3(2)$ is used for representing information of a matrix $W_{i_1 i_3(2)}$ from which vectors $v_1$ and $v_3$ are extracted; or,
the $i_3(1)$ is used for representing information of a matrix $W_{i_1 i_3(1)}$ from which vectors $v_0$ and $v_1$ are extracted; and $i_3(2)$ is used for representing information of a matrix $w_{i_1 i_3(2)}$ from which vectors $v_2$ and $v_3$ are extracted;
or,
for the model $\mathbf{U} = \begin{bmatrix} v_0^{'} \\ \alpha v_1^{'} \\ \beta v_2^{'} \\ \alpha\beta v_3^{'} \end{bmatrix}$, the codebook indication information $i_3$ comprises two pieces of sub-information $i_3(1)$ and $i_3(2)$;
wherein $i_3(1)$ is used for representing information of a matrix $W_{i_1 i_3(1)}$ from which vectors $v_0^{'}$ and $v_1^{'}$ are extracted; and $i_3(2)$ is used for representing information of a matrix $W_{i_1 i_3(2)}$ from which vectors $v_2^{'}$ and $v_3^{'}$ are extracted; or,
$i_3(1)$ is used for representing information of a matrix $W_{i_1 i_3(1)}$ from which vectors $v_0^{'}$ and $v_2^{'}$ are extracted; and $i_3(2)$

is used for representing information of a matrix $W_{i_1 i_3(2)}$ from which vectors $v_1^{'}$ and $v_3^{'}$ are extracted; or,

for the model $$\mathbf{U} = \begin{bmatrix} v_0^{'} & v_4^{'} \\ \alpha v_1^{'} & \alpha v_5^{'} \\ \beta v_2^{'} & -\beta v_6^{'} \\ \alpha\beta v_3^{'} & -\alpha\beta v_7^{'} \end{bmatrix},$$ the codebook indication information $i_3$ comprises four pieces of sub-information $i_3(1)$, $i_3(2)$, $i_3(3)$ and $i_3(4)$, wherein $i_3(1)$ is used for representing information of a matrix $W_{i_1 i_3(1)}$ from which vectors $v_0^{'}$ and $v_4^{'}$ are extracted; $i_3(2)$ is used for representing information of a matrix $W_{i_1 i_3(2)}$ from which vectors $v_1^{'}$ and $v_5^{'}$ are extracted; $i_3(3)$ is used for representing information of a matrix $W_{i_1 i_3(3)}$ from which vectors $v_2^{'}$ and $v_6^{'}$ are extracted; $i_3(4)$ is used for representing information of a matrix $W_{i_1 i_3(4)}$ from which vectors $v_3^{'}$ and $v_7^{'}$ are extracted.

**7.** The method as claimed in claim 1 or 4, wherein for the model $$\mathbf{U} = \begin{bmatrix} v_0^{'} \\ \alpha v_1^{'} \\ \beta v_2^{'} \\ \alpha\beta v_3^{'} \end{bmatrix},$$ the codebook indication information $i_2$ comprises two pieces of sub-information $i_2(1)$ and $i_2(2)$;

wherein $i_2(1)$ is used for representing information of a basic vector extracted from the matrix $W_{i_1 l}$ for vectors $v_0^{'}$ and $v_1^{'}$; $i_2(2)$ is used for representing information of a basic vector extracted from the matrix $W_{i_1 l^{'}}$ for vectors $v_2^{'}$ and $v_3^{'}$; or,

$i_2(1)$ is used for representing information of a basic vector extracted from the matrix $W_{i_1 l}$ for vectors $v_0^{'}$ and $v_2^{'}$;

$i_2(2)$ is used for representing information of a basic vector extracted from the matrix $W_{i_1 l'}$ for vectors $v_1^{'}$ and $v_3^{'}$; or,

for the model $$\mathbf{U} = \begin{bmatrix} v_0 & v_2 \\ \beta v_1 & -\beta v_3 \end{bmatrix},$$ the codebook indication information $i_2$ comprises two pieces of sub-information $i_2(1)$ and $i_2(2)$;

wherein $i_2(1)$ is used for representing information of a basic vector extracted from the matrix $W_{i_1 l}$ for vectors $v_0$ and $v_2$ ; $i_2(2)$ is used for representing information of a basic vector extracted from the matrix $W_{i_1 l'}$ for vectors $v_1$ and $v_3$; or, $i_2(1)$ is used for representing information of a basic vector extracted from the matrix $W_{i_1 l}$ for vectors $v_0$ and $v_1$ ; $i_2(2)$ is used for representing information of a basic vector extracted from the matrix $W_{i_1 l'}$ for vectors $v_2$ and $v_3$;

or,

for the model $\mathbf{U}=\begin{bmatrix} v_0' & v_4' \\ \alpha v_1' & \alpha v_5' \\ \beta v_2' & -\beta v_6' \\ \alpha\beta v_3' & -\alpha\beta v_7' \end{bmatrix}$, the codebook indication information $i_2$ comprises four pieces of sub-information $i_2(1)$, $i_2(2)$, $i_2(3)$ and $i_2(4)$;

wherein $i_2(1)$ is used for representing information of a basic vector extracted from the matrix $W_{i1l}$ for vectors $v_0'$ and $v_4'$; $i_2(2)$ is used for representing information of a basic vector extracted from the matrix $W_{i1l'}$ for vectors $v_1'$ and $v_5'$; $i_2(3)$ is used for representing information of a basic vector extracted from the matrix $W_{i1l''}$ for vectors $v_2'$ and $v_6'$; and $i_2(4)$ is used for representing information of a basic vector extracted from the matrix $W_{i1l'''}$ for vectors $v_3'$ and $v_7'$; or,

for the model $\mathbf{U}=\begin{bmatrix} v_0' & v_4' \\ \alpha v_1' & \alpha v_5' \\ \beta v_2' & -\beta v_6' \\ \alpha\beta v_3' & -\alpha\beta v_7' \end{bmatrix}$, the codebook indication information $i_2$ comprises four pieces of sub-information $i_2(1)$, $i_2(2)$, $i_2(3)$ and $i_2(4)$;

wherein $i_2(1)$ is used for representing information of a basic vector extracted from the matrix $W_{i_1l}$ for vectors $v_0'$ and $v_1'$; $i_2(2)$ is used for representing information of a basic vector extracted from the matrix $W_{i_1l'}$ for vectors $v_2'$ and $v_3'$; $i_2(3)$ is used for representing information of a basic vector extracted from the matrix $W_{i_1l''}$ for vectors $v_4'$ and $v_5'$; and $i_2(4)$ is used for representing information of a basic vector extracted from the matrix $W_{i_1l'''}$ for vectors $v_6'$ and $v_7'$; or,

$i_2(1)$ is used for representing information of a basic vector extracted from the matrix $W_{i1l}$ for vectors $v_0'$ and $v_2'$;

$i_2(2)$ is used for representing information of a basic vector extracted from the matrix $W_{i_1l'}$ for vectors $v_1'$ and $v_3'$;

$i_2(3)$ is used for representing information of a basic vector extracted from the matrix $W_{i_1l''}$ for vectors $v_4'$ and $v_6'$;

and $i_2(4)$ is used for representing information of a basic vector extracted from the matrix $W_{i1l'''}$ for vectors $v_5'$ and $v_7'$.

**8.** The method as claimed in claim 3, wherein $i_3(1)\cdots i_3(N1)$ have a linear relationship; when the CSI is reported, the UE at least reports one codebook indication information in $i_3(1)\cdots i_3(N1)$.

**9.** The method as claimed in claim 4, wherein $i_2(1)\cdots i_2(N2)$ have a linear relationship; when the CSI is reported, the UE at least reports one codebook indication information in $i_2(1)\cdots i_2(N2)$.

**10.** The method as claimed in claim 6 or 8, wherein for the model $\mathbf{U}=\begin{bmatrix} v_0 & v_2 \\ \beta v_1 & -\beta v_3 \end{bmatrix}$ or $\mathbf{U}=\begin{bmatrix} v_0^{'} \\ \alpha v_1^{'} \\ \beta v_2^{'} \\ \alpha\beta v_3^{'} \end{bmatrix}$, $i_3(1)\cdots i_3(2)$ ; or,

for the model $\mathbf{U}=\begin{bmatrix} v_0^{'} & v_4^{'} \\ \alpha v_1^{'} & \alpha v_5^{'} \\ \beta v_2^{'} & -\beta v_6^{'} \\ \alpha\beta v_3^{'} & -\alpha\beta v_7^{'} \end{bmatrix}$, $i_3(1) = i_3(2) = i_3(3) = i_3(4)$.

**11.** The method as claimed in claim 7 or 9, wherein for the model $\mathbf{U}=\begin{bmatrix} v_0^{'} \\ \alpha v_1^{'} \\ \beta v_2^{'} \\ \alpha\beta v_3^{'} \end{bmatrix}$ or $\mathbf{U}=\begin{bmatrix} v_0 & v_2 \\ \beta v_1 & -\beta v_3 \end{bmatrix}$, $i_2(1) = i_2(2)$ ; or,

for the model $\mathbf{U}=\begin{bmatrix} v_0^{'} & v_4^{'} \\ \alpha v_1^{'} & \alpha v_5^{'} \\ \beta v_2^{'} & -\beta v_6^{'} \\ \alpha\beta v_3^{'} & -\alpha\beta v_7^{'} \end{bmatrix}$, $i_2(1) = i_2(2) = i_2(3) = i_2(4)$.

**12.** The method as claimed in claim 1, where M columns of vectors composing the matrix **B** are Discrete Fourier Transformation, DFT, vectors.

**13.** A device for feeding back Channel State Information, CSI, in a multi-input multi-output system, comprising:

a first obtaining module (201), configured to obtain codebook index information; and
a first sending module (202), configured to feed back the CSI comprising the codebook index information to an evolved Node B, eNodeB, wherein
the codebook index information comprises: a first type of codebook index set **I** and a second type of codebook index set *J* ; a combination of the first type of index set **I** and the second type of index set *J* is used for indicating a precoding matrix **U,** and the precoding matrix **U** is an $N_t \times r$ matrix, where $N_t$ represents a total number of ports or a total number of antennas and *r* represents a number of transmission layers; the precoding matrix **U** is composed of at least $Q \times r$ basic vectors having a dimension of $N_t/Q$, where $Q \geq 2$, $r \geq 1$, and *Q* and *r* are both positive integers; the basic vectors are columns extracted from a matrix **B** composed of M columns of $N_t/Q$-dimensional vectors, where M is a positive integer;
a union of the first type of index set **I** and the second type of index set *J* at least comprises codebook indication information $i_1$, $i_2$ and $i_3$ ;
the codebook indication information $i_1$ is used for representing selection information of K matrixes $W_{i_11}\cdots W_{i_1k}$, where K is a positive integer, each column of the K matrixes $W_{i_11}\cdots W_{i_1k}$ is extracted from column vectors comprised in the matrix **B** ; $i_3$ is used for representing a matrix $W_{i_1l}$ selected from the K matrixes; $i_2$ is used for representing information of one or more basic vectors extracted from the matrix $W_{i_1l}$ and used to construct the precoding matrix **U** ;

wherein the precoding matrix **U** meets a model:

$$\mathbf{U}=\begin{bmatrix} v_0 \\ \beta v_1 \end{bmatrix} \text{ or } \mathbf{U}=\begin{bmatrix} v_0^{'} \\ \alpha v_1^{'} \\ \beta v_2^{'} \\ \alpha\beta v_3^{'} \end{bmatrix} \text{ or } \mathbf{U}=\begin{bmatrix} v_0 & v_2 \\ \beta v_1 & -\beta v_3 \end{bmatrix} \text{ or } \mathbf{U}=\begin{bmatrix} v_0^{'} & v_4^{'} \\ \alpha v_1^{'} & \alpha v_5^{'} \\ \beta v_2^{'} & -\beta v_6^{'} \\ \alpha\beta v_3^{'} & -\alpha\beta v_7^{'} \end{bmatrix},$$

where, vectors $v_0$, $v_1$, $v_2$ and $v_3$ are vectors having a dimension of $N_t/2 \times 1$, vectors $v_0^{'}$, $v_1^{'}$, $v_2^{'}$, $v_3^{'}$, $v_4^{'}$, $v_5^{'}$, $v_6^{'}$ and $v_7^{'}$ are vectors having a dimension of $N_t/4 \times 1$, $\alpha = e^{j\theta_1}$, and $\beta = e^{j\theta_2}$, where $0 \leq \theta_1 \leq 2\pi$, $0 \leq \theta_2 \leq 2\pi$.

## Patentansprüche

1. Verfahren zum Rückkoppeln von Kanalzustandsinformationen, CSI, in einem System mit mehreren Eingängen und mehreren Ausgängen, umfassend:

   Rückkopplung (102) durch eine Benutzeranlage, UE, CSI, die Codebuch-Indexinformationen zu einem weiterentwickelten Knoten B, eNodeB, umfasst, wobei
   die Codebuch-Indexinformationen umfassen: einen ersten Typ eines Codebuch-Indexsatzes **I** und einen zweiten Typ eines Codebuch-Indexsatzes *J*; eine Kombination des ersten Typs des Indexsatzes **I** und des zweiten Typs des Indexsatzes *J* wird zum Anzeigen einer Vorcodierungsmatrix **U** verwendet, wobei die Vorcodierungsmatrix **U** eine $N_t xr$- Matrix ist und $N_t$ eine Gesamtzahl von Ports oder eine Gesamtzahl von Antennen und *r* eine Anzahl von Übertragungsschichten darstellt; die Vorcodierungsmatrix **U** besteht aus mindestens *Qxr*-Basisvektoren mit einer Dimension von $N_t/Q$ wobei $Q \geq 2$, $r \geq 1$ und *Q* und *r* beide positive ganze Zahlen sind; die Basisvektoren sind Spalten, die aus einer Matrix **B** extrahiert wurden, welche aus **M** Spalten von $N_t/Q$-dimensionalen Vektoren besteht wobei M eine positive ganze Zahl ist;
   eine Vereinigung des ersten Typs des Indexsatzes **I** und des zweiten Typs des Indexsatzes *J* umfasst Codebuch-Anzeigeinformationen $i_1$, $i_2$ und $i_3$;
   die Codebuch-Anzeigeinformationen $i_1$ werden zur Darstellung von Auswahlinformationen von K-Matrizen $W_{i_{1}1} \ldots W_{i_{1}k}$ verwendet, wobei K eine positive ganze Zahl ist, jede Spalte der K-Matrizen $W_{i_{1}1} \ldots W_{i_{1}k}$ aus Spaltenvektoren extrahiert wird, die in der Matrix **B** enthalten sind; $i_3$ zur Darstellung einer aus den K-Matrizen ausgewählten Matrix $W_{i_1 l}$ verwendet wird; $i_2$ zur Darstellung von Informationen eines oder mehrerer Basisvektoren verwendet wird, die aus der Matrix $W_{i_{1}l}$ extrahiert und zur Erstellung der Vorcodierungsmatrix **U** verwendet wird.
   wobei die Vorcodierungsmatrix **U** ein Modell erfüllt:

   $$\mathbf{U}=\begin{bmatrix} v_0 \\ \beta v_1 \end{bmatrix} \text{ oder } \mathbf{U}=\begin{bmatrix} v_0^{'} \\ \alpha v_1^{'} \\ \beta v_2^{'} \\ \alpha\beta v_3^{'} \end{bmatrix} \text{ oder } \mathbf{U}=\begin{bmatrix} v_0 & v_2 \\ \beta v_1 & -\beta v_3 \end{bmatrix} \text{ oder } \mathbf{U}=\begin{bmatrix} v_0^{'} & v_4^{'} \\ \alpha v_1^{'} & \alpha v_5^{'} \\ \beta v_2^{'} & -\beta v_6^{'} \\ \alpha\beta v_3^{'} & -\alpha\beta v_7^{'} \end{bmatrix},$$

   wobei Vektoren $v_0$, $v_1$; $v_2$ und $v_3$ Vektoren mit einer Dimension von $N_t/2x1$ sind, Vektoren $v_0'$, $v_1'$, $v_2'$, $v_3'$, $v_4'$, $v_5'$, $v_6'$ und $v_7'$ Vektoren mit einer Dimension von, $\alpha = e^{j\theta_1}$ und $\beta = e^{j\theta_2}$ sind, wobei $0 \leq \theta_1 \leq 2\pi$, $0 \leq \theta_2 \leq 2\pi$.

2. Verfahren nach Anspruch 1, wobei der erste Typ eines Codebuch-Indexsatzes **I** mindestens $i_1$- und $i_3$-Informationen umfasst; und der zweite Typ des Codebuch-Indexsatzes *J* mindestens $i_2$ Informationen umfasst; oder,

der erste Typ eines Codebuch-Indexsatzes **I** mindestens $i_1$- und $i_2$-Informationen; und der zweite Typ des Codebuch-Indexsatzes $J$ mindestens $i_3$ Informationen umfasst; oder,
der erste Typ eines Codebuch-Indexsatzes **I** mindestens $i_1$ Information; und der zweite Typ des Codebuch-Indexsatzes $J$ umfasst mindestens $i_2$- und $i_3$-Informationen umfasst.

**3.** Verfahren nach Anspruch 1, wobei die Basisvektoren, die die Vorcodierungsmatrix **U** bilden, in N1 Gruppen unterteilt sind; die Codebuch-Anzeigeinformation $i_3$ N1 Unterinformationen $i_3(1) \cdots i_3(N1)$ $N1 \geq 2$ umfasst und eine positive ganze Zahl ist; wobei $i_3$(x) zur Darstellung von Informationen einer Matrix $W_{i_1 l_x}$ verwendet wird, die für eine X. Gruppe von Vektoren aus den durch $i_1$ angegebenen K-Matrizen $W_{i_{1}1} \cdots W_{i_{1}k}$ ausgewählt ist, wobei $2 \leq x \leq N1$.

**4.** Verfahren nach Anspruch 1, wobei die Basisvektoren, die die Vorcodierungsmatrix **U** bilden, in N2 Gruppen unterteilt sind; die Codebuch-Anzeigeinformation $i_2$ N2 Unterinformationen $i_2(1) \cdots i_2(N2)$ $N2 \geq 2$ aufweisen; wobei $i_2$(y) zur Darstellung von Informationen eines oder mehrerer aus einer Matrix $W_{i_{1}l_y}$ extrahierter Basisvektoren verwendet wird, die gemeinsam durch $i_1$ und $i_3$ angegeben sind und zur Erstellung der Vorcodierungsmatrix **U** $2 \leq y \leq N2$ verwendet werden.

**5.** Verfahren nach Anspruch 1, wobei für das Codebuchmodell $\mathbf{U}=\begin{bmatrix} v_0' \\ \alpha v_1' \\ \beta v_2' \\ \alpha\beta v_3' \end{bmatrix}$ oder $\mathbf{U}=\begin{bmatrix} v_0' & v_4' \\ \alpha v_1' & \alpha v_5' \\ \beta v_2' & -\beta v_6' \\ \alpha\beta v_3' & -\alpha\beta v_7' \end{bmatrix}$ mindestens eine der Codebuch-Anzeigeinformationen $i_1$, $i_2$ und $i_3$ ferner verwendet wird, um $\alpha$-Informationen in dem Codebuchmodell U darzustellen.
oder
mindestens eine der Codebuch-Anzeigeinformationen $i_1$, $i_2$ und $i_3$ ferner verwendet wird, um $\beta$-Informationen in dem Codebuchmodell **U** darzustellen.

**6.** Verfahren nach Anspruch 1 oder 3, wobei für das Modell $\mathbf{U}=\begin{bmatrix} v_0 & v_2 \\ \beta v_1 & -\beta v_3 \end{bmatrix}$ die Codebuch-Anzeigeinformation $i_3$ zwei Unterinformationen $i_3(1)$ und $i_3(2)$ umfasst;
worin $i_3(1)$ zur Darstellung von Informationen einer Matrix $W_{i_1 i_3(1)}$ verwendet wird, aus der die Vektoren $v_0$ und $v_2$ extrahiert werden; und $i_3(2)$ zur Darstellung von Informationen einer Matrix $W_{i_1 i_3(2)}$ verwendet wird, aus der die Vektoren $v_1$ und $v_3$ extrahiert werden; oder
das $i_3(1)$ zur Darstellung von Informationen einer Matrix $W_{i1i3(1)}$ verwendet wird, aus denen die Vektoren $v_0$ und $v_1$ extrahiert werden; und $i_3(2)$ zur Darstellung von Informationen einer Matrix $W_{i_1 i_3(2)}$ verwendet wird, aus der die Vektoren $v_2$ und $v_3$ extrahiert werden;
oder

für das Modell $\mathbf{U}=\begin{bmatrix} v_0' \\ \alpha v_1' \\ \beta v_2' \\ \alpha\beta v_3' \end{bmatrix}$ die Codebuch-Anzeigeinformation $i_3$ zwei Unterinformationen $i_3(1)$ und $i_3(2)$ umfassen;
wobei $i_3(1)$ zur Darstellung von Informationen einer Matrix $W_{i1i3(1)}$ verwendet wird aus der Vektoren $v_0'$ und $v_1'$ extrahiert werden; und $i_3(2)$ zur Darstellung von Informationen einer Matrix $W_{i1i3(1)}$ verwendet wird, aus der Vektoren $v_2'$ und $v_3'$ extrahiert werden; oder
$i_3(1)$ zur Darstellung von Informationen einer Matrix $W_{i1i3(1)}$ verwendet wird, aus der Vektoren $v_0'$ und $v_2'$ extrahiert werden; und $i_3(2)$ zur Darstellung von Informationen einer Matrix $W_{i_1 i_3(2)}$ verwendet wird, aus der Vektoren $v_1'$ und

$v_3'$ extrahiert werden;
oder

für das Modell $\mathbf{U} = \begin{bmatrix} v_0' & v_4' \\ \alpha v_1' & \alpha v_5' \\ \beta v_2' & -\beta v_6' \\ \alpha\beta v_3' & -\alpha\beta v_7' \end{bmatrix}$ die Codebuch-Anzeigeinformation $i_3$ vier Unterinformationen $i_3(1)$, $i_3(2)$, $i_3(3)$ und $i_3(4)$ umfassen, wobei $i_3(1)$ zur Darstellung von Informationen einer Matrix $W_{i1i3(1)}$ verwendet wird, aus der Vektoren $v_0'$ und $v_4'$ extrahiert werden; $i_3(2)$ zur Darstellung von Informationen einer Matrix $W_{i1i3(2)}$ verwendet wird, aus der Vektoren $v_1'$ und $v_5'$ extrahiert werden; $i_3(3)$ zur Darstellung von Informationen einer Matrix $W_{i_1i_3(3)}$ verwendet wird, aus der Vektoren $v_2'$ und $v_6'$ extrahiert werden; $i_3(4)$ zur Darstellung von Informationen einer Matrix $W_{i_1i_3(4)}$ verwendet werden, aus der Vektoren $v_3'$ und $v_7'$ extrahiert werden.

**7.** Verfahren nach Anspruch 1 oder 4, wobei für das Modell $\mathbf{U} = \begin{bmatrix} v_0' \\ \alpha v_1' \\ \beta v_2' \\ \alpha\beta v_3' \end{bmatrix}$ die Codebuch-Anzeigeinformation $i_2$ zwei Unterinformationen $i_2(1)$ und $i_2(2)$ umfasst;

wobei $i_2(1)$ zur Darstellung von Informationen eines aus der Matrix $W_{i_1 l}$ extrahierten Basisvektors für Vektoren $v_0'$ und $v_1'$ extrahierten Basisvektors verwendet wird; $i_2(2)$ zur Darstellung von Informationen eines aus der Matrix $W_{i_1 l'}$ extrahierten Basisvektors für Vektoren $v_1'$ und $v_3'$ verwendet wird; oder

$i_2(1)$ zur Darstellung von Informationen eines aus der Matrix $W_{i_1 l}$ für Vektoren $v_0'$ und $v_2'$ extrahierten Basisvektors verwendet wird; $i_2(2)$ zur Darstellung von Informationen eines aus der Matrix $W_{i_1 l'}$ für Vektoren $v_1'$ und $v_3'$ extrahierten Basisvektors verwendet wird;
oder

für das Modell $\mathbf{U} = \begin{bmatrix} v_0 & v_2 \\ \beta v_1 & -\beta v_3 \end{bmatrix}$ die Codebuch-Anzeigeinformation $i_2$ zwei Unterinformationen $i_2(1)$ und $i_2(2)$ umfasst;

wobei $i_2(1)$ zur Darstellung von Informationen eines aus der Matrix $W_{i_1 l}$ für Vektoren $v_0$ und $v_2$ extrahierten Basisvektors verwendet wird; $i_2(2)$ zur Darstellung von Informationen eines aus der Matrix $W_{i_1 l'}$ für die Vektoren $v_1$ und $v_3$ extrahierten Basisvektors verwendet wird; oder,

$i_2(1)$ zur Darstellung von Informationen eines aus der Matrix $W_{i_1 l}$ für Vektoren $v_0$ und $v_1$ extrahierten Basisvektors verwendet wird; $i_2(2)$ zur Darstellung von Informationen eines aus der Matrix $W_{i_1 l'}$ für die Vektoren $v_2$ und $v_3$ extrahierten Basisvektors verwendet wird;
oder

für das Modell $\mathbf{U}=\begin{bmatrix} v_0' & v_4' \\ \alpha v_1' & \alpha v_5' \\ \beta v_2' & -\beta v_6' \\ \alpha\beta v_3' & -\alpha\beta v_7' \end{bmatrix}$ die Codebuch-Anzeigeinformation $i_2$ vier Unterinformationen $i_2(1)$, $i_2(2)$, $i_2(3)$ und $i_2(4)$ umfasst;

wobei $i_2(1)$ zur Darstellung von Informationen eines aus der Matrix $W_{i_1 l}$ für Vektoren $v_0'$ und $v_4'$ extrahierten Basisvektors verwendet wird; $i_2(2)$ zur Darstellung von Informationen eines aus der Matrix $W_{i_1 l'}$ für Vektoren $v_1'$ und $v_5'$ extrahierten Basisvektors verwendet wird; $i_2(3)$ zur Darstellung von Informationen eines aus der Matrix $W_{i_1 l''}$ für Vektoren $v_2'$ und $v_6'$ extrahierten Basisvektors verwendet wird; und $i_2(4)$ zur Darstellung von Informationen eines aus der Matrix $W_{i_1 l'''}$ für Vektoren $v_3'$ und $v_7'$ extrahierten Basisvektors verwendet wird; oder

für das Modell $\mathbf{U}=\begin{bmatrix} v_0' & v_4' \\ \alpha v_1' & \alpha v_5' \\ \beta v_2' & -\beta v_6' \\ \alpha\beta v_3' & -\alpha\beta v_7' \end{bmatrix}$ die Codebuch-Anzeigeinformation $i_2$ vier Unterinformationen $i_2(1)$, $i_2(2)$, $i_2(3)$ und $i_2(4)$ umfasst;
wobei $i_2(1)$ zur Darstellung von Informationen eines aus der Matrix

$$W_{i_1 l}$$

für Vektoren $v_0'$ und $v_1'$ extrahierten Basisvektors verwendet wird; $i_2(2)$ zur Darstellung von Informationen eines aus der Matrix $W_{i_1 l'}$ für Vektoren $v_2'$ und $v_3'$ extrahierten Basisvektors verwendet wird; $i_2(3)$ zur Darstellung von Informationen eines aus der Matrix $W_{i_1 l''}$ für Vektoren $v_4'$ und $v_5'$ extrahierten Basisvektors verwendet wird; und $i_2(4)$ zur Darstellung von Informationen eines aus der Matrix $W_{i_1 l'''}$ für Vektoren $v_6'$ und $v_7'$ extrahierten Basisvektors verwendet wird; oder

$i_2(1)$ zur Darstellung von Informationen eines aus der Matrix $W_{i_1 l}$ für Vektoren $v_0'$ und $v_2'$ extrahierten Basisvektors verwendet wird; $i_2(2)$ zur Darstellung von Informationen eines aus der Matrix $W_{i_1 l'}$ für Vektoren $v_1'$ und $v_3'$ extrahierten Basisvektors verwendet wird; $i_2(3)$ zur Darstellung von Informationen eines aus der Matrix $W_{i_1 l''}$ für Vektoren $v_4'$ und $v_6'$ extrahierten Basisvektors verwendet wird; und $i_2(4)$ zur Darstellung von Informationen eines aus der Matrix $W_{i_1 l'''}$ für Vektoren $v_5'$ und $v_7'$ extrahierten Basisvektors verwendet wird.

**8.** Verfahren nach Anspruch 3, wobei $i_3(1) \cdots i_3(N1)$ eine lineare Beziehung haben; wenn die CSI gemeldet wird, die UE mindestens eine Codebuch-Anzeigeinformation in $i_3(1) \cdots i_3(N1)$ meldet.

**9.** Verfahren nach Anspruch 4, wobei $i_2(1) \cdots i_2(N2)$ eine lineare Beziehung haben; wenn die CSI gemeldet wird, die UE mindestens eine Codebuch-Anzeigeinformation in $i_2(1) \cdots i_2(N2)$ meldet.

**10.** Verfahren nach Anspruch 6 oder 8, wobei für das Modell $\mathbf{U}=\begin{bmatrix} v_0 & v_2 \\ \beta v_1 & -\beta v_3 \end{bmatrix}$ oder $\mathbf{U}=\begin{bmatrix} v_0' \\ \alpha v_1' \\ \beta v_2' \\ \alpha\beta v_3' \end{bmatrix}$ $i_3(1) = i_3(2)$; oder

für das Modell $\mathbf{U}=\begin{bmatrix} v_0' & v_4' \\ \alpha v_1' & \alpha v_5' \\ \beta v_2' & -\beta v_6' \\ \alpha\beta v_3' & -\alpha\beta v_7' \end{bmatrix}$ $i_3(1) = i_3(2) = i_3(3) = i_3(4)$.

**11.** Verfahren nach Anspruch 7 oder 9, wobei für das Modell $\mathbf{U}=\begin{bmatrix} v_0' \\ \alpha v_1' \\ \beta v_2' \\ \alpha\beta v_3' \end{bmatrix}$ oder $\mathbf{U}=\begin{bmatrix} v_0 & v_2 \\ \beta v_1 & -\beta v_3 \end{bmatrix}$ $i_2(1) = i_2(2)$; oder

für das Modell $\mathbf{U}=\begin{bmatrix} v_0' & v_4' \\ \alpha v_1' & \alpha v_5' \\ \beta v_2' & -\beta v_6' \\ \alpha\beta v_3' & -\alpha\beta v_7' \end{bmatrix}$ $i_2(1) = i_2(2) = i_2(3) = i_2(4)$.

**12.** Verfahren nach Anspruch 1, wobei **M** Spalten von Vektoren, aus denen die Matrix **B** besteht, Vektoren für Diskrete Fourier-Transformation (DFT) sind.

**13.** Vorrichtung zur Rückkopplung von Kanalzustandsinformationen (CSI) in einem System mit mehreren Eingängen und mehreren Ausgängen, umfassend:

ein erstes Erhaltensmodul (201), das konfiguriert ist, um Codebuch-Indexinformationen zu erhalten; und
ein erstes Sendemodul (202), das konfiguriert ist, um die CSI, die die Codebuch-Indexinformationen umfasst, an einen weiterentwickelten Knoten B, eNodeB, rückzukoppeln, wobei
die Codebuch-Indexinformationen umfassen: einen ersten Typ eines Codebuch-Indexsatzes **I** und einen zweiten Typ eines Codebuch-Indexsatzes *J*; eine Kombination des ersten Typs des Indexsatzes **I** und des zweiten Typs des Indexsatzes *J*. welche zum Anzeigen einer Vorcodierungsmatrix U verwendet wird, wobei die Vorcodierungsmatrix U eine $N_t$xr-Matrix ist, und $N_t$ eine Gesamtzahl von Ports oder eine Gesamtzahl von Antennen und r eine Anzahl von Übertragungsschichten darstellt; die Vorcodierungsmatrix U aus mindestens Qxr-Basisvektoren mit einer Dimension von $N_t/Q$ besteht, wobei $Q \geq 2$, $r \geq 1$ und $Q$ und $r$ beide positive ganze Zahlen sind; die Basisvektoren Spalten sind, die aus einer Matrix **B** extrahiert wurden, welche aus M Spalten von $N_t/Q$-dimensionalen Vektoren besteht, wobei M eine positive ganze Zahl ist;
eine Vereinigung des ersten Typs des Indexsatzes **I** und des zweiten Typs des Indexsatzes *J* mindestens Codebuch-Anzeigeinformationen $i_1$, $i_2$ und $i_3$ umfasst;
die Codebuch-Anzeigeinformationen $i_1$ zur Darstellung von Auswahlinformationen von K-Matrizen $W_{i_1 1} \ldots W_{i_1 k}$ verwendet werden, wobei K eine positive ganze Zahl ist, jede Spalte der K-Matrizen $W_{i_1 1} \ldots W_{i_1 k}$ aus Spaltenvektoren extrahiert wird, die in der Matrix **B** enthalten sind; $i_3$ zur Darstellung einer aus den K-Matrizen ausgewählten Matrix $W_{i_1 l}$ verwendet wird; $i_2$ zur Darstellung von Informationen eines oder mehrerer aus der Matrix $W_{i_1 l}$ extrahierten Basisvektoren und zur Erstellung der Vorcodierungsmatrix U verwendet wird;
wobei die Vorcodierungsmatrix U ein Modell erfüllt:

$$\mathbf{U}=\begin{bmatrix} v_0 \\ \beta v_1 \end{bmatrix} \text{ oder } \mathbf{U}=\begin{bmatrix} v_0' \\ \alpha v_1' \\ \beta v_2' \\ \alpha\beta v_3' \end{bmatrix} \text{ oder } \mathbf{U}=\begin{bmatrix} v_0 & v_2 \\ \beta v_1 & -\beta v_3 \end{bmatrix} \text{ oder } \mathbf{U}=\begin{bmatrix} v_0' & v_4' \\ \alpha v_1' & \alpha v_5' \\ \beta v_2' & -\beta v_6' \\ \alpha\beta v_3' & -\alpha\beta v_7' \end{bmatrix},$$

wobei Vektoren $v_0$, $v_1$; $v_2$ und $v_3$ Vektoren eine Dimension von $N_t/2\text{x}1$ haben, Vektoren $v_0'$, $v_1'$, $v_2'$, $v_3'$, $v_4'$, $v_5'$, $v_6'$ und $v_7'$ Vektoren mit einer Dimension von $N_t/4\text{x}1$, $\alpha = e^{j\theta_1}$ und $\beta = e^{j\theta_2}$ sind,wobei $0 \le \theta_1 \le 2\pi$, $0 \le \theta_2 \le 2\pi$.

## Revendications

**1.** Procédé de renvoi d'informations d'état de canal, CSI, dans un système à entrées multiples et sorties multiples comprenant :

le renvoi (102), par un équipement utilisateur, UE, de CSI comprenant des informations d'index de livre de codes à un nœud B évolué, eNodeB, dans lequel
les informations d'index de livre de codes comprennent : un premier type d'ensemble d'index de livre de codes **I** et un second type d'ensemble d'index de livre de codes *J* ; une combinaison du premier type d'ensemble d'index **I** et du second type d'ensemble d'index *J* est utilisée pour indiquer une matrice de précodage **U** et la matrice de précodage **U** est une matrice $N_t xr$, où $N_t$ représente un nombre total de ports ou un nombre total d'antennes et *r* représente un nombre de couches de transmission ; la matrice de précodage **U** est composée d'au moins $Qxr$ vecteurs de base ayant une dimension de $N_t/Q$, où $Q \ge 2$, $r \ge 1$ et *Q* et *r* sont tous deux des entiers positifs ; les vecteurs de base sont des colonnes extraites d'une matrice **B** composée de M colonnes de vecteurs de dimension $N_t/Q$, où M est un entier positif ;
une union du premier type d'ensemble d'index **I** et du second type d'ensemble d'index *J* comprend des informations d'indication de livre de codes $i_1$, $i_2$ et $i_3$ ;

les informations d'indication de livre de codes $i_1$ sont utilisées pour représenter des informations de sélection des K matrices $W_{i_1 1} \ldots W_{i_1 k}$, où K est un entier positif, chaque colonne des K matrices $W_{i_1 1} \ldots W_{i_1 k}$ est extraite de vecteurs de colonnes compris dans la matrice **B** ; $i_3$ est utilisé pour représenter une matrice $W_{i_1 l}$ sélectionné parmi les K matrices ; $i_2$ est utilisé pour représenter des informations d'un ou plusieurs vecteurs de base extraits de la matrice $W_{i_1 l}$ et utilisé pour construire la matrice de précodage **U.**
dans lequel la matrice de précodage **U** correspond à un modèle :

$$\mathbf{U}=\begin{bmatrix} v_0 \\ \beta v_1 \end{bmatrix} \text{ ou } \mathbf{U}=\begin{bmatrix} v_0' \\ \alpha v_1' \\ \beta v_2' \\ \alpha\beta v_3' \end{bmatrix} \text{ ou } \mathbf{U}=\begin{bmatrix} v_0 & v_2 \\ \beta v_1 & -\beta v_3 \end{bmatrix} \text{ ou } \mathbf{U}=\begin{bmatrix} v_0' & v_4' \\ \alpha v_1' & \alpha v_5' \\ \beta v_2' & -\beta v_6' \\ \alpha\beta v_3' & -\alpha\beta v_7' \end{bmatrix},$$

où les vecteurs $v_0$, $v_1$, $v_2$ et $v_3$ sont des vecteurs ayant une dimension de $N_t/2\text{x}1$, les vecteurs $v_0'$, $v_1'$, $v_2'$,

$v_3'$, $v_4'$, $v_5'$, $v_6'$ et $v_7'$ sont des vecteurs ayant une dimension de $N_t/4$x1, $\alpha = e^{j\theta_1}$ et $\beta = e^{j\theta_2}$, où $0 \leq \theta_1 \leq 2\pi$, $0 \leq \theta_2 \leq 2\pi$.

**2.** Procédé selon la revendication 1, dans lequel le premier type d'ensemble d'index de livre de codes **I** comprend au moins des informations $i_1$ et $i_3$ ; et le second type d'ensemble d'index de livre de codes *J* comprend au moins des informations $i_2$ ; ou
le premier type d'ensemble d'index de livre de codes **I** comprend au moins des informations $i_1$ et $i_2$ ; et le second type d'ensemble d'index de livre de codes *J* comprend au moins des informations $i_3$ ; ou
le premier type d'ensemble d'index de livre de codes **I** comprend au moins des informations $i_1$ ; et le second type d'ensemble d'index de livre de codes *J* comprend au moins des informations $i_2$ et $i_3$.

**3.** Procédé selon la revendication 1, dans lequel les vecteurs de base composant la matrice de précodage **U** sont divisés en N1 groupes ; les informations d'indication de livre de codes $i_3$ comprennent N1 éléments de sous-informations $i_3(1) \cdots i_3(N1)$ $N1 \geq 2$ et est un entier positif ; où $i_3(x)$ est utilisé pour représenter des informations d'une matrice $W_{i_1 l_x}$ sélectionnée pour un *X* ème groupe de vecteurs parmi les K matrices $W_{i_1 1} \cdots W_{i_1 k}$ indiquées par $i_1$, où $2 \leq x \leq N1$.

**4.** Procédé selon la revendication 1, dans lequel les vecteurs de base composant la matrice de précodage **U** sont divisés en N2 groupes ; les informations d'indication de livre de codes $i_2$ comprennent N2 éléments de sous-informations $i_2(1) \cdots i_2(N2)$ $N2 \geq 2$ ; où $i_2(y)$ est utilisé pour représenter des informations d'un ou plusieurs vecteurs de base extraits d'une matrice $W_{i_1 l_y}$ conjointement indiquées par $i_1$ et $i_3$ et utilisé pour construire la matrice de précodage **U,** $2 \leq y \leq N2$.

**5.** Procédé selon la revendication 1, dans lequel, pour le modèle de livre de codes $\mathbf{U} = \begin{bmatrix} v_0' \\ \alpha v_1' \\ \beta v_2' \\ \alpha\beta v_3' \end{bmatrix}$ ou $\mathbf{U} = \begin{bmatrix} v_0' & v_4' \\ \alpha v_1' & \alpha v_5' \\ \beta v_2' & -\beta v_6' \\ \alpha\beta v_3' & -\alpha\beta v_7' \end{bmatrix}$, au moins l'une des informations d'indication de livre de codes $i_1$, $i_2$ et $i_3$ est en outre utilisée pour représenter une information $\alpha$ dans le modèle de livre de codes **U** ;
ou
au moins l'une des informations d'indication de livre de codes $i_1$, $i_2$ et $i_3$ est en outre utilisée pour représenter une information $\beta$ dans le modèle de livre de codes U.

**6.** Procédé selon la revendication 1 ou 3, dans lequel, pour le modèle $\mathbf{U} = \begin{bmatrix} v_0 & v_2 \\ \beta v_1 & -\beta v_3 \end{bmatrix}$, les informations d'indication de livre de codes $i_3$ comprennent deux éléments de sous-informations $i_3(1)$ et $i_3(2)$ ;
dans lequel $i_3(1)$ est utilisé pour représenter des informations d'une matrice $W_{i_1 i_3(1)}$ d'où sont extraits des vecteurs $v_0$ et $v_2$ ; et $i_3(2)$ est utilisé pour représenter des informations d'une matrice $W_{i1i3(2)}$ d'où sont extraits des vecteurs $v_1$ et $v_3$ ; ou
$i_3(1)$ est utilisé pour représenter des informations d'une matrice $W_{i1i3(1)}$ d'où sont extraits des vecteurs $v_0$ et $v_1$ ; et $i_3(2)$ est utilisé pour représenter des informations d'une matrice $W_{i1i3(2)}$ d'où sont extraits des vecteurs $v_2$ et $v_3$ ;
ou

pour le modèle $\mathbf{U} = \begin{bmatrix} v_0' \\ \alpha v_1' \\ \beta v_2' \\ \alpha\beta v_3' \end{bmatrix}$, les informations d'indication de livre de codes $i_3$ comprennent deux éléments de sous-informations $i_3(1)$ et $i_3(2)$ ;
dans lequel $i_3(1)$ est utilisé pour représenter des informations d'une matrice $W_{i1i3(1)}$ d'où sont extraits des vecteurs

$v'_0$ et $v'_1$ ; et $i_3(2)$ est utilisé pour représenter des informations d'une matrice $W_{i1i3(1)}$ d'où sont extraits des vecteurs $v'_2$ et $v'_3$ ; ou

$i_3(1)$ est utilisé pour représenter des informations d'une matrice $W_{i1i3(1)}$ d'où sont extraits des vecteurs $v'_0$ et $v'_2$ ; et $i_3(2)$ est utilisé pour représenter des informations d'une matrice $W_{i1i3(2)}$ d'où sont extraits des vecteurs $v'_1$ et $v'_3$ ; ou

pour le modèle $\mathbf{U} = \begin{bmatrix} v'_0 & v'_4 \\ \alpha v'_1 & \alpha v'_5 \\ \beta v'_2 & -\beta v'_6 \\ \alpha\beta v'_3 & -\alpha\beta v'_7 \end{bmatrix},$ les informations d'indication de livre de codes $i_3$ comprennent quatre éléments de sous-informations $i_3(1)$, $i_3(2)$, $i_3(3)$ et $i_3(4)$, dans lequel $i_3(1)$ est utilisé pour représenter des informations d'une matrice $W_{i_1i_3(1)}$ d'où sont extraits des vecteurs $v'_0$ et $v'_4$ ; $i_3(2)$ est utilisé pour représenter des informations d'une matrice $W_{i1i3(2)}$ d'où sont extraits des vecteurs $v'_1$ et $v'_5$ ; $i_3(3)$ est utilisé pour représenter des informations d'une matrice $W_{i_1i_3(3)}$ d'où sont extraits des vecteurs $v'_2$ et $v'_6$ ; $i_3(4)$ est utilisé pour représenter des informations d'une matrice $W_{i_1i_3(4)}$ d'où sont extraits des vecteurs $v'_3$ et $v'_7$.

**7.** Procédé selon la revendication 1 ou 4, dans lequel, pour le modèle $\mathbf{U} = \begin{bmatrix} v'_0 \\ \alpha v'_1 \\ \beta v'_2 \\ \alpha\beta v'_3 \end{bmatrix},$ les informations d'indication de livre de codes $i_2$ comprennent deux éléments de sous-informations $i_2(1)$ et $i_2(2)$ ;
dans lequel $i_2(1)$ est utilisé pour représenter des informations d'un vecteur de base extrait de la matrice

$$W_{i_1 l}$$

pour des vecteurs $v'_0$ et $v'_1$ ; $i_2(2)$ est utilisé pour représenter des informations d'un vecteur de base extrait de la matrice $W_{i_1 l'}$ pour des vecteurs $v'_1$ et $v'_3$ ; ou

$i_2(1)$ est utilisé pour représenter des informations d'un vecteur de base extrait de la matrice $W_{i_1 l}$ pour des vecteurs $v'_0$ et $v'_2$ ; $i_2(2)$ est utilisé pour représenter des informations d'un vecteur de base extrait de la matrice $W_{i_1 l'}$ pour des vecteurs $v'_1$ et $v'_3$ ;
ou

pour le modèle $\mathbf{U} = \begin{bmatrix} v_0 & v_2 \\ \beta v_1 & -\beta v_3 \end{bmatrix},$ les informations d'indication de livre de codes $i_2$ comprennent deux éléments de sous-informations $i_2(1)$ et $i_2(2)$ ;

dans lequel $i_2(1)$ est utilisé pour représenter des informations d'un vecteur de base extrait de la matrice $W_{i_1 l}$ pour des vecteurs $v_0$ et $v_2$ ; $i_2(2)$ est utilisé pour représenter des informations d'un vecteur de base extrait de la matrice

$W_{i_1 l'}$ pour des vecteurs $v_1$ et $v_3$ ; ou

$i_2(1)$ est utilisé pour représenter des informations d'un vecteur de base extrait de la matrice $W_{i_1 l}$ pour des vecteurs $v_0$ et $v_1$ ; $i_2(2)$ est utilisé pour représenter des informations d'un vecteur de base extrait de la matrice $W_{i_1 l'}$ pour des vecteurs $v_2$ et $v_3$ ;
ou

pour le modèle $$\mathbf{U} = \begin{bmatrix} v'_0 & v'_4 \\ \alpha v'_1 & \alpha v'_5 \\ \beta v'_2 & -\beta v'_6 \\ \alpha\beta v'_3 & -\alpha\beta v'_7 \end{bmatrix},$$ les informations d'indication de livre de codes $i_2$ comprennent quatre éléments de sous-informations $i_2(1)$, $i_2(2)$, $i_2(3)$ et $i_2(4)$ ;

dans lequel $i_2(1)$ est utilisé pour représenter des informations d'un vecteur de base extrait de la matrice $W_{i_1 l}$ pour des vecteurs $v'_0$ et $v'_4$ ; $i_2(2)$ est utilisé pour représenter des informations d'un vecteur de base extrait de la matrice $W_{i1l'}$ pour des vecteurs $v'_1$ et $v'_5$ ; $i_2(3)$ est utilisé pour représenter des informations d'un vecteur de base extrait de la matrice $W_{i_1 l''}$ pour des vecteurs $v'_2$ et $v'_6$ ; et $i_2(4)$ est utilisé pour représenter des informations d'un vecteur de base extrait de la matrice $W_{i_1 l'''}$ pour des vecteurs $v'_3$ et $v'_7$ ;
ou

pour le modèle $$\mathbf{U} = \begin{bmatrix} v'_0 & v'_4 \\ \alpha v'_1 & \alpha v'_5 \\ \beta v'_2 & -\beta v'_6 \\ \alpha\beta v'_3 & -\alpha\beta v'_7 \end{bmatrix},$$ les informations d'indication de livre de codes $i_2$ comprennent quatre éléments de sous-informations $i_2(1)$, $i_2(2)$, $i_2(3)$ et $i_2(4)$ ;

dans lequel $i_2(1)$ est utilisé pour représenter des informations d'un vecteur de base extrait de la matrice $W_{i_1 l}$ pour des vecteurs $v'_0$ et $v'_1$ ; $i_2(2)$ est utilisé pour représenter des informations d'un vecteur de base extrait de la matrice $W_{i_1 l'}$ pour des vecteurs $v'_2$ et $v'_3$ ; $i_2(3)$ est utilisé pour représenter des informations d'un vecteur de base extrait de la matrice $W_{i_1 l''}$ pour des vecteurs $v'_4$ et $v'_5$ ; et $i_2(4)$ est utilisé pour représenter des informations d'un vecteur de base extrait de la matrice $W_{i_1 l'''}$ pour des vecteurs $v'_6$ et $v'_7$ ; ou

$i_2(1)$ est utilisé pour représenter des informations d'un vecteur de base extrait de la matrice $W_{i_1 l}$ pour des vecteurs $v'_0$ et $v'_2$ ; $i_2(2)$ est utilisé pour représenter des informations d'un vecteur de base extrait de la matrice $W_{i_1 l'}$ pour des vecteurs $v'_1$ et $v'_3$ ; $i_2(3)$ est utilisé pour représenter des informations d'un vecteur de base extrait de la matrice $W_{i_1 l''}$ pour des vecteurs $v'_4$ et $v'_6$ ; et $i_2(4)$ est utilisé pour représenter des informations d'un vecteur de base extrait de la matrice $W_{i_1 l'''}$ pour des vecteurs $v'_5$ et $v'_7$.

**8.** Procédé selon la revendication 3, dans lequel $i_3(1) \cdots i_3(N1)$ ont une relation linéaire ; lorsque les CSI sont signalées, l'UE rapporte au moins une information d'indication de livre de codes dans $i_3(1) \cdots i_3(N1)$.

**9.** Procédé selon la revendication 4, dans lequel $i_2(1) \cdots i_2(N2)$ ont une relation linéaire ; lorsque les CSI sont signalées, l'UE rapporte au moins une information d'indication de livre de codes dans $i_2(1) \cdots i_2(N2)$.

**10.** Procédé selon la revendication 6 ou 8, dans lequel, pour le modèle $\mathbf{U} = \begin{bmatrix} v_0 & v_2 \\ \beta v_1 & -\beta v_3 \end{bmatrix}$ ou $\mathbf{U} = \begin{bmatrix} v'_0 \\ \alpha v'_1 \\ \beta v'_2 \\ \alpha\beta v'_3 \end{bmatrix}$, $i_3(1) = i_3(2)$ ;
ou

pour le modèle $\mathbf{U} = \begin{bmatrix} v'_0 & v'_4 \\ \alpha v'_1 & \alpha v'_5 \\ \beta v'_2 & -\beta v'_6 \\ \alpha\beta v'_3 & -\alpha\beta v'_7 \end{bmatrix}$ $i_3(1) = i_3(2) = i_3(3) = i_3(4)$.

**11.** Procédé selon la revendication 7 ou 9, dans lequel, pour le modèle $\mathbf{U} = \begin{bmatrix} v'_0 \\ \alpha v'_1 \\ \beta v'_2 \\ \alpha\beta v'_3 \end{bmatrix}$ ou $\mathbf{U} = \begin{bmatrix} v_0 & v_2 \\ \beta v_1 & -\beta v_3 \end{bmatrix}$, $i_2(1) = i_2(2)$ ;
ou

pour le modèle $\mathbf{U} = \begin{bmatrix} v'_0 & v'_4 \\ \alpha v'_1 & \alpha v'_5 \\ \beta v'_2 & -\beta v'_6 \\ \alpha\beta v'_3 & -\alpha\beta v'_7 \end{bmatrix}$, $i_2(1) = i_2(2) = i_2(3) = i_2(4)$.

**12.** Procédé selon la revendication 1, dans lequel M colonnes de vecteurs composant la matrice **B** sont des vecteurs à transformée de Fourier discrète, DFT.

**13.** Dispositif de renvoi d'informations d'état de canal, CSI, dans un système à entrées multiples et sorties multiples comprenant :

un premier module d'obtention (201), configuré pour obtenir des informations d'index de livre de codes ; et
un premier module d'envoi (202), configuré pour renvoyer les CSI comprenant les informations d'index de livre de codes à un nœud B évolué, eNodeB, dans lequel
les informations d'index de livre de codes comprennent : un premier type d'ensemble d'index de livre de codes **I** et un second type d'ensemble d'index de livre de codes *J* ; une combinaison du premier type d'ensemble d'index **I** et du second type d'ensemble d'index *J* est utilisée pour indiquer une matrice de précodage **U** et la matrice de précodage **U** est une matrice $N_t$xr, où $N_t$ représente un nombre total de ports ou un nombre total d'antennes et *r* représente un nombre de couches de transmission ; la matrice de précodage **U** est composée d'au moins Qxr vecteurs de base ayant une dimension de $N_t/Q$, où $Q \geq 2$, $r \geq 1$ et *Q* et *r* sont tous deux des entiers positifs ; les vecteurs de base sont des colonnes extraites d'une matrice **B** composée de M colonnes de vecteurs de dimension $N_t/Q$, où M est un entier positif ;
une union du premier type d'ensemble d'index **I** et du second type d'ensemble d'index *J* comprend au moins des informations d'indication de livre de codes $i_1$, $i_2$ et $i_3$ ;
les informations d'indication de livre de codes $i_1$ sont utilisées pour représenter des informations de sélection de K matrices $W_{i_1 l} \ldots W_{i_1 k}$, où K est un entier positif, chaque colonne des K matrices $W_{i_1 l} \ldots W_{i_1 k}$ est extraite de vecteurs de colonnes compris dans la matrice **B** ; $i_3$ est utilisé pour représenter une matrice $W_{i_1 l}$ sélectionné parmi les K matrices ; $i_2$ est utilisé pour représenter des informations d'un ou plusieurs vecteurs de base extraits de la matrice $W_{i_1 l}$ et utilisé pour construire la matrice de précodage **U** ;
dans lequel la matrice de précodage **U** correspond à un modèle :

$$\mathbf{U}=\begin{bmatrix} v_0 \\ \beta v_1 \end{bmatrix} \text{ ou } \mathbf{U}=\begin{bmatrix} v_0^{'} \\ \alpha v_1^{'} \\ \beta v_2^{'} \\ \alpha\beta v_3^{'} \end{bmatrix} \text{ ou } \mathbf{U}=\begin{bmatrix} v_0 & v_2 \\ \beta v_1 & -\beta v_3 \end{bmatrix} \text{ ou } \mathbf{U}=\begin{bmatrix} v_0^{'} & v_4^{'} \\ \alpha v_1^{'} & \alpha v_5^{'} \\ \beta v_2^{'} & -\beta v_6^{'} \\ \alpha\beta v_3^{'} & -\alpha\beta v_7^{'} \end{bmatrix},$$

où les vecteurs $v_0$, $v_1$, $v_2$ et $v_3$ sont des vecteurs ayant une dimension de $N_t/2x1$, les vecteurs $v_0'$, $v_1'$, $v_2'$, $v_3'$, $v_4'$, $v_5'$, $v_6'$ et $v_7'$ sont des vecteurs ayant une dimension de $N_t/4x1$, $\alpha = e^{j\theta_1}$ et $\beta = e^{j\theta_2}$, où $0 \leq \theta_1 \leq 2\pi$, $0 \leq \theta_2 \leq 2\pi$.

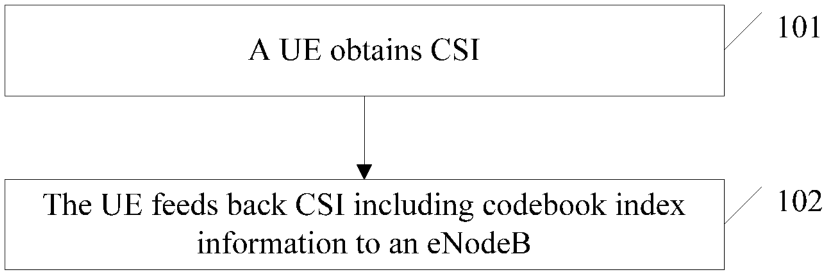


Fig. 1

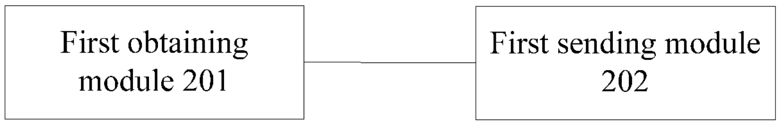


Fig. 2

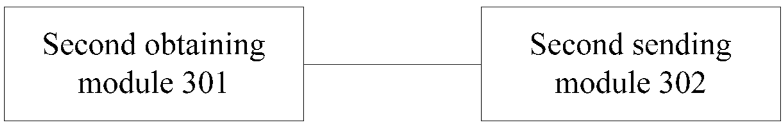


Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2014177744 A1
- EP 2665203 A